(19) Europäisches Patentamt
European Patent Office
Office européen des brevets

(11) EP 1 701 180 B1

(12) **EUROPEAN PATENT SPECIFICATION**

(45) Date of publication and mention of the grant of the patent:
**18.04.2012 Bulletin 2012/16**

(21) Application number: **04807000.7**

(22) Date of filing: **14.12.2004**

(51) Int Cl.:
***G02B 1/11*** *(2006.01)* ***B32B 17/10*** *(2006.01)*

(86) International application number:
**PCT/JP2004/018639**

(87) International publication number:
**WO 2005/059601 (30.06.2005 Gazette 2005/26)**

(54) **Process for preparing : ANTIREFLECTION FILM, ELECTROMAGNETIC WAVE SHIELDING LIGHT TRANSMITTING WINDOW MATERIAL, GAS DISCHARGE TYPE LIGHT EMITTING PANEL, FLAT DISPLAY PANEL, SHOW WINDOW MATERIAL AND SOLAR CELL MODULE**

Verfahren zur Herstellung von:ANTIREFLEXFILM, ELEKTROMAGNETISCHE WELLEN ABSCHIRMENDES LICHTDURCHLÄSSIGES FENSTERMATERIAL, LICHTEMISSIONSTAFEL DES GASENTLADUNGSTYPS, FLACHANZEIGETAFEL, SCHAUFENSTERMATERIAL UND SOLARZELLENMODUL

Procédé de fabrication de: FILM ANTIREFLET, MATERIAU POUR VITRE A TRANSMISSION DE LUMIERE ET PROTECTION CONTRE LES ONDES ELECTOMAGNETIQUES, PANNEAU ELECTROLUMINESCENT A DECHARGE GAZEUSE, ECRAN PLAT, MATERIAU POUR VITRINE ET MODULE SOLAIRE

(84) Designated Contracting States:
**DE FR GB**

(30) Priority: **17.12.2003 JP 2003419932**
**17.12.2003 JP 2003419933**
**17.12.2003 JP 2003419934**
**17.12.2003 JP 2003419935**
**17.12.2003 JP 2003419936**
**17.12.2003 JP 2003419937**

(43) Date of publication of application:
**13.09.2006 Bulletin 2006/37**

(73) Proprietor: **Bridgestone Corporation**
**Tokyo 104-8340 (JP)**

(72) Inventors:
- **Yoshikawa, M.,**
**Techn. Center, Bridgestone Corp.**
**Tokyo 1870031 (JP)**
- **Nishida, M.,**
**Techn. Center, Bridgestone Corp.**
**Tokyo 1870031 (JP)**

(74) Representative: **Whalley, Kevin**
**Marks & Clerk LLP**
**90 Long Acre**
**London WC2E 9RA (GB)**

(56) References cited:
**WO-A2-03/093878**
**JP-A- 5 142 401**
**JP-A- 2002 082 205**
**JP-A- 2003 057 402**
**JP-A- 2003 139 906**
**JP-A- 2003 197 937**
**JP-A- 2003 202 406**
**JP-A- 2003 222 703**
**JP-A- 2003 222 703**
**JP-A- 2003 261 797**
**JP-A- 2003 292 831**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 701 180 B1

## Description

Field of the Invention

I. A first aspect relates to a process for preparing a coating type antireflection film suitable for various displays, e.g., word processors, computers, CRTs, plasma televisions, liquid crystal displays, and organic EL; window panes of automobiles, buildings, and electric cars; picture frame glass; and the like.

IV. A second aspect relates to a process for preparing an electromagnetic wave shielding light transmitting window material and a gas discharge type light emitting panel. In particular, it relates to a process for preparing an electromagnetic wave shielding light transmitting window material and a gas discharge type light emitting panel in which a coating type antireflection layer exhibiting excellent antireflection performance is disposed on an outermost surface.

V. A third aspect relates to a process for preparing a flat display panel and a show window material. In particular, it relates to a process for preparing a flat display panel and a show window material in which a coating type antireflection layer exhibiting excellent antireflection performance is disposed on a surface.

VI. A fourth aspect relates to a process for preparing a solar cell module. In particular, it relates to a process for preparing a solar cell module exhibiting a low external light reflectance and, therefore, a high ratio of sunlight incidence, so that excellent power generation efficiency is exhibited.

Background of the Invention

I. Antireflection films have been applied to various displays, e.g., word processors, computers, CRTs, plasma televisions, liquid crystal displays, and organic EL; window panes of automobiles, buildings, and electric cars; picture frame glass; and the like in order to prevent reflection of light and ensure a high light transmitting property.

Previously, an antireflection film, in which a high refractive index layer and a low refractive index layer are disposed on a surface of a transparent base film, has been provided as the antireflection film to be used for this type of application. In this antireflection film, the antireflection function is attained by taking advantage of a difference in refractive index between the high refractive index layer and the low refractive index layer.

Many antireflection films have been previously provided by a dry film formation method in which a low refractive index layer of $SiO_2$, $MgF_2$, or the like and a high refractive index layer of $TiO_2$, ITO, or the like have been laminated through evaporation or sputtering. However, since the film formation by the dry method takes much time, the cost becomes very high.

On the other hand, a film formation method by using a wet method, e.g., a micro gravure coating method, can produce an antireflection film at a low cost. A coating type antireflection film, in which a hard coat layer 2, a high refractive index layer 3, and a low refractive index layer 4 are laminated sequentially from a bottom layer side on a surface of a transparent base film 1 formed from a synthetic resin, as shown in Fig. 1, is used primarily. Alternatively, in some antireflection film, an electrically conductive high refractive index hard coat layer serving as both the high refractive index layer and the hard coat layer is disposed on a base film, and a low refractive index layer is disposed thereon.

However, it is difficult by the wet method to decrease the refractive index of a low refractive index component and increase the refractive index of a high refractive index component. Therefore, it is difficult to attain good antireflection performance. In particular, it is very difficult to decrease the refractive index of a low refractive index layer, and various researches have been made to decrease the refractive index of a low refractive index layer.

In general, fluororesins, in which fluorine atoms have substituted for a part of hydrogen atoms of alkyl groups, are used as low refractive index materials for coating type antireflection films in many cases (for example, Japanese Unexamined Patent Application Publication No. 9-203801).

Although the refractive index of a low refractive index layer including a fluororesin is low, the length of a fluorine-substituted alkyl chain of the fluororesin must be increased in order to lower the refractive index. Consequently, another problem occurs in that when the length of the alkyl chain is increased, the film strength of the resulting low refractive index layer is reduced. For example, when a low refractive index layer formed from a known fluororesin is rubbed with a plastic eraser, peeling of the layer occurs very easily. For a low refractive index layer including the fluororesin disclosed in Japanese Unexamined Patent Application Publication No. 9-203801 as well, according to the experiment carried out by the inventors of the present invention, when rubbing with a plastic eraser was conducted while a standard pressure of abrasion resistance ($4.9 \times 10^4$ N/m$^2$) was applied, the layer was broken after about 10 times of rubbing.

Coating type low refractive index layers formed by compressing fine particles having a particle diameter of 1 to 100 nm and a low refractive index (n) with a binder have also been proposed. Among them, a product formed by compressing silica fine particles (n = 1.47) with an acrylic binder has high film strength. However, since the refractive index of the silica fine particles is about 1.47 and, therefore, is relatively high, the refractive index of the resulting low refractive index layer cannot be decreased to 1.49 or lower by using a common binder.

For a product formed by compressing $MgF_2$ fine particles (n = 1.38) with an acrylic binder, although the refractive

index of a low refractive index layer is decreased to some extent (n = 1.46), the film strength is significantly deteriorated because the affinity between $MgF_2$ and the acrylic binder is poor.

Consequently, it has been proposed to improve the film strength and decrease the refractive index by using hollow silica fine particles (hollow silica) as low refractive index fine particles exhibiting good affinity for the binder and, in addition, using a fluorine-substituted alkyl containing silicone component as a binder (Japanese Unexamined Patent Application Publication No. 2003-202406 and Japanese Unexamined Patent Application Publication No. 2003-202960).

However, a base film usually used in the antireflection film is a polyethylene terephthalate (PET) film or a triacetyl cellulose film, and the PET film cannot be subjected to heating at 130°C or more from the viewpoint of the heat resistance. In the film formation method by using the wet method, if a silicone component unsuitable for a baking treatment and the like through heating is used as a binder, the chemical resistance and the abrasion resistance become very poor, as shown in the comparative experimental examples described below. In particular, when the film was immersed in an alkaline aqueous solution (3 percent by weight NaOH) for about 30 minutes, the silicone component underwent alkaline hydrolysis, and there was a tendency of the film to be dissolved easily. Therefore, for the system in which a binder containing the silicone component is used and mixed with hollow silica, when a low refractive index layer serving as an outermost surface layer of the antireflection film is strongly wiped with an alkaline detergent or the like, the antireflection function becomes lost due to dissolution of the low refractive index layer.

On the other hand, it has also been proposed that a polyfunctional acrylic resin of difunctional or more is used as a binder, and film formation of a low refractive index layer containing porous silica fine particles is conducted by the wet method (Japanese Unexamined Patent Application Publication No. 2003-261797, Japanese Unexamined Patent Application Publication No. 2003-262703, and Japanese Unexamined Patent Application Publication No. 2003-266602).

However, according to the research of the inventors of the present invention, the film formed by mixing the acrylic resin of difunctional or more with the porous silica fine particles exhibited very poor film strength, and even when the acrylic resin of difunctional or more was simply mixed with the porous silica fine particles, a low refractive index layer exhibiting abrasion resistance was not able to be produced. In these patent documents, the low refractive index layers are disposed directly on the base material surfaces. However, the above-described products, in which the low refractive index layers are disposed directly on the base materials, cannot exhibit excellent antireflection performance, e.g., minimum reflectance, indispensable for the antireflection film. Furthermore, in these patent documents, porous silica fine particles are used rather than the hollow silica. However, the porous silica can not satisfactorily lower the refractive index of silica fine particles. Consequently, the refractive index of the low refractive index layer does not become a satisfactorily low value.

For the low refractive index layer serving as an uppermost layer of the antireflection film, not only the low refractive index property, but also the durability, e.g., the abrasion resistance and the chemical resistance, is very important. However, as described above, a coating type antireflection film, which exhibits excellent film performance, e.g., the abrasion resistance and the chemical resistance, and which includes a low refractive index layer exhibiting a low refractive index, has not been provided previously.

II. Antireflection films have been applied to display surfaces of various displays, e.g., word processors, computers, CRTs, plasma televisions, liquid crystal displays, and organic EL, and the like in order to prevent reflection of light and ensure high light transmitting property.

Previously, an antireflection film, in which a high refractive index layer and a low refractive index layer are disposed on a surface of a transparent base film, has been provided as the antireflection film to be used for this type of application. In this antireflection film, the antireflection function is attained by taking advantage of a difference in refractive index between the high refractive index layer and the low refractive index layer.

Many antireflection films have been previously provided by a dry film formation method in which a low refractive index layer of $SiO_2$, $MgF_2$, or the like and a high refractive index layer of $TiO_2$, ITO, or the like have been laminated through evaporation or sputtering. However, since the film formation by the dry method takes much time, the cost becomes very high.

On the other hand, a film formation method by using a wet method, e.g., a micro gravure coating method, can produce an antireflection film at a low cost.

However, it is difficult by the wet method to decrease the refractive index of a low refractive index component and increase the refractive index of a high refractive index component. Therefore, it is difficult to attain good antireflection performance. In particular, it is very difficult to decrease the refractive index of a low refractive index layer, and various researches have been made to decrease the refractive index of a low refractive index layer.

In general, fluororesins, in which fluorine atoms have substituted for a part of hydrogen atoms of alkyl groups, are used as low refractive index layer materials for coating type antireflection films in many cases (for example, Japanese Unexamined Patent Application Publication No. 9-203801) .

Although the refractive index of a low refractive index layer including a fluororesin is low, the length of a fluorine-substituted alkyl chain of the fluororesin must be increased in order to lower the refractive index. Consequently, another problem occurs in that when the length of the alkyl chain is increased, the film strength of the resulting low refractive

index layer is reduced. For example, when a low refractive index layer formed from a known fluororesin is rubbed with a plastic eraser, peeling of the layer occurs very easily. For a low refractive index layer including the fluororesin disclosed in Japanese Unexamined Patent Application Publication No. 9-203801 as well, according to the experiment carried out by the inventors of the present invention, when rubbing with a plastic eraser was conducted while a standard pressure of abrasion resistance ($4.9 \times 10^4$ N/$m^2$) was applied, the layer was broken after about 10 times of rubbing.

Coating type low refractive index layers formed by compressing fine particles having a particle diameter of 1 to 100 nm and a low refractive index (n) with a binder have also been proposed. Among them, a product formed by compressing silica fine particles (n = 1.47) with an acrylic binder has high film strength. However, since the refractive index of the silica fine particles is about 1.47 and, therefore, is relatively high, the refractive index of the resulting low refractive index layer cannot be decreased to 1.49 or lower by using a common binder.

For a product formed by compressing $MgF_2$ fine particles (n = 1.38) with an acrylic binder, although the refractive index of a low refractive index layer is decreased to some extent (n = 1.46), the film strength is significantly deteriorated because the affinity between $MgF_2$ and the acrylic binder is poor.

Consequently, it has been proposed to improve the film strength and decrease the refractive index by using hollow silica fine particles (hollow silica) as low refractive index fine particles exhibiting good affinity for the binder and, in addition, using a fluorine-substituted alkyl containing silicone component as a binder (Japanese Unexamined Patent Application Publication No. 2003-202406 and Japanese Unexamined Patent Application Publication No. 2003-202960).

However, a base film usually used in the antireflection film is a polyethylene terephthalate (PET) film or a triacetyl cellulose (TAC) film, and the PET film cannot be subjected to heating at 130°C or more from the viewpoint of the heat resistance. In the film formation method by using the wet method, if a silicone component unsuitable for a baking treatment and the like through heating is used as a binder, the chemical resistance and the abrasion resistance become very poor. In particular, when the film was immersed in an alkaline aqueous solution (3 percent by weight NaOH) for about 30 minutes, the silicone component underwent alkaline hydrolysis, and there was a tendency of the film to be dissolved easily. Therefore, for the system in which a binder containing the silicone component is used and mixed with hollow silica, when a low refractive index layer serving as an outermost surface layer of the antireflection film is strongly wiped with an alkaline detergent or the like, the antireflection function becomes lost due to dissolution of the low refractive index layer.

On the other hand, it has also been proposed that a polyfunctional acrylic resin of difunctional or more is used as a binder, and film formation of a low refractive index layer containing porous silica fine particles is conducted by the wet method (Japanese Unexamined Patent Application Publication No. 2003-261797, Japanese Unexamined Patent Application Publication No. 2003-262703, and Japanese Unexamined Patent Application Publication No. 2003-266602).

However, according to the research of the inventors of the present invention, the film formed by mixing the acrylic resin of difunctional or more with the porous silica fine particles exhibited very poor film strength, and even when the acrylic resin of difunctional or more was simply mixed with the hollow silica fine particles, a low refractive index layer exhibiting abrasion resistance was not able to be produced. In these patent documents, the low refractive index layers are disposed directly on the base material surfaces. However, the above-described products, in which the low refractive index layers are disposed directly on the base materials, cannot exhibit excellent antireflection performance, e.g., minimum reflectance, indispensable for the antireflection film. Furthermore, in these patent documents, porous silica fine particles are used rather than the hollow silica. However, the porous silica can not satisfactorily lower the refractive index of silica fine particles. Consequently, the refractive index of the low refractive index layer does not become a satisfactorily low value.

Among antireflection films, particularly for antireflection films to be used for plasma displays and CRTs, it is further required that the reflectance on the shorter wavelength side (400 to 450 nm) is low, blue emission light is satisfactorily transmitted, the transmittance on the shorter wavelength side is high, and the transmitted color does not take on a yellow tinge.

Known configurations of generally used antireflection films are as described below, and reflection spectra thereof are as shown in Fig. 3.

Configuration 1: low refractive index layer (n = 1.45)/high refractive index hard coat layer (n = 1.71)/PET film

Configuration 2: low refractive index layer (n = 1.45)/high refractive index hard coat layer (n = 1.68)/TAC film

In the above-described Configurations 1 and 2, the film thicknesses of the high refractive index layer and the low refractive index layer are 1/4 wavelength (1/4λ) in terms of optical film thickness. The antireflection performance of Configuration 1 is unsatisfactory. At this time, for Configuration 2, the minimum reflectance at a wavelength of 550 nm is about 0.4% and, therefore, is low. However, the reflectance at a wavelength in the neighborhood of 450 nm is about 4.5% and, therefore, is high. Since the reflectance on the shorter wavelength side is high as described above, this Configuration 2 can not satisfactorily transmit the blue emission light. If the transmittance on the shorter wavelength side is low, the transmitted light passed through this film takes on a yellow tinge. Therefore, for example, white light emitted from a display takes on a yellow tinge.

In order to decrease the reflectance on the shorter wavelength side without changing the configuration of the above-described Configuration 2, there is a method in which the film thickness of the high refractive index layer is increased to some degree and the film thickness of the low refractive index layer is decreased to some degree in Configuration 2 (Configuration 3).

That is, in Configuration 1, the coating is conducted in such a way that the film thicknesses of the high refractive index layer and the low refractive index layer become about 1/4λ in terms of optical film thickness, whereas, in Configuration 3, the film thickness of the high refractive index layer is specified to be 0.32λ, and the film thickness of the low refractive index layer is specified to be 0.22λ. Fig. 4 gives a comparison of the reflection spectrum of this Configuration 3 with the reflection spectrum of Configuration 1.

As described above, when the thickness of the high refractive index layer is increased, the reflectance on the shorter wavelength side is decreased, although the reflectance at a wavelength of 400 nm is a still high 3.5%. Furthermore, the minimum reflectance is also increased slightly. Consequently, there is a problem in that the luminous reflectance is increased, although the reflectance on the shorter wavelength side is decreased. The reflectance on the shorter wavelength side is decreased, but it is a still high 3.5%. Therefore, development of an antireflection film exhibiting satisfactorily low minimum reflectance and luminous reflectance has been required.

The applicant of the present invention have previously proposed a light absorption type antireflection film in which a hard coat layer, a transparent electrically conductive layer, a light absorption layer, and a low refractive index layer are laminated in that order on a transparent base film (Japanese Patent Application No. 2002-318349) and an antireflection film in which a hard coat layer, an electrically conductive light absorption layer, and a low refractive index layer are laminated in that order on a transparent base film.

For example, Fig. 5 shows a reflection spectrum of a light absorption type antireflection film (Configuration 4) in which a hard coat layer, a transparent electrically conductive layer, a light absorption layer, and a low refractive index layer are laminated in that order on a transparent base film, the film thickness of the hard coat layer is specified to be 5 to 10 μm, the film thickness of the transparent electrically conductive layer is specified to be 0.35λ, the film thickness of the light absorption layer (carbon black/titanium black/acrylic resin, n = 1.63, k = 0.35) is specified to be 0.15λ, and the film thickness of the low refractive index layer (silica fine particles/acrylic fine particles, n = 1.495) is specified to be 0.175λ.

A light absorption type antireflection film having a special configuration, in which the transparent electrically conductive layer, the light absorption layer, and the low refractive index layer are disposed on the hard coat layer, as shown in Fig. 5, has been provided and, thereby, a special antireflection film exhibiting very low reflectance on the shorter wavelength side has been realized.

For the low refractive index layer serving as an uppermost layer of the antireflection film, not only the low refractive index property, but also the durability, e.g., the abrasion resistance and the chemical resistance, is very important. However, as described above, a coating type antireflection film, which exhibits excellent film performance, e.g., the abrasion resistance and the chemical resistance, and which is provided with a low refractive index layer exhibiting a low refractive index has not been provided previously.

Therefore, a coating type antireflection film, in which a low refractive index layer exhibiting a low refractive index can be formed on a transparent resin film without deteriorating the transparent resin film, which can be produced continuously, and which exhibits excellent abrasion resistance, chemical resistance, and the like, has been desired.

On the other hand, a good effect has been attained by adopting the above-described Configuration 4 in the antireflection film to be used for plasma displays and CRTs required to exhibit a low reflectance and a low transmittance on the shorter wavelength side. However, even this Configuration 4 has a further problem to be overcome.

In the common antireflection film (Configuration 1) including no light absorption layer, even when the low

refractive index layer has a linear flaw, since the transmittance is hardly varied, the presence of a small flaw is inconspicuous. However, for the light absorption type antireflection film having this Configuration 4, even when the low refractive index layer is damaged slightly, even the light absorption layer is peeled, and the transmittance of the portion where the light absorption layer has been peeled becomes very high. Consequently, the flaw becomes significantly conspicuous. Therefore, the antireflection film including this light absorption layer is required that the abrasion resistance of the low refractive index layer is significantly high.

However, in the case where the film strength of the low refractive index layer is increased, the reflectance of the low refractive index layer becomes a very high n = about 1.49 and, therefore, the reflectance cannot be decreased satisfactorily. For the above-described Configuration 4, if the reflectance of the low refractive index layer is high, the thickness of the light absorption layer must be increased in order to attain the minimum reflectance of 0.5% or less. Consequently, a problem occurs in that the transmittance is decreased to a low 70% or less when the thickness of the light absorption layer is increased.

III. An antireflection film is applied to various displays, e.g., word processors, computers, CRTs, plasma televisions, liquid crystal displays, and organic EL; window panes of automobiles, buildings, and electric cars; picture frame glass; and the like in order to prevent reflection of light and ensure high light transmitting property.

Previously, an antireflection film, in which a high refractive index layer and a low refractive index layer are disposed on a surface of a transparent base film, has been provided as the antireflection film to be used for this type of application. In this antireflection film, the antireflection function is attained by taking advantage of a difference in refractive index between the high refractive index layer and the low refractive index layer.

Many antireflection films have been previously provided by a dry film formation method in which a low refractive index layer of $SiO_2$, $MgF_2$, or the like and a high refractive index layer of $TiO_2$, ITO, or the like have been laminated through evaporation or sputtering. However, since the film formation by the dry method takes much time, the cost becomes very high.

On the other hand, a film formation method by using a wet method, e.g., a micro gravure coating method, can produce an antireflection film at a low cost. A coating type antireflection film, in which a hard coat layer 23, a high refractive index layer 24, and a low refractive index layer 25 are laminated sequentially from a bottom layer side on a surface of a transparent base film 21 formed from a synthetic resin, as shown in Fig. 21, is used primarily. Alternatively, in some antireflection film, an electrically conductive high refractive index hard coat layer serving as both the high refractive index layer and the hard coat layer is disposed on a base film, and a low refractive index layer is disposed thereon.

However, it is difficult by the wet method to decrease the refractive index of a low refractive index component and increase the refractive index of a high refractive index component. Therefore, it is difficult to attain good antireflection performance. In particular, it is very difficult to decrease the refractive index of a low refractive index layer, and various researches have been made to decrease the refractive index of a low refractive index layer.

In general, fluororesins, in which fluorine atoms have substituted for a part of hydrogen atoms of alkyl groups, are used as low refractive index layer materials for coating type antireflection films in many cases (for example, Japanese Unexamined Patent Application Publication No. 9-203801).

Although the refractive index of a low refractive index layer including a fluororesin is low, the length of a fluorine-substituted alkyl chain of the fluororesin must be increased in order to lower the refractive index. Consequently, another problem occurs in that when the length of the alkyl chain is increased, the film strength of the resulting low refractive index layer is reduced. For example, when a low refractive index layer formed from a known fluororesin is rubbed with a plastic eraser, peeling of the layer occurs very easily. For a low refractive index layer including the fluororesin disclosed in Japanese Unexamined Patent Application Publication No. 9-203801 as well, according to the experiment carried out by the inventors of the present invention, when rubbing with a plastic eraser was conducted while a standard pressure of abrasion resistance ($4.9 \times 10^4$ N/m$^2$) was applied, the layer was broken after about 10 times of rubbing.

Coating type low refractive index layers formed by compressing fine particles having a particle diameter of 1 to 100 nm and a low refractive index (n) with a binder have also been proposed. Among them, a product formed by compressing silica fine particles (n = 1.47) with an acrylic binder has high film strength. However, since the refractive index of the silica fine particles is about 1.47 and, therefore, is relatively high, the refractive index of the resulting low refractive index layer cannot be decreased to 1.49 or lower by using a common binder.

For a product formed by compressing $MgF_2$ fine particles (n = 1.38) with an acrylic binder, although the refractive index of a low refractive index layer is decreased to some extent (n = 1.46), the film strength is significantly deteriorated because the affinity between $MgF_2$ and the acrylic binder is poor.

Consequently, it has been proposed to improve the film strength and decrease the refractive index by using hollow silica fine particles (hollow silica) as low refractive index fine particles exhibiting good affinity for the binder and, in addition, using a fluorine-substituted alkyl containing silicone component as a binder (Japanese Unexamined Patent Application Publication No. 2003-202406 and Japanese Unexamined Patent Application Publication No. 2003-202960).

However, a base film usually used in the antireflection film is a polyethylene terephthalate (PET) film or a

triacetyl cellulose (TAC) film, and the PET film cannot be subjected to heating at 130˚C or more from the viewpoint of the heat resistance. In the film formation method by using a wet method, if a silicone component unsuitable for a baking treatment and the like through heating is used as a binder, the chemical resistance and the abrasion resistance become very poor. In particular, when the film was immersed in an alkaline aqueous solution (3 percent by weight NaOH) for about 30 minutes, the silicone component underwent alkaline hydrolysis, and there was a tendency of the film to be dissolved easily. Therefore, for the system in which a binder containing the silicone component is used and mixed with hollow silica, when a low refractive index layer serving as an outermost surface layer of the antireflection film is strongly wiped with an alkaline detergent or the like, the antireflection function becomes lost due to dissolution of the low refractive index layer.

On the other hand, it has also been proposed that a polyfunctional acrylic resin of difunctional or more is used as a binder, and film formation of a low refractive index layer containing porous silica fine particles is conducted by the wet method (Japanese Unexamined Patent Application Publication No. 2003-261797, Japanese Unexamined Patent Application Publication No. 2003-262703, and Japanese Unexamined Patent Application Publication No. 2003-266602).

However, according to the research of the inventors of the present invention, the film formed by mixing the acrylic resin of difunctional or more with the porous silica fine particles exhibited very poor film strength, and even when the acrylic resin of difunctional or more was simply mixed with the porous silica fine particles, a low refractive index layer exhibiting abrasion resistance was not able to be produced. In these patent documents, the low refractive index layers are disposed directly on the base material surfaces. However, the above-described products, in which the low refractive index layers are disposed directly on the base materials, cannot exhibit excellent antireflection performance, e.g., minimum reflectance, indispensable for the antireflection film. Furthermore, in these patent documents, porous silica fine particles are used rather than the hollow silica. However, the porous silica can not satisfactorily lower the refractive index of silica fine particles. Consequently, the refractive index of the low refractive index layer does not become a satisfactorily low value.

For the low refractive index layer serving as an uppermost layer of the antireflection film, not only the low refractive index property, but also the durability, e.g., the abrasion resistance and the chemical resistance, is very important. However, as described above, a coating type antireflection film, which exhibits excellent film performance, e.g., the abrasion resistance and the chemical resistance, and which is provided with low refractive index layer exhibiting a low refractive index, has not been provided previously.

IV. In a plasma display panel (PDP), an electromagnetic wave shielding light transmitting window material (PDP front filter) is used for the purpose of electromagnetic wave cut-off, near infrared ray cut-off, neon cut-off, and the like. The development of gas discharge panel direct affix type has also been advanced for the purpose of improving the visibility. Every product is provided with an antireflection function on the surface to reduce the reflection of external light.

Fig. 38a is a sectional view showing an electromagnetic wave shielding light transmitting window material 31 proposed in Japanese Unexamined Patent Application Publication No. 2002-341779. In this electromagnetic wave shielding light transmitting window material 31, an antireflection film 33 serving as an outermost surface layer, a copper/PET lamination etching film 40 serving as an electromagnetic wave shielding film, a transparent substrate 32, and a near infrared ray cut-off film 35 serving as an outermost back layer are laminated and integrated by using a bonding intermediate film 34A serving as a bonding agent, a transparent adhesive 34B, and an adhesive 34C, and an electrically conductive adhesive tape 37 is attached to and integrated with an end surface of the resulting laminate and surface and back edge portions close to the end surface. The electromagnetic wave shielding film 40 has substantially the same size as the size of the transparent substrate 32, and an electrically conductive adhesive tape 38 is attached to the edge portion thereof in such a way as to wrap around from one surface to the other surface.

Reference numeral 33A denotes a transparent base film, reference numeral 33B denotes an antireflection layer, and in the configuration, usually, a hard coat layer, a high refractive index layer, and a low refractive index layer are laminated in that order on the transparent base film. Reference numeral 35A denotes a transparent base film, and reference numeral 35B denotes a near infrared ray absorption layer. Reference numerals 38A and 37A denote metal foil, and reference numerals 38B and 37B denote adhesive layers. Reference numeral 41 denotes copper foil, reference numeral 42 denotes a light absorption layer, reference numeral 43 denotes a transparent base film, and reference numeral 44 denotes a transparent adhesive.

Fig. 38b is a sectional view showing a gas discharge type light emitting panel proposed in Japanese Unexamined Patent Application Publication No. 2002-341781. In Fig. 38b, the elements which perform the same function as the elements shown in Fig. 38a are indicated by the same reference numerals as those set forth above. In this gas discharge type light emitting panel 60, an antireflection film 33 serving as an outermost surface layer, a copper/PET lamination etching film 40 serving as an electromagnetic wave shielding film, a near infrared ray cut-off film 35, and a light emitting panel main body 50 are laminated and integrated by using bonding agent intermediate films 34A, 34B, and 34C serving as bonding agents, and an electrically conductive adhesive tape 37 is attached to and integrated with an end surface of the resulting laminate and surface and back edge portions close to the end surface.

Many high refractive index layers and low refractive index layers constituting the antireflection layers of the

antireflection films have been previously provided by a dry film formation method through evaporation or sputtering. However, since the film formation by the dry method takes much time, the cost becomes very high. Consequently, the wet film formation method by using a coating method has become the mainstream.

As described above, the antireflection film is used on the display surface of a PDP or the like to reduce the reflection of external light. In particular, for the antireflection layer of the PDP, an improvement of the coloration when the light is put out and an improvement of color purity when the light is put on are indispensable. However, since the plasma display emits light based on discharge of a rare gas, the color adjustment is very difficult. In particular, for the coating type antireflection film, there are a limit of decrease in refractive index of the low refractive index layer and a limit of increase in refractive index of the high refractive index layer (for example, the limit of the low refractive index layer is n = about 1.46, and the limit of the high refractive index layer is n = about 1.68). Furthermore, since the color of the reflection color is intense, a flat reflectance characteristic is required in the visible light region in order to improve the color purity. In addition, the antireflection film serving as an outermost surface layer is also required to have an antifouling property.

V. Flat display panels of LCDs, organic EL, CRTs, and the like are provided with an antireflection function in order to prevent reflection of external light. Known methods for providing this antireflection function to the CRT include, a method in which an antireflection layer is formed directly on a glass substrate of the surface by a dry film formation method, e.g., a sputtering method or an evaporation method, and a method in which an antireflection film prepared by forming an antireflection layer on a transparent base film by a dry method or a wet method, e.g., a micro gravure coating method, is adhered. Among them, the antireflection layer formed by the dry method has drawbacks in that the film formation takes much time and the cost is high. Therefore, recently, the antireflection layer formed by the wet method has become the mainstream. However, the antireflection layer formed by the wet method has a drawback in that the antireflection function is poorer as compared with that formed by the dry method.

For the LCD, an antiglare film with surface fine asperities formed by the wet method is used. However, since the LCD was used for the television, as in the CRT, a clear (no glare) antireflection film and a composite film having both the above-described antiglare function and the antireflection function have been used.

The organic EL is of self-emission type and has high luminance. Therefore, a high antireflection performance is not required, but for outdoor uses, it is required to reduce the reflection of external light and improve the visibility.

In a touch panel type display panel typified by a PDA including the LCD as well, prevention of external light reflection is required to realize a higher-quality image and improve the visibility.

On the other hand, with respect to a show window for displaying arts, ornaments, and the like, it is also required to prevent the reflection of external light in such a way that the color of the exhibit itself can be visually identified clearly.

Consequently, for special exhibits, antireflection layers have been previously formed on show window materials by the dry film formation method. That is, an antireflection layer formed by the wet film formation method cannot perform a satisfactory antireflection function under present circumstances, and there are an interference pattern problem, a coloring problem, and the like. Therefore, the dry film formation method is adopted. However, a product formed by the dry film formation method is expensive and, therefore, is not applied to general show window materials, but is simply applied to a show window material for a special exhibit under present circumstances.

As described above, among known antireflection technologies, since a product formed by the dry film formation method is expensive, the application of the wet film formation method is desired. However, in the wet film formation method, there is a limit of improvement of the antireflection performance. That is, there are a limit of decrease in refractive index of the low refractive index layer and a limit of increase in refractive index of the high refractive index layer (for example, the limit of the low refractive index layer is n = about 1.46, and the limit of the high refractive index layer is n = about 1.68). Therefore, the antireflection performance cannot be further improved. Furthermore, a flat reflectance characteristic is required in the visible light region in order to improve the color purity and increase the visibility. In particular, in the application to the show window material, it is required to reduce the color change (color difference) in order to visually identify the color of the exhibit itself. Known antireflection film are difficult to satisfy such required characteristics. In addition, the antireflection film serving as an outermost surface layer is also required to have an antifouling property.

VI. In recent years, from the viewpoint of the effective use of resources, prevention of environmental pollution, and the like, solar cells which converts the sunlight directly to electric energy have been noted, and have been developed.

In general, as shown in Fig. 43, a solar cell has a configuration in which a cell 114 serving for a solar cell, that is, a power generation element formed from silicon or the like, is sealed between a surface-side transparent protective material 111 on the light receiving surface side and a back-side protective material (back cover material) 112 by using ethylene-vinyl acetate copolymer (EVA) resin films 113A and 113B serving as sealing films.

The above-described solar cell module 110 is produced by laminating the surface-side transparent protective material 111, e.g., glass substrate, an EVA film 113A serving as a sealing film, the cell 114 serving for a solar cell, an EVA resin film 113B serving as a sealing film, and a back cover component 112 in that order, and crosslinking and curing the EVA through heat-melting so as to cause bonding and integration.

A glass substrate having been subjected to no treatment has been previously used as the surface-side transparent protective material of a solar cell module. However, in the solar cell module including a common glass substrate as the surface-side transparent protective material, since about 4% of the sunlight is reflected at this glass substrate, the sunlight corresponding to this reflected light cannot be subjected to energy conversion. This has become a cause of hindrance to an improvement of the power generation efficiency of the solar cell module.

It is also considered that the surface of the glass substrate as the surface-side transparent protective material of a solar cell module is subjected to surface processing in order to provide an antireflection function for reducing the reflection of the external light. However, since no technology suitable for commercialization has been provided from the viewpoint of the cost and the performance, no surface processing has been conducted under present circumstances.

On the other hand, antireflection films, in which a high refractive index layer and a low refractive index layer are disposed on the surface of a transparent base film, are applied to various displays, e.g., word processors, computers, CRTs, plasma televisions, liquid crystal displays, and organic EL; window panes of automobiles, buildings, and electric cars; and the like in order to prevent reflection of the light and ensure the light transmitting property. In particular, products in which the high refractive index layer and the low refractive index layer are formed by the wet method, e.g., the micro gravure coating method, can be produced at a low cost and, thereby, have been adopted widely.

Therefore, it is also considered to apply the above-described coating type antireflection film to the solar cell module. However, known antireflection films have not satisfactory antireflection performance and, in particular, the ultraviolet light including high solar energy is cut off. Consequently, the power generation efficiency may be reduced, on the contrary, by using the above-described antireflection film.

Antireflechen films are disclosed in WO 03/093878 and JP 2003 222703.

Disclosure of Invention

I. It is an object of the first aspect to provide a process for preparing a coating type antireflection film, wherein a low refractive index layer having a low refractive index can easily be formed without deteriorating a transparent base film, a continuous production can be conducted, and excellent abrasion resistance, excellent chemical resistance, and the like are exhibited.

A process for preparing an antireflection film according to the first aspect comprises laminating a hard coat layer, a high refractive index layer, and a low refractive index layer, in that order on a transparent base film, wherein the low refractive index layer is formed by applying a coating film to the high refractive index layer and curing the coating films by ultraviolet irradiation in an atmosphere having an oxygen concentration of 0 to 10,000 ppm, the coating film containing hollow silica fine particles (hereafter referred to as "hollow silica"), a polyfunctional (meth)acrylic compound, that is, a (meth)acrylic compound having at least two (meth)acryloyl groups, and a polymerization initiator,
characterized in that the polyfunctional (meth)acrylic compound comprises, as primary components, a hexafunctional (meth)acrylic compound represented by the following General formula (I) and/or a tetrafunctional (meth)acrylic compound represented by the following General formula (II):

[Chemical formula 26]

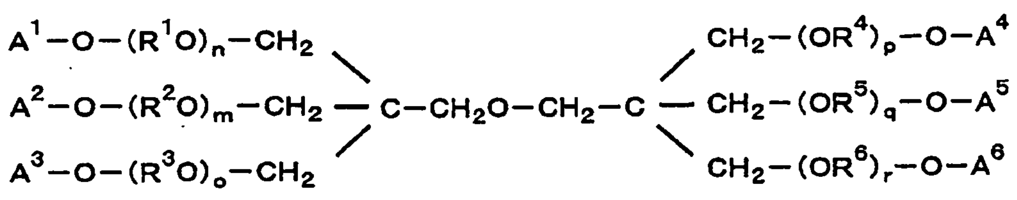

(I)

(in the above-described General formula (I), $A^1$ to $A^6$ independently represent an acryloyl group, a methacryloyl group, an $\alpha$-fluoroacryloyl group, or a trifluoromethacryloyl group,
n, m, o, p, q, and r independently represent an integer of 0 to 2, and
$R^1$ to $R^6$ independently represent an alkylene group having the carbon number of 1 to 3 or a fluoroalkylene group having the carbon number of 1 to 3 in which at least one fluorine atom has substituted for at least one hydrogen atom),

and

[Chemical formula 27]

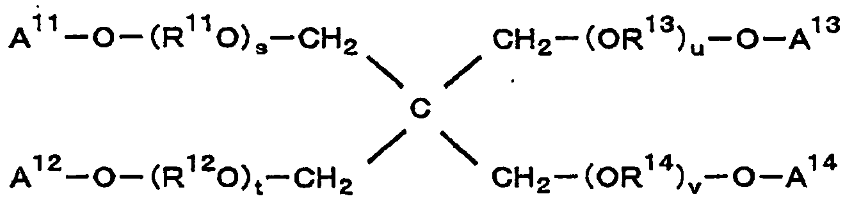

(II)

(in the above-described General formula (II), $A^{11}$ to $A^{14}$ independently represent an acryloyl group, a methacryloyl group, an $\alpha$-fluoroacryloyl group, or a trifluoromethacryloyl group,
s, t, u, and v independently represent an integer of 0 to 2, and
$R^{11}$ to $R^{14}$ independently represent an alkylene group having the carbon number of 1 to 3 or a fluoroalkylene group having the carbon number of 1 to 3 in which at least one fluorine atom has substituted for at least one hydrogen atom).

The hollow silica used in the first aspect has a low refractive index, and is effective as a material for the low refractive index layer. The abrasion resistance, the chemical resistance, and the antifouling property can be imparted by selecting the polyfunctional (meth)acrylic compound to be used as a binder component, so that a good low refractive index layer can be formed. Furthermore, the low refractive index layer prepared according to the first aspect is cured by ultraviolet irradiation under a specific condition of low oxygen without applying heat. Therefore, a low refractive index layer having a very low refractive index and exhibiting excellent abrasion resistance and excellent chemical resistance can be formed by continuous production without deteriorating the transparent resin film.

That is, the inventors of the present invention have conducted additional experiments on the above-described known technologies, as shown in Comparative examples described below, and have found that when a low refractive index layer has been formed by mixing an acrylic resin of difunctional or more and porous silica fine particles, the film strength has been very low and, therefore, the abrasion resistance has not been improved at all by simply mixing the acrylic resin of difunctional or more with the porous silica fine particles. Furthermore, it has been found that even when the low refractive index layer has been formed directly on the base material surface, the antireflection performance, e.g., minimum reflectance, indispensable for the antireflection film has been unsatisfactory.

It has been further found that the porous silica fine particles have not been able to decrease satisfactorily the refractive index of silica fine particles, and the use of hollow silica have been required to further decrease the refractive index.

In consideration of these findings, the inventors of the present invention have improved the antireflection performance by specifying the film configuration to be transparent base film/hard coat layer, high refractive index layer/low refractive index layer or transparent base film/electrically conductive high refractive index hard coat layer/low refractive index layer. The antireflection film prepared by the first aspect has been completed based on the finding that the abrasion resistance of the low refractive index layer has been significantly improved by curing the binder through application of ultraviolet ray under a condition of very low oxygen concentration, and most of all, very strong abrasion resistance and chemical resistance have been able to be attained only when a specific acrylic resin is used as the binder.

According to the first aspect, a low refractive index layer having a low refractive index can be formed in a short time on a transparent resin film without deteriorating the transparent resin film, a continuous production can be conducted, and a coating type antireflection film exhibiting excellent abrasion resistance, excellent chemical resistance, and the like is provided.

IV. It is an object of the second aspect to provide a process for preparing an electromagnetic wave shielding light transmitting window material and a gas discharge type light emitting panel, wherein an antireflection layer serving as an outermost surface layer performs an excellent antireflection function (reduction in external light reflection, reduction in reflection color), excellent antifouling property is exhibited, and the visibility is high.

A process for preparing an electromagnetic wave shielding light transmitting window material according to the

second aspect comprises laminating at least an electromagnetic wave shielding layer, a transparent substrate, and an antireflection layer serving as an outermost surface layer, which are laminated and integrated, wherein the antireflection layer is provided with a high refractive index layer and a low refractive index layer disposed on the high refractive index layer, and the low refractive index layer is composed of a photo-cured coating film containing hollow silica fine particles (hereafter referred to as "hollow silica"), a polyfunctional (meth)acrylic compound, and a photopolymerization initiator, characterised in that

the polyfunctional (meth)acrylic compound comprises, as primary components, a hexafunctional (meth)acrylic compound represented by the following General formula (I) and/or a tetrafunctional (meth)acrylic compound represented by the following General formula (II):

[ Chemical formula 39]

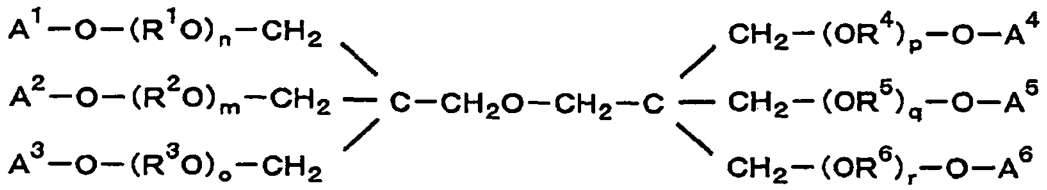

(I)

(in the above-described General formula (I), $A^1$ to $A^6$ independently represent an acryloyl group, a methacryloyl group, an α-fluoroacryloyl group, or a trifluoromethacryloyl group,

n, m, o, p, q, and r independently represent an integer of 0 to 2, and

$R^1$ to $R^6$ independently represent an alkylene group having the carbon number of 1 to 3 or a fluoroalkylene group having the carbon number of 1 to 3 in which at least one fluorine atom has substituted for at least one hydrogen atom), and

[Chemical formula 40 ]

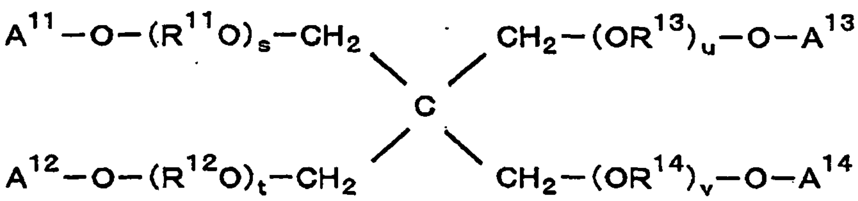

(II)

(in the above-described General formula (II), $A^{11}$ to $A^{14}$ independently represent an acryloyl group, a methacryloyl group, an α-fluoroacryloyl group, or a trifluoromethacryloyl group,

s, t, u, and v independently represent an integer of 0 to 2, and

$R^{11}$ to $R^{14}$ independently represent an alkylene group having the carbon number of 1 to 3 or a fluoroalkylene group having the carbon number of 1 to 3 in which at least one fluorine atom has substituted for at least one hydrogen atom).

A process for preparing a gas discharge type light emitting panel according to the second aspect comprises laminating and integrating a light emitting panel main body, an electromagnetic wave shielding layer disposed on the front of the light emitting panel main body, and an antireflection layer serving as an outermost surface layer, wherein the antireflection layer is provided with a high refractive index layer and a low refractive index layer disposed on the high refractive index layer, and the low refractive index layer is composed of a photo-cured coating film containing hollow

silica fine particles (hereafter referred to as "hollow silica"), a polyfunctional (meth)acrylic compound, and a photopolymerization initiator characterized in that the polyfunctional (meth)acrylic compound comprises, as primary components, a hexafunctional (meth)acrylic compound represented by the following General formula (I) and/or a tetrafunctional (meth) acrylic compound represented by the following General formula (II):

[Chemical formula 43]

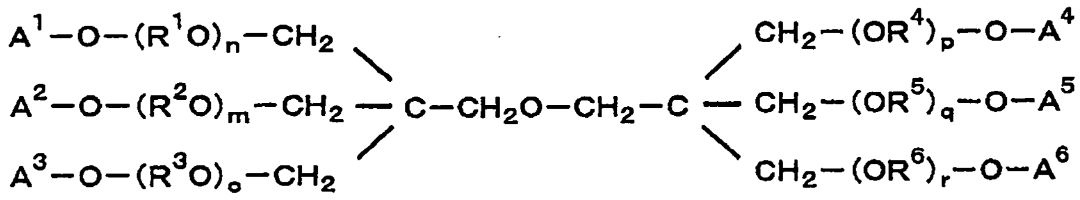

(I)

(in the above-described General formula (I), $A^1$ to $A^6$ independently represent an acryloyl group, a methacryloyl group, an $\alpha$-fluoroacryloyl group, or a trifluoromethacryloyl group,
n, m, o, p, q, and r independently represent an integer of 0 to 2, and
$R^1$ to $R^6$ independently represent an alkylene group having the carbon number of 1 to 3 or a fluoroalkylene group having the carbon number of 1 to 3 in which at least one fluorine atom has substituted for at least one hydrogen atom), and

[Chemical formula 44]

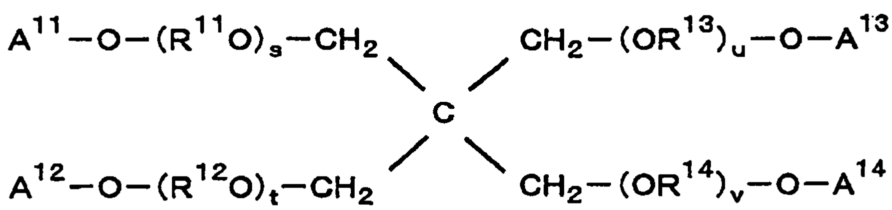

(II)

(in the above-described General formula (II), $A^{11}$ to $A^{14}$ independently represent an acryloyl group, a methacryloyl group, an $\alpha$-fluoroacryloyl group, or a trifluoromethacryloyl group,
s, t, u, and v independently represent an integer of 0 to 2, and
$R^{11}$ to $R^{14}$ independently represent an alkylene group having the carbon number of 1 to 3 or a fluoroalkylene group having the carbon number of 1 to 3 in which at least one fluorine atom has substituted for at least one hydrogen atom).

The hollow silica used in the second aspect has a low refractive index, and is effective as a material for the low refractive index layer. The abrasion resistance, the chemical resistance, and the antifouling property can be imparted by selecting the polyfunctional (meth)acrylic compound to be used as a binder component, so that a good low refractive index layer can be formed. Furthermore, the low refractive index layer prepared according to the second aspect is cured by ultraviolet irradiation without applying heat. Therefore, a low refractive index layer can be formed by continuous production without deteriorating a transparent resin film even when the transparent resin film is used as a base material.

According to the second aspect, an electromagnetic wave shielding light transmitting window material and a gas discharge type light emitting panel are prepared, wherein an antireflection layer serving as an outermost surface layer performs an excellent antireflection function (reduction in external light reflection, reduction in reflection color), excellent antifouling property is exhibited, and the visibility is high.

V. It is an object of the third aspect to provide a flat display panel and a show window material, wherein an antireflection layer disposed on the surface performs an excellent antireflection function (reduction in external light reflection, reduction in reflection color, reduction in color change), excellent antifouling property is exhibited, and the visibility is high.

A process for preparing a flat display panel according to the third aspect comprises forming on the surface, an antireflection layer provided with a high refractive index layer and a low refractive index layer disposed on the high refractive index layer, wherein the low refractive index layer is composed of a photo-cured coating film containing hollow silica fine particles (hereafter referred to as "hollow silica"), a polyfunctional (meth)acrylic compound, and a photopolymerization initiator, characterized in that the polyfunctional (meth)acrylic compound comprises, as primary components, a hexafunctional (meth)acrylic compound represented by the following General formula (I) and/or a tetrafunctional (meth) acrylic compound represented by the following General formula (II):

[Chemical formula 47]

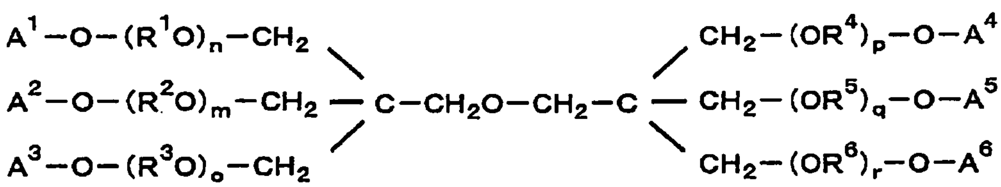

(I)

(in the above-described General formula (I), $A^1$ to $A^6$ independently represent an acryloyl group, a methacryloyl group, an $\alpha$-fluoroacryloyl group, or a trifluoromethacryloyl group,
n, m, o, p, q, and r independently represent an integer of 0 to 2, and
$R^1$ to $R^6$ independently represent an alkylene group having the carbon number of 1 to 3 or a fluoroalkylene group having the carbon number of 1 to 3 in which at least one fluorine atom has substituted for at least one hydrogen atom), and

[Chemical formula 48]

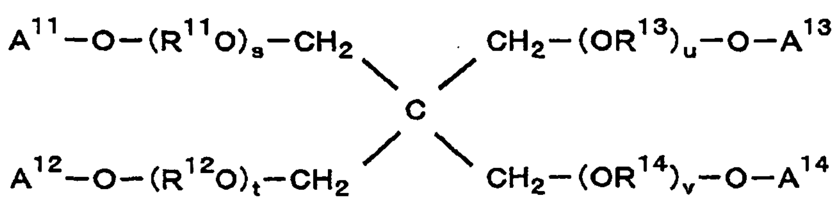

(II)

(in the above-described General formula (II), $A^{11}$ to $A^{14}$ independently represent an acryloyl group, a methacryloyl group, an $\alpha$-fluoroacryloyl group, or a trifluoromethacryloyl group,
s, t, u, and v independently represent an integer of 0 to 2, and

$R^{11}$ to $R^{14}$ independently represent an alkylene group having the carbon number of 1 to 3 or a fluoroalkylene group having the carbon number of 1 to 3 in which at least one fluorine atom has substituted for at least one hydrogen atom) .

A process for preparing a show window material according to the third aspect comprises forming on the surface of the material, an antireflection layer provided with a high refractive index layer and a low refractive index layer disposed on the high refractive index layer, wherein the low refractive index layer is composed of a photo-cured coating film containing hollow silica fine particles (hereafter referred to as "hollow silica"), a polyfunctional (meth)acrylic compound and a photopolymerization initiator,

characterized in that the polyfunctional (meth)acrylic compound comprises, as primary components, a hexafunctional (meth)acrylic compound represented by the following General formula (I) and/or a tetrafunctional (meth)acrylic compound represented by the following General formula (II):

[ Chemical formula 51]

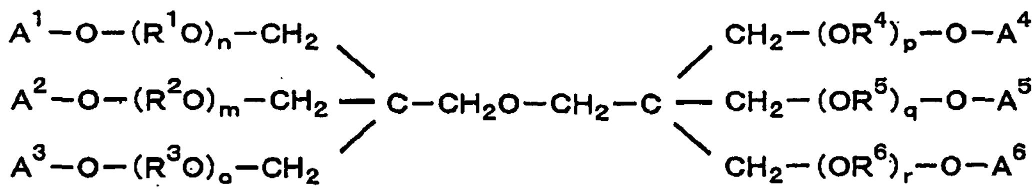

(I)

(in the above-described General formula (I), $A^1$ to $A^6$ independently represent an acryloyl group, a methacryloyl group, an $\alpha$-fluoroacryloyl group, or a trifluoromethacryloyl group,

n, m, o, p, q, and r independently represent an integer of 0 to 2, and

$R^1$ to $R^6$ independently represent an alkylene group having the carbon number of 1 to 3 or a fluoroalkylene group having the carbon number of 1 to 3 in which at least one fluorine atom has substituted for at least one hydrogen atom), and

[ Chemical formula 52]

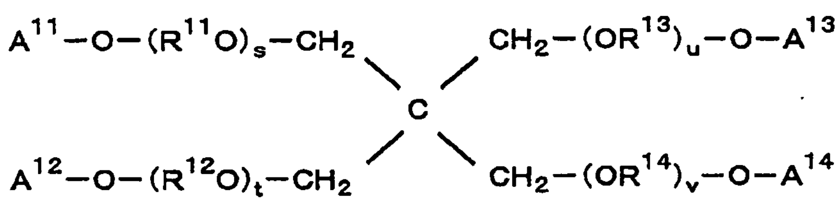

(II)

(in the above-described General formula (II), $A^{11}$ to $A^{14}$ independently represent an acryloyl group, a methacryloyl group, an $\alpha$-fluoroacryloyl group, or a trifluoromethacryloyl group,

s, t, u, and v independently represent an integer of 0 to 2, and

$R^{11}$ to $R^{14}$ independently represent an alkylene group having the carbon number of 1 to 3 or a fluoroalkylene group having the carbon number of 1 to 3 in which at least one fluorine atom has substituted for at least one hydrogen atom).

The hollow silica used in the third aspect has a low refractive index, and is effective as a material for the low

refractive index layer. The abrasion resistance, the chemical resistance, and the antifouling property can be imparted by selecting the polyfunctional (meth)acrylic compound to be used as a binder component, so that a good low refractive index layer can be formed. Furthermore, the low refractive index layer prepared according to the third aspect is cured by ultraviolet irradiation without applying heat. Therefore, a low refractive index layer can be formed by continuous production without deteriorating a transparent resin film even when the transparent resin film is used as a base material.

According to the third aspect, a flat display panel and a show window material are prepared, wherein an antireflection layer disposed on the surface performs an excellent antireflection function (reduction in external light reflection, reduction in reflection color, reduction in color change), excellent antifouling property is exhibited, and the visibility is high.

VI. It is an object of the fourth aspect to provide a high efficiency solar cell module, wherein a power generation efficiency is increased by forming, on the surface, an antireflection layer exhibiting a low external light reflectance and a high ratio of sunlight energy incidence.

A process for preparing a solar cell module according to the fourth aspect comprises sealing a cell for a solar cell between a surface-side transparent protective material and a back-side transparent protective material and an antireflection layer is disposed on the surface of the surface-side transparent protective material, wherein the antireflection layer is provided with a high refractive index layer and a low refractive index layer disposed on the high refractive index layer, and the low refractive index layer is composed of a photo-cured coating film containing hollow silica fine particles (hereafter referred to as "hollow silica"), a polyfunctional (meth)acrylic compound, and a photopolymerization initiator, characterized in that the polyfunctional (meth)acrylic compound comprises, as primary components, a hexafunctional (meth)acrylic compound represented by the following General formula (I) and/or a tetrafunctional (meth)acrylic compound represented by the following General formula (II):

[Chemical formula 55]

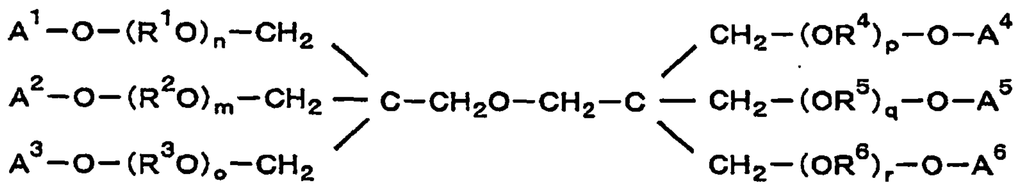

(I)

(in the above-described General formula (I), $A^1$ to $A^6$ independently represent an acryloyl group, a methacryloyl group, an $\alpha$-fluoroacryloyl group, or a trifluoromethacryloyl group,
n, m, o, p, q, and r independently represent an integer of 0 to 2, and
$R^1$ to $R^6$ independently represent an alkylene group having the carbon number of 1 to 3 or a fluoroalkylene group having the carbon number of 1 to 3 in which at least one fluorine atom has substituted for at least one hydrogen atom), and

[Chemical formula 56]

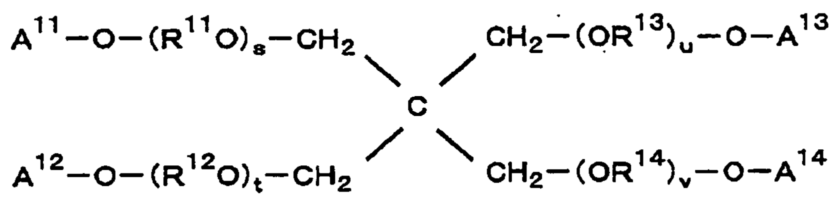

(II)

(in the above-described General formula (II), $A^{11}$ to $A^{14}$ independently represent an acryloyl group, a methacryloyl group, an α-fluoroacryloyl group, or a trifluoromethacryloyl group,
s, t, u, and v independently represent an integer of 0 to 2, and
$R^{11}$ to $R^{14}$ independently represent an alkylene-group having the carbon number of 1 to 3 or a fluoroalkylene group having the carbon number of 1 to 3 in which at least one fluorine atom has substituted for at least one hydrogen atom).

The hollow silica used in the fourth aspect has a low refractive index, and is effective as a material for the low refractive index layer. The abrasion resistance, the chemical resistance, and the antifouling property can be imparted by selecting the polyfunctional (meth)acrylic compound to be used as a binder component, so that a good low refractive index layer can be formed. Furthermore, the low refractive index layer, according to the fourth aspect, is cured by ultraviolet irradiation without applying heat. Therefore, a low refractive index layer can be formed by continuous production without deteriorating a transparent resin film even when the transparent resin film is used as a base material.

According to the fourth aspect, a high efficiency solar cell module is prepared, wherein a power generation efficiency is increased by forming, on the surface, an antireflection layer exhibiting a low external light reflectance and a high ratio of sunlight energy incidence.

Brief Description of the Drawings

[Fig. 1] Fig. 1 is a schematic sectional view showing a configuration of a general coating type antireflection film.
[Fig. 2] Fig. 2 is a schematic sectional view showing a configuration example of an antireflection film used in the second aspect.
[Fig. 3] Fig. 3a is a schematic sectional view showing an example of known electromagnetic wave shielding light transmitting window materials, and Fig. 3b is a schematic sectional view showing an example of known gas discharge type light emitting panels.
[Fig. 4] Fig. 4 is a schematic sectional view showing a configuration example of an antireflection film used in the third aspect.
[Fig. 5] Fig. 5 is a graph showing an influence of the film thickness of a high refractive index layer exerted on the reflectance.
[Fig. 6] Fig. 6 is a graph showing an influence of the film thickness of a high refractive index layer exerted on the reflectance.
[Fig. 7] Fig. 7 is a schematic sectional view of an antireflection layer portion on a surface, showing an embodiment of a solar cell module of the fourth aspect.
[Fig. 8] Fig. 8 is a sectional view showing a structure of a solar cell module.
[Fig. 9] Fig. 9 is a graph showing influences of the film thicknesses of a high refractive index layer and a low refractive index layer exerted on the reflectance.

Best Mode for Carrying Out the Invention

I. Embodiment of first aspect

The embodiments of an antireflection film according to the first aspect will be described below.

As shown in Fig. 1, the antireflection film of the first aspect includes a hard coat layer 2, a high refractive index layer 3, and a low refractive index layer 4, which are laminated in that order on a transparent base film 1.

In the first aspect, examples of the base film 1 include transparent films of polyester, polyethylene terephthalate (PET), polybutylene terephthalate, polymethyl methacrylate (PMMA), acrylic, polycarbonate (PC), polystyrene, cellulose triacetate (TAC), polyvinyl alcohol, polyvinyl chloride, polyvinylidene chloride, polyethylene, ethylene-vinyl acetate copolymer, polyurethane, and cellophane, and preferably of PET, PC, and PMMA.

The thickness of the base film 1 is appropriately determined based on the required characteristics (for example, strength and slimness) and the like depending on the application of the produced antireflection film, and is usually specified to be within the range of 1 μm to 10 mm.

Preferably, the hard coat layer 2 is a synthetic resin based layer. In particular, a combination of an ultraviolet curing type synthetic resin, most of all, a polyfunctional acrylic resin, and silica fine particles is suitable. Preferably, the thickness of this hard coat layer 2 is 2 to 20 μm.

Preferably, the high refractive index layer 3 is a synthetic resin based layer containing metal oxide fine particles. Examples of synthetic resins include, particularly, ultraviolet curing type synthetic resins, most of all, acrylic resins, epoxy based resins, and styrene based resins. The acrylic resins are most preferable. Preferably, metal oxide fine particles are at least one type of high refractive index metal oxide fine particles selected from the group consisting of ITO, $TiO_2$, $ZrO_2$, $CeO_2$, $Al_2O_3$, $Y_2O_3$, $La_2O_3$, and $Ho_2O_3$. The $TiO_2$ fine particles and the ITO fine particles are particularly preferable.

In the high refractive index layer 3, with respect to the ratio of the metal oxide fine particles to the synthetic resin, if the metal oxide fine particles are excessive and a shortage of the synthetic resin occurs, the film strength of the high refractive index layer is reduced, and conversely, if the metal oxide fine particles are few, the refractive index cannot be increased satisfactorily. Therefore, it is preferable that the ratio of the metal oxide fine particles to the total of the metal oxide fine particles and the synthetic resin is specified to be 10 to 60 percent by volume, in particular, 20 to 50 percent by volume.

Preferably, the thickness of the above-described high refractive index layer 3 is about 80 to 100 nm. It is preferable that the high refractive index layer 3 has a refractive index of 1.65 or more, in particular, 1.66 to 1.85. In this case, when the refractive index of the low refractive index layer 4 is specified to be 1.39 to 1.47, an antireflection film having excellent antireflection performance can be produced, wherein the minimum reflectance of the surface reflectance is 1% or less. In particular, when the refractive index of the low refractive index layer 4 is specified to be 1.45 or less, the antireflection performance can be further improved, and an antireflection film exhibiting the minimum reflectance of the surface reflectance of 0.5% or less can also be produced.

In the first aspect, the low refractive index layer 4 is formed from a coating film cured by ultraviolet irradiation in an atmosphere having an oxygen concentration of 0 to 10,000 ppm, the coating film containing hollow silica, a binder component composed of a polyfunctional (meth)acrylic compound, and a photopolymerization initiator.

The hollow silica refers to hollow shell-shaped silica fine particles. Preferably, the average particle diameter thereof is 10 to 200 nm, and particularly is 10 to 150 nm. If the average particle diameter of this hollow silica is less than 10 nm, it is difficult to decrease the refractive index of the hollow silica. If the average particle diameter exceeds 200 nm, the light is reflected diffusely, and problems occur in that, for example, the surface roughness of the resulting low refractive index layer is increased.

The hollow silica includes air having a low refractive index (refractive index = 1.0) in the inside of the hollow and, therefore, the refractive index thereof is significantly low as compared with that of common silica (refractive index = 1.46). The refractive index of the hollow silica is determined based on the volume ratio of its hollow portion. Preferably, the refractive index is usually about 1.20 to 1.40.

The refractive index: n(hollow silica) of the hollow silica is determined from the refractive index: n(silica) of the silica constituting the shell portion of the hollow fine particle and the refractive index: n(air) of the air in the inside, as described below.

$$n(\text{hollow silica}) = n(\text{silica}) \times \text{volume fraction of silica} + n(\text{air}) \times \text{volume fraction of air}$$

As described above, n(silica) is about 1.47, and n(air) is a very low 1.0. Therefore, the refractive index of the above-described hollow silica becomes very low.

The refractive index: n(low refractive index layer) of the low refractive index layer according to the first aspect by using the above-described hollow silica is determined from the refractive index: n(hollow silica) of the hollow silica and the refractive index: n(binder) of the binder component, as described below.

n(low refractive index layer) = n(hollow silica) × volume ratio of hollow silica in low refractive index layer + n(binder) × volume ratio of binder in low refractive index layer

Here, since the refractive index of the binder is generally about 1.50 to 1.55 except for specific fluorine-containing acrylic binders, an important requirement for decreasing the refractive index of the low refractive index layer is to increase the volume fraction of the hollow silica in the low refractive index layer.

In the first aspect, as the content of the hollow silica in the low refractive index layer is increased, a low refractive index layer having a lower refractive index can be formed and, thereby, an antireflection film exhibiting excellent antireflection performance can be produced. On the other hand, since the content of the binder component is decreased correspondingly, the film strength of the low refractive index layer is reduced, and the abrasion resistance and the durability are reduced. However, the reduction of the film strength due to an increase of amount of blending of hollow silica can be compensated by a surface treatment of the hollow silica, and furthermore, the film strength can also be compensated by selection of the type of binder component to be blended.

In the first aspect, preferably, the hollow silica content in the low refractive index layer is specified to be 20 to 55 percent by weight, in particular, 30 to 50 percent by weight by the surface treatment of the hollow silica and selection of the binder component, so as to decrease the refractive index of the low refractive index layer to about 1.39 to 1.45 and ensure the abrasion resistance.

The polyfunctional (meth)acrylic compound serving as a binder component of the low refractive index layer of the first aspect will be described below.

Preferably, the content of the polyfunctional (meth)acrylic compound is 50 percent by weight or more, in particular, 90 percent by weight or more, in the entire binder components.

Examples of hexafunctional (meth)acrylic compounds represented by the above-described General formula (I) include dipentaerythritol hexaacrylate, and ethylene oxide adducts of dipentaerythritol hexaacrylate in which fluorine may substitute for H of ethylene oxide. These may be used alone, or at least two types thereof may be used in combination.

Examples of tetrafunctional (meth)acrylic compounds represented by the above-described General formula (II) include pentaerythritol tetraacrylate, and ethylene oxide adducts (1 to 8) of pentaerythritol tetraacrylate in which fluorine may substitute for H of ethylene oxide. These may be used alone, or at least two types thereof may be used in combination.

At least one type of the hexafunctional (meth)acrylic compounds represented by the above-described General formula (I) and at least one type of the tetrafunctional (meth)acrylic compounds represented by the above-described General formula (II) may be used in combination as the binder component.

The polyfunctional (meth)acrylic compounds represented by the above-described General formulae (I) and (II), in particular, the hexafunctional (meth)acrylic compounds represented by the above-described General formula (I), exhibit high hardness and excellent abrasion resistance and, therefore, are effective at forming a low refractive index layer exhibiting high abrasion resistance.

In the first aspect, it is preferable that a fluorine-containing difunctional (meth)acrylic compound represented by the following General formula (III) or a specific fluorine-containing polyfunctional (meth)acrylic compound is used in combination with the hexafunctional (meth)acrylic compound represented by the above-described General formula (I) and/or the tetrafunctional (meth)acrylic compound represented by the above-described General formula (II) as the binder components. The low refractive index layer can be provided with the abrasion resistance and the antifouling property by using these binder components. Furthermore, these binder components have refractive indices lower than those of the hexafunctional (meth)acrylic compounds represented by the above-described General formula (I) and the tetrafunctional (meth)acrylic compounds represented by the above-described General formula (II) and, therefore, a low refractive index layer having a low refractive index can be formed even when the amount of blending of the hollow silica is reduced.

$$A^a\text{-O-}(CH_2)_{xa}\text{-Rf-}(CH_2)_{xb}\text{-O-}A^b \qquad \text{(III)}$$

(In the above-described General formula (III), $A^a$ and $A^b$ independently represent an acryloyl group, a methacryloyl group, an $\alpha$-fluoroacryloyl group, or a trifluoromethacryloyl group, Rf represents a perfluoroalkylene group, and xa and xb independently represent an integer of 0 to 3.)

Examples of fluorine-containing difunctional (meth)acrylic compounds represented by the above-described General formula (III) include 2,2,3,3,4,4-hexafluoropentane glycol·diacrylate. These may be used alone or at least two types may be used in combination.

The above-described specific polyfunctional (meth)acrylic compounds, that is, trifunctional to hexafunctional (meth)acrylic compounds having at least 6 fluorine atoms in-a molecule and a molecular weight of 1,000 or less and hexafunctional to pentadecafunctional (meth)acrylic compounds having at least 10 fluorine atoms in a molecule and a molecular weight of 1,000 to 5,000, may also be used alone or at least two types may also be used in combination.

At least one type of the above-described fluorine-containing difunctional (meth)acrylic compounds and at least one type of the fluorine-containing polyfunctional (meth)acrylic compounds may be used in combination.

The refractive index of the low refractive index layer can be decreased and the antifouling property can be improved by using the above-described fluorine-containing difunctional (meth)acrylic compound. However, if the amount of blending thereof is excessive, the abrasion resistance is deteriorated. Therefore, it is preferable that the fluorine-containing difunctional (meth)acrylic compound is blended by 5 percent by weight or more, in particular, 5 to 10 percent by weight into the entire binder components.

The refractive index of the low refractive index layer can also be decreased and the antifouling property can also be improved by using the above-described fluorine-containing polyfunctional (meth)acrylic compound. However, if the amount of blending thereof is excessive, the abrasion resistance is deteriorated. Therefore, it is preferable that the polyfunctional (meth)acrylic compound is blended by 5 percent by weight or more, in particular, 5 to 10 percent by weight into the entire binder components.

When the fluorine-containing difunctional (meth)acrylic compound and the fluorine-containing polyfunctional (meth)acrylic compound are used in combination, preferably, the fluorine-containing difunctional (meth)acrylic compound and the fluorine-containing polyfunctional (meth)acrylic compound are blended by 5 percent by weight or more in total, in particular, 5 to 10 percent by weight in total into the entire binder components.

The particle diameter of the hollow silica used in the first aspect is larger than the particle diameter of general silica fine particles (particle diameter about 5 to 20 nm) to be blended into a known low refractive index layer. Therefore, even when the same binder component is used, the film strength of the resulting low refractive index layer tends to become lower than that in the case where the silica fine particles are blended. However, the bonding force between the hollow silica and the binder component can be increased and the film strength of the resulting low refractive index layer can be increased by subjecting the hollow silica to an appropriate surface treatment, so that the abrasion resistance can be improved.

For the surface treatment of the hollow silica, it is preferable to subject the surface of the hollow silica to terminal (meth)acrylic modification with a (meth)acrylic-terminated silane coupling agent represented by the following General formula (IV).

[Chemical formula 3]

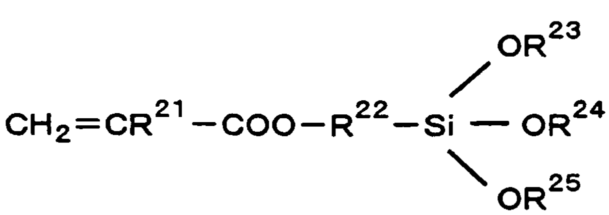

(IV)

(In the above-described General formula (IV), $R^{21}$ represents a hydrogen atom, a fluorine atom, or a methyl group, $R^{22}$ represents an alkylene group having the carbon number of 1 to 8 or a fluoroalkylene group having the carbon number of 1 to 8 in which at least one fluorine atom has substituted for at least one hydrogen atom, and $R^{23}$ to $R^{25}$ independently represent a hydrogen atom or an alkyl group having the carbon number of 1 to 4.)

Examples of the above-described (meth)acrylic-terminated silane coupling agents include $CH_2$=CH-COO-$(CH_2)_3$-Si-$(OCH_3)_3$ and $CH_2$=C($CH_3$)-COO-$(CH_2)_3$-Si-$(OCH_3)_3$. These may be used alone, or at least two types thereof may be used in combination.

In order to subject the surface of the hollow silica to terminal (meth)acrylic modification with the above-described (meth)acrylic-terminated silane coupling agent, it is preferable to subject a mixed solution of the hollow silica and the (meth)acrylic-terminated silane coupling agent to a hydrothermal reaction at 100˚C to 150˚C or to effect a reaction by irradiating this mixed solution with a microwave. That is, the surface chemical modification with the (meth)acrylic-terminated silane coupling agent cannot be effected by simply mixing the (meth)acrylic-terminated silane coupling agent and the hollow silica, and a desired surface reforming effect cannot be attained. If the reaction temperature is low in the hydrothermal reaction, satisfactory terminal (meth)acrylic modification cannot be effected. Conversely, if the reaction temperature is too high, the reactivity is reduced. Consequently, a preferable hydrothermal reaction temperature is 100˚C to 150˚C. The hydrothermal reaction time is usually about 0.1 to 10 hours, although it depends on the reaction temperature. On the other hand, when the microwave is used, if the setting temperature is too low, satisfactory terminal (meth)acrylic modification cannot be effected. Therefore, for the same reason as in the above description, a preferable setting temperature is 90˚C to 150˚C. The microwave with a frequency of 2.5 GHz is suitable for use. The terminal (meth) acrylic modification can be conducted usually in a short time of about 10 to 60 minutes by the microwave irradiation. Examples of mixed solutions to be subjected to this reaction include a reaction solution prepared from 3.8 percent by weight of hollow silica, 96 percent by weight of alcohol solvent (mixed solvent in which isopropyl alcohol to isobutyl alcohol is 1:4 (weight ratio)), 3 percent by weight of acetic acid, 1 percent by weight of water, and 0.04 percent by weight of silane coupling agent.

When the surface of the hollow silica is chemically modified with the above-described (meth)acrylic-terminated silane coupling agent, the hollow silica is strongly bonded to the binder component. Consequently, even when the amount of blending of the hollow silica is increased, a low refractive index layer exhibiting excellent abrasion resistance can be formed and, therefore, the refractive index of the low refractive index layer can be decreased by increasing the amount of blending of the hollow silica.

The surface of the hollow silica may be subjected to terminal fluoroalkyl modification with a fluoroalkyl-terminated silane coupling agent represented by the following General formula (V). In this case, it is preferable that the terminal fluoroalkyl modification with the fluoroalkyl-terminated silane coupling agent is conducted by a hydrothermal reaction method or microwave irradiation under a condition similar to that for the above-described terminal (meth)acrylic modification with the (meth)acrylic-terminated silane coupling agent.

[Chemical formula 4]

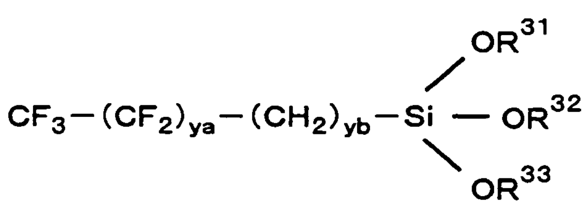

(V)

(In the above-described General formula (V), $R^{31}$ to $R^{33}$ independently represent a hydrogen atom or an alkyl group having the carbon number of 1 to 4, ya represents an integer of 1 to 8, and yb represents an integer of 1 to 3.) Examples of the above-described fluoroalkyl-terminated silane coupling agents include $C_8F_{17}$-$(CH_2)_2$-Si-$(OCH_3)_3$ and $C_6F_{13}$-$(CH_2)_2$-Si-$(OCH_3)_3$. These may be used alone, or at least two types thereof may be used in combination.

The antifouling property of the resulting low refractive index layer can be improved by chemically modifying the surface of the hollow silica by using the above-described fluoroalkyl-terminated silane coupling agent.

The low refractive index layer of the first aspect is formed by curing the above-described binder component through ultraviolet irradiation in the presence of a photopolymerization initiator. Examples of usable photopolymerization initiators include at least one type of Irgacure 184, 819, 651, 1173, 907, and the like produced by Ciba Specialty Chemicals K.K. Preferably, the amount of blending thereof is 3 to 10 phr relative to the binder component. If the amount of blending

of the photopolymerization initiator is less than this range, satisfactory cross-liking and curing cannot be conducted. If the amount is increased, the film strength of the low refractive index layer is reduced.

The low refractive index layer according to the first aspect is formed by applying a composition, in which the hollow silica, the polyfunctional (meth)acrylic compound serving as a binder component, and the photopolymerization initiator are mixed at a predetermined ratio, to the high refractive index layer or the electrically conductive high refractive index hard coat layer and curing the composition through ultraviolet irradiation in an atmosphere having an oxygen concentration of 0 to 10,000 ppm. Here, when the oxygen concentration in the ultraviolet irradiation atmosphere exceeds 1,000 ppm, the abrasion resistance is deteriorated significantly. Therefore, the oxygen concentration is specified to be 1,000 ppm or less, and preferably be 200 ppm or less.

Preferably, the thickness of the above-described low refractive index layer is 85 to 110 nm.

In the first aspect, it is preferable to apply an uncured resin composition (if necessary, the above-described fine particles are blended) and, subsequently, apply the ultraviolet ray when the hard coat layer 2, the high refractive index layer 3, and the low refractive index layer 4

are formed on the base film 1. In this case, individual layers may be applied and cured one after another. Alternatively, three layers or two layers may be applied and, thereafter, be cured at a time.

Specific examples of coating methods include a method in which a coating of a coating solution prepared by dissolving the binder component and the like into a solvent, e.g., toluene, is applied through gravure coating or the like, drying is conducted and, thereafter, curing is conducted with the ultraviolet ray. This wet coating method has an advantage that a film can be formed uniformly at a high speed and a low cost. Effects of improving the adhesion and increasing the film hardness are exerted by applying the ultraviolet ray to cure after the coating, and it becomes possible to continuously produce the antireflection film without the need for heating.

The above-described antireflection film of the first aspect is applied to a PDP of the OA equipment, a front filter of a liquid crystal plate, or a window material of a vehicle or a special building and, thereby, a good light transmission property and good durability can be ensured.

The first aspect will be more specifically described below with reference to Examples and Comparative examples.

In the following description, various characteristics and properties were evaluated as described below.

<Measurement of refractive index>

A composition for forming a low refractive index layer was applied to a PET film ("Toray Lumirror", film thickness 50 μm) provided with no easy-to-adhere layer in such a way that the thickness becomes about 1/4λ relative to the wavelength of light of 550 nm, and was cured. For the curing condition, the cumulative amount of ultraviolet irradiation was specified to be 300 mJ/cm$^2$ and the oxygen concentration during curing was specified to be 150 ppm. Subsequently, a black vinyl tape was adhered to a surface with no coating, and the reflectance was measured. The refractive index was determined by calculation from a minimum reflectance of the resulting reflection spectrum.

<Measurement of abrasion resistance (eraser resistance)>

A hard coat ("Z7503" produced by JSR) was applied to a TAC film ("TAC Film" produced by Fuji Photo Film Co., Ltd.) having a thickness of 50 μm and, thereafter, drying and curing were conducted, so that a hard coat layer having a thickness of 5 μm and a pencil hardness of 3H or harder was formed. For the curing condition, the cumulative amount of ultraviolet irradiation was specified to be 300 mJ/cm$^2$ and the oxygen concentration during curing was specified to be 150 ppm. Subsequently, a composition for forming a high refractive index layer ("Ei-3" produced by DAI NIPPON TORYO CO., LTD.) containing ITO fine particles, a polyfunctional acrylic compound, and a photopolymerization initiator was applied, dried, and cured, so that a high refractive index layer having a thickness of about 90 nm and a refractive index of 1.67 to 1.68 was formed. For the curing condition, the cumulative amount of ultraviolet irradiation was specified to be 300 mJ/cm$^2$ and the oxygen concentration during curing was specified to be 150 ppm.

The composition for forming a low refractive index layer was applied to the high refractive index layer, and drying and curing were conducted, so that a low refractive index layer having a thickness of about 95 nm was formed. For the curing condition, the cumulative amount of ultraviolet irradiation was specified to be 800 mJ/cm$^2$ and the oxygen concentration during curing was specified to be 150 ppm.

A surface (low refractive index layer surface) of the thus produced antireflection film (reflection color: purple) was rubbed by moving a plastic eraser to and fro with a loading pressure of about $4.9 \times 10^4$ N/m$^2$. When the low refractive index layer was broken, the reflection color changed gradually from purple to red to yellow. Therefore, the number of to-and-fro motions required until the first change of the color occurred was assumed to be the number of eraser resistance. When the number of eraser resistance was 100 times or more, the abrasion resistance was evaluated as good (O), and when less than 100 times, the abrasion resistance was evaluated as poor (x).

<Minimum reflectance>

A black tape was adhered to a back surface side (opposite to the film formation surface) of an antireflection film produced as in the above-described method for evaluating the abrasion resistance, and a reflection spectrum was measured at 5° specular reflection. The lowest reflectance at this time was assumed to be the minimum reflectance. The resulting minimum reflectance was 0.5% or less in every "Example".

<Chemical resistance>

Gauze was placed on the film formation surface side of an antireflection film produced as in the above-described method for evaluating the abrasion resistance, a few droplets of 3 percent by weight NaOH aqueous solution were dropped, a disposable cup was placed from above in order to prevent vaporization of water of the NaOH aqueous solution, and these were stood at 25°C for 30 minutes. Subsequently, the gauze was taken off, washing was conducted with pure water, and it was visually inspected whether the reflection color of the antireflection film changed. When the reflection color did not change, the chemical resistance was evaluated as good (○), and when the reflection color changed, the chemical resistance was evaluated as poor (×).

<Binder hardness>

A binder component was blended with 5 phr of photopolymerization initiator ("Irgacure 184 (Irgacure-184)" produced by Ciba Specialty Chemicals K.K.), and this was applied to a PET film "A4300", produced by Toyobo Co., Ltd., provided with easy-to-adhere layers on both surfaces. Subsequently, ultraviolet irradiation was conducted with a metal halide lamp at a cumulative amount of light of 1,000 $mJ/cm^2$ in an atmosphere having an oxygen concentration of 100 ppm to effect curing, so that a binder layer having a thickness of 8 μm was formed. The Vickers hardness of the resulting binder layer was measured with a microhardness tester produced by FISHERSCOPE at a depth of penetration of 1 μm.

<Antifouling property>

A line was drawn with Magic Ink McKee extra fine (red) produced by ZEBRA CO., Ltd., on the film formation surface side of an antireflection film produced as in the above-described method for evaluating the abrasion resistance. When the magic pen was rejected, the antifouling property was evaluated as good (○), and when the magic pen was not rejected, the antifouling property was evaluated as poor (×).

The hollow silica having an average particle diameter of 60 nm and a refractive index n of about 1.30 or less was used.

[ EXAMPLES]

With respect to the antireflection film of the first aspect, Experimental examples will be described below to verify an effect of improving the performance on a specification basis.

Experimental example 1

The hardnesses of binder components shown in Table 1 were measured by the above-described method in order to evaluate the binder components.

This binder component was blended with 5 phr of photopolymerization initiator "Irgacure-184", and hollow silica was added thereto in such a way that the total of photopolymerization initiator and binder component:hollow silica = 62.5:37.5 (percent by weight) was satisfied. The abrasion resistance and the chemical resistance of the resulting composition for forming a low refractive index layer were examined and the results thereof are shown in Table 1.

[Table 1]

| No | Binder component | | | Binder | Chemical resistance | Abrasion resistance | |
|---|---|---|---|---|---|---|---|
| | Type | The number of functional groups | Molecular weight | Hardness ($N/mm^2$) | | The number of eraser resistance (time) | Evaluation |
| 1 | 2-hydroxyethyl acrylate *1 | 1 | 116 | measurement was impossible | × | 1 | × |
| 2 | dimethylol-tricyclodeeane diacrylate *1 | 2 | 328 | 318 | O | 5 | × |
| 3 | trimethylolpropane triacrylate *1 | 3 | 296 | 356 | ○ | 20 | × |
| 4 | pentaerythritol triacrylate *1 | 3 | 298 | 423 | ○ | 30 | × |
| 5 | pentaerythritol tetraacrylate *1 | 4 | 352 | 419 | ○ | 100 | ○ |
| 6 | dipentaerythritol hexaacrylate | 6 | 580 | 476 | ○ | 175 | ○ |
| 7 | U-15HA *2 | 15 | 2076 | 473 | ○ | 35 | × |
| 8 | EA-6320 *3 | 3 | 924 | 291 | ○ | 2 | × |
| 9 | U-6HPA *4 | 6 | 818 | 156 | ○ | 25 | × |

*1: Produced by Kyoeisha Chemical Co., Ltd.
*2: Produced by SHIN-NAKAMURA CHEMICAL CO., LTD. (pentadecafunctional, high-hardness type acrylic oligomer)
*3: Produced by SHIN-NAKAMURA CHEMICAL CO., LTD. (not high-hardness type)
*4: Produced by SHIN-NAKAMURA CHEMICAL CO., LTD. (high-hardness type urethane acrylate)

The following facts are made clear from Table 1. For the binder component, it is not always better that the number of functional groups is increased. When the molecular weight is increased, since the number of functional groups is significantly increased, the abrasion resistance is deteriorated in spite of the fact that the hardness is increased. Therefore, although it is better that the number of functional groups is increased, it is clear that the performance as the binder of hollow silica becomes deteriorated if the molecular weight exceeds some level.

Consequently, it is clear that the hexafunctional or tetrafunctional (meth)acrylic compound represented by the above-described General formula (I) or (II) is very suitable for the binder of the hollow silica. In every case, the chemical resistance was evaluated as good.

Experimental example 2

The hollow silica was subjected to a pretreatment shown in Table 2 by a method described below, in order to evaluate the pretreatment of the hollow silica. An acryl-modified silane compound "KBM-5103" ($CH_2$=CH-COO-$(CH_2)_3$-Si-$(OCH_3)_3$) produced by Shin-Etsu Chemical Co., Ltd., was used as the silane coupling agent.

Pretreatment method (1): A reaction solution prepared from 3.8 percent by weight of hollow silica, 96 percent by weight of alcohol solvent (mixed solvent in which isopropyl alcohol to isobutyl alcohol was 19:81 (weight ratio)), 3 percent by weight of acetic acid, 1 percent by weight of water, and 0.04 percent by weight of silane coupling agent was put into a PTFE (polytetrafluoroethylene)-lining pressure-resistant stainless steel container, and hydrothermal synthesis was conducted at a temperature shown in Table 2 for 4 hours.

Pretreatment method (2): A reaction solution prepared as in the above-described Pretreatment method (1) was put into a microwave generator produced by TOKYO ELECTORONICS CO., LTD., and a microwave with a frequency of 2.5 GHz was applied for 15 minutes at a set temperature shown in Table 2. Since the reaction was conducted with

a microwave generator of an open system, the reaction solvent was brought to a boil.

Pretreatment method (3): A reaction solution was prepared as in the above-described Pretreatment method (1) and, thereafter, no energy was provided thereto.

Silica fine particles having no void ("IPA-ST" (particle diameter 10 to 20 nm) produced by Nissan Chemical Industries, Ltd.) were prepared separately. The silica fine particles were also subjected to the pretreatment as in the above-described Pretreatment method (1).

The hollow silica not subjected to the pretreatment, the hollow silica subjected to the pretreatment, the silica fine particles not subjected to the pretreatment, and the silica fine particles subjected to the pretreatment were used. With respect to each of them, dipentaerythritol hexaacrylate, the abrasion resistance of which was evaluated as the best in Experimental example 1, was used as a binder component, this binder component was blended with 5 phr of photopolymerization initiator "Irgacure-184", and a composition for forming a low refractive index layer was prepared in such a way that the total of photopolymerization initiator and binder component:fine particles (hollow silica or silica fine particles) = 55:45 (weight ratio) was satisfied. The refractive index, the chemical resistance, and the abrasion resistance were examined by the above-described methods. The results thereof are shown in Table 2.

[Table 2]

| No | Type of fine particles | Surface treatment | Surface treatment method | | Refractive index | Chemical resistance | The number of eraser resistance (time) | Overall evaluation |
|---|---|---|---|---|---|---|---|---|
| | | | Method | Set temperature (° C) | | | | |
| 1 | Silica fine particles | None | - | - | 1.50 | ○ | > 500 | × |
| 2 | Silica fine particles | Yes | (1) hydrothermal | 120 | 1.50 | ○ | > 500 | × |
| 3 | Hollow silica | None | - | - | 1.42 | ○ | 25 | × |
| 4 | Hollow silica | Yes | (3) without reaction | - | 1.42 | ○ | 25 | × |
| 5 | Hollow silica | Yes | (1) hydrothermal | 70 | 1. 42 | ○ | 30 | × |
| 6 | Hollow silica | Yes | (1) hydrothermal | 120 | 1. 42 | ○ | 125 | ○ |
| 7 | Hollow silica | Yes | (1) hydrothermal | 150 | 1.42 | ○ | 100 | ○ |
| 8 | Hollow silica | Yes | (2) microwave | 80 | 1.42 | ○ | 20 | × |
| 9 | Hollow silica | Yes | (2) microwave | 105 | 1.42 | ○ | 100 | ○ |

The following facts are made clear from Table 2.

In Nos. 1 and 2, silica fine particles having no void are used. Although the abrasion resistance is very good regardless of with or without the pretreatment, the refractive index is not decreased. Therefore it is clear that the silica fine particles having no void are unsuitable for the low refractive index material.

In the case where the hollow silica is used, the refractive index of the low refractive index layer becomes very low as in No. 3, but when the proportion of the hollow silica is increased, the film strength is reduced and the abrasion resistance becomes poor.

However, the film strength is hardly varied simply by blending the silane coupling agent into the hollow silica component as in No. 4.

Even when the hollow silica is reacted with the silane coupling agent by the hydrothermal method, the abrasion resistance is hardly varied at a reaction temperature of 70˚C as in No. 5. However, the abrasion resistance is significantly improved at a reaction temperature of 120˚C to 150˚C as in Nos. 6 and 7.

For the microwave, when the reaction was conducted at a set temperature of 80˚C, the abrasion resistance was hardly varied as in No. 8. On the other hand, when the reaction was conducted while the reaction temperature is set at a higher temperature, the abrasion resistance was significantly improved as in No. 9.

Therefore, it is made clear that a method for subjecting the hollow silica to terminal acrylic modification is useful as a method for improving the abrasion resistance of the low refractive index layer including the hollow silica, and the abrasion resistance can be significantly improved by adopting any one of the hydrothermal method and the microwave irradiation method.

The chemical resistance was good in every case.

Experimental example 3

In order to examine an effect of improving an antifouling property exerted by a fluorine based silane coupling agent, a pretreatment of the hollow silica was conducted by the hydrothermal method as in the above-described Pretreatment method (1) in Experimental example 2 by using a fluorine based silane coupling agent "KBM-7803" ($C_8F_{17}$-$(CH_2)_2$-Si-$(OCH_3)_3$) produced by Shin-Etsu Chemical Co., Ltd., at a reaction temperature of 120˚C.

Separately, hollow silica, in which the fluorine based silane coupling agent was added simply and no reaction was conducted, was also prepared as in Pretreatment method (3) in Experimental example 2.

The hollow silica not subjected to the pretreatment and the hollow silica subjected to the pretreatment were used. With respect to each of them, dipentaerythritol hexaacrylate, the abrasion resistance of which was evaluated as the best in Experimental example 1, was used as a binder component, this binder component was blended with 5 phr of photopolymerization initiator "Irgacure-184", and a composition for forming a low refractive index layer was prepared in such a way that the total of photopolymerization initiator and binder component:hollow silica = 62.5:37.5 (weight ratio) was satisfied. The refractive index, the chemical resistance, the abrasion resistance, and the antifouling property were examined by the above-described methods. The results thereof are shown in Table 3.

[Table 3]

| No | Surface treatment of hollow silica | Surface treatment method | Refractive index | The number of eraser resistance (time) | Antifouling property | Chemical resistance | Overall evaluation |
|---|---|---|---|---|---|---|---|
| 1 | None | - | 1. 432 | 175 | × | ○ | ○ |
| 2 | Yes | (3) without reaction | 1.428 | 90 | ○ | ○ | × |
| 3 | Yes | (2) hydrothermal | 1. 428 | 120 | ○ | ○ | ◎ |

As is clear from Fig. 3, since the amount of blending of the hollow silica was slightly decreased in No. 1, although the abrasion resistance is very good, the antifouling property is poor, and when the fluorine based silane coupling agent is added without reaction as in No. 2, the antifouling property becomes good, but the film strength is reduced. When the fluorine based silane coupling agent is reacted with the hollow silica and, thereby, the hollow silica is modified, the antifouling property is imparted and, in addition, the film strength is increased, as in No. 3. Furthermore, the refractive index is also improved.

The chemical resistance was good in every case.

Experimental example 4

In order to examine effects of the fluorine-containing difunctional (meth)acrylic compound and the fluorine-containing polyfunctional (meth)acrylic compound, blending components shown in Table 4 were mixed with dipentaerythritol hexaacrylate, the abrasion resistance of which was evaluated as the best in Experimental example 1, in such a way that blending components:dipentaerythritol hexaacrylate = 10:90 (weight ratio) was satisfied so as to constitute a binder component, the resulting binder component was blended with 5 phr of photopolymerization initiator "Irgacure-184", and a composition for forming a low refractive index layer was prepared in such a way that the total of photopolymerization initiator and binder component:hollow silica = 70:30 (weight ratio) was satisfied (although in No. 1, dipentaerythritol hexaacrylate was used alone and the total of photopolymerization initiator and binder component:hollow silica = 62.5:37.5 (weight ratio) was satisfied). The refractive index, the abrasion resistance, and the antifouling property were examined by the above-described methods. The results thereof are shown in Table 4.

[Table 4]

| No | Blending component | Refractive index | The number of eraser resistance (time) | Antifouling property | Overall evaluation |
|---|---|---|---|---|---|
| 1 | - | 1.43 | 175 | × | ○ |
| 2 | $CH_2$=CH-COO-$CH_2$-$CF_3$ | 1.43 | 50 | × | × |
| 3 | $CH_2$=CH-COO-$CH_2$-$C_8F_{17}$ | 1.42 | 20 | ○ | × |
| 4 | fluorine-containing difunctional (meth) acrylic | 1.43 | 125 | ○ | ○ |
| 5 | difunctional monomer (molecular weight about 300) | 1.43 | 35 | ○ | × |
| 6 | difunctional monomer 400) (molecular weight about 400) | 1.43 | 5 | ○ | × |
| 7 | trifunctional monomer (molecular weight about 400) | 1.43 | 100 | ○ | × |
| 8 | trifunctional monomer (molecular weight about 500) | 1.43 | 100 | ○ | ○ |
| 9 | tetrafunctional monomer (molecular weight about 600) | 1.43 | 100 | ○ | ○ |
| 10 | hexafunctional monomer (molecular weight about 1000) | 1. 43 | 100 | ○ | ○ |

The following facts are made clear from Table 4.

For No. 1 in which no blending component is contained, the abrasion resistance is satisfactory, but the antifouling property is poor. For Nos. 2 and 3 in which monofunctional fluorine based acrylic monomers are blended and for Nos. 5 and 6 in which difunctional acrylic monomers are blended, the abrasion resistance becomes very low. On the other hand, for Nos. 4 and 7 to 10 in which a fluorine-containing difunctional (meth)acrylic compound represented by General formula (III) or fluorine-containing polyfunctional (meth)acrylic compounds according to the present invention are blended, it is clear that the abrasion resistance can be improved and, in addition, the antifouling property can be attained.

[COMPARATIVE EXAMPLES]

Comparative experimental example 1

Experiments were conducted in order to examine the film strength and the chemical resistance when low refractive index layers were formed by using silicone based binder components as in the above-described Japanese Unexamined Patent Application Publication No. 2003-202406 and Japanese Unexamined Patent Application Publication No. 2003-202960.

A method for preparing the binder component is as described below.

First, 356 parts by weight of methanol was added to 208 parts by weight of methyltriethoxysilane, ethyltriethoxysilane, or tetraethoxysilane, 18 parts by weight of water and 18 parts by weight of 0.01N hydrochloric acid ([$H_2O$] :[OR] = 0.5) were further mixed, and these were agitated. The resulting mixed solution was agitated in a constant temperature bath at 25˚C for 2 hours. Subsequently, the resulting silicone based binder and the hollow silica were mixed, in such a way that binder:hollow silica = 65:35 (weight ratio) was satisfied. Furthermore, dilution with isopropyl alcohol was conducted in such a way that a total solid content becomes 8 percent by weight and, thereby, a composition for forming a low refractive index layer was produced.

The chemical resistance and the abrasion resistance (the number of eraser resistance) were examined as in the above-described Experimental example except that the resulting composition for forming a low refractive index layer was applied to a high refractive index layer and a heat treatment was conducted at 120˚C for 30 minutes. The results are shown in Table 5.

[Table 5]

| No. | Binder component | Chemical resistance | The number of eraser resistance (time) | Overall evaluation |
|---|---|---|---|---|
| 1 | methyltriethoxysilane | × | 15 | × |
| 2 | ethyltriethoxysilane | × | 15 | × |
| 3 | tetraethoxysilane | × | 25 | × |

As is clear from Table 5, when the silicone based binder component is used, only low refractive index layers exhibiting significantly poor abrasion resistance can be formed.

Comparative experimental example 2

Experiments were conducted in order to examine the abrasion resistance, the chemical resistance, and the antireflection performance in the case where low refractive index layers were formed directly on base materials, as proposed in the above-described Japanese Unexamined Patent Application Publication No. 2003-261797, Japanese Unexamined Patent Application Publication No. 2003-262703, and Japanese Unexamined Patent Application Publication No. 2003-266602.

Various polyfunctional acrylates and the hollow silica were mixed on transparent base materials in such a way that polyfunctional acrylate:hollow silica = 65:35 (weight ratio) was satisfied by the methods described in these patent documents and, thereby, compositions for forming a low refractive index layer were produced. The resulting composition for forming a low refractive index layer was applied to a PET film "A4100" produced by Toyobo Co., Ltd., and provided with an easy-to-adhere layer, and was cured in an indoor atmosphere at a cumulative amount of ultraviolet irradiation of 800 $mJ/cm^2$, so that a low refractive index layer having a film thickness of 95 nm was formed. The oxygen concentration during curing was about 20%.

The abrasion resistance (the number of eraser resistance) and the chemical resistance of the antireflection film in which the low refractive index layer was formed directly on the PET film, as described above, were examined by

the above-described methods. The results are shown in Table 6.

The minimum reflectance measured by the above-described method exceeded 1.0% for every film and, therefore, it was ascertained that the antireflection performance was poor.

[Table 6]

| No | Binder component | | The number of eraser resistance (time) | Chemical resistance | Overall evaluation |
|---|---|---|---|---|---|
| | Type | The number of functional groups | | | |
| 1 | ethylene glycol diacrylate | 2 | <10 | × | the antireflection performance is low and, furthermore, the abrasion resistance and the chemical resistance are poorer than those where silicone based binder is used |
| 2 | 1,6-hexanediol diacrylate | 2 | <10 | × | |
| 3 | trimethylolpropane triacrylate | 3 | <10 | × | |
| 4 | pentaerythritol tetraacrylate | 4 | <10 | × | |
| 5 | dipentaerythritol hexaacrylate | 6 | <10 | × | |

As is clear from Table 6, the product in which the low refractive index layer is formed directly on the base material surface exhibits low antireflection performance. Furthermore, the adhesion between the base material surface and the low refractive index layer is poor, the abrasion resistance was deteriorated as compared with that in the case where the silicone based binder was used. Therefore, it was ascertained that the abrasion resistance was not able to be ensured at all by simply mixing the polyfunctional acrylic resin with the hollow silica and the chemical resistance was poor.

Comparative experimental example 3

From the results of Comparative experimental example 2, the inventors of the present invention assumed that the film configuration, in which the low refractive index layer was formed directly on the base material surface, caused the poor performance, and conducted an experiment in which the film configuration was changed.

A hard coat ("Z7503" produced by JSR) was applied to a TAC film ("TAC Film" produced by Fuji Photo Film Co., Ltd.) having a thickness of 50 μm and, thereafter, drying and curing were conducted, so that a hard coat layer having a thickness of 5 μm and a pencil hardness of 3H or harder was formed. For the curing condition, the cumulative amount of ultraviolet irradiation was specified to be 300 $mJ/cm^2$ and the oxygen concentration during curing was specified to be 150 ppm. Subsequently, a composition for forming a high refractive index layer ("Ei-3" produced by DAI NIPPON TORYO CO., LTD.) containing ITO fine particles, a polyfunctional acrylic compound, and a photopolymerization initiator was applied, dried, and cured, so that a high refractive index layer having a thickness of about 90 nm and a refractive index of 1.67 to 1.68 was formed. For the curing condition, the cumulative amount of ultraviolet irradiation was specified to be 300 $mJ/cm^2$ and the oxygen concentration during curing was specified to be 150 ppm.

Each of the compositions for forming a low refractive index layer prepared in Comparative experimental example 2 was applied to the high refractive index layer, and drying and curing were conducted, so that a low refractive index layer having a thickness of about 95 nm was formed. For the curing condition, the cumulative amount of ultraviolet irradiation was 800 $mJ/cm^2$ and the oxygen concentration during curing was about 20% that was the indoor atmosphere.

The abrasion resistance (the number of eraser resistance) and the chemical resistance of the thus produced antireflection film (reflection color: purple) were examined by the above-described methods. The results are shown in Table 7.

The minimum reflectance measured by the above-described method was 0.5% or less for every film and, therefore, it was ascertained that the antireflection performance was improved.

[Table 7]

| No | Binder component | | The number of eraser resistance (time) | Chemical resistance | Overall evaluation |
|---|---|---|---|---|---|
| | Type | The number of functional groups | | | |
| 1 | ethylene glycol diacrylate | 2 | <10 | × | the antireflection performance was improved, but the abrasion resistance and the chemical resistance remained at low levels |
| 2 | 1,6-hexanediol diacrylate | 2 | <10 | × | |
| 3 | trimethylolpropane triacrylate | 3 | <10 | × | |
| 4 | pentaerythritol tetraacrylate | 4 | <10 | × | |
| 5 | dipentaerythritol hexaacrylate | 6 | <11 | × | |

As is clear from Table 7, the antireflection performance was improved as compared with that in Comparative experimental example 3 in which the low refractive index layer was formed directly on the base material, and the abrasion resistance was slightly improved due to an improvement in adhesion of the low refractive index layer. However, the abrasion resistance was a far cry from the commercial level suitable for the antireflection film, and the chemical resistance was also poor.

From comparisons between the above-described Experimental examples and Comparative experimental examples, it was ascertained that the abrasion resistance, the chemical resistance, and the antifouling property were effectively improved not only by using the hollow silica as the fine particles and using the (meth)acrylic compound of difunctional or more as the binder component, but also specifying the film configuration to be transparent base film/hard coat layer/high refractive index layer/low refractive index layer and, furthermore, curing the low refractive index layer by ultraviolet irradiation under an low oxygen concentration condition, such as the oxygen concentration of 0 to 10,000 ppm, according to the first aspect.

IV. Embodiments of second aspect

The embodiments of an electromagnetic wave shielding light transmitting window material and a gas discharge type light emitting panel prepared according to the second aspect will be described below.

The entire configuration itself of the electromagnetic wave shielding light transmitting window material or the gas discharge type light emitting panel prepared by the second aspect can be the same as the configuration of a known electromagnetic wave shielding light transmitting window material or a known gas discharge type light emitting panel. Examples of electromagnetic wave shielding light transmitting window materials and gas discharge type light emitting panels include an electromagnetic wave shielding light transmitting window material shown in Fig. 3a and a gas discharge type light emitting panel shown in Fig. 3b, in which the antireflection film adopting the low refractive index layer prepared according to the second aspect is used as the antireflection film.

This antireflection film will be described below with reference to Fig. 2.

This antireflection film 80 includes a hard coat layer 82, a high refractive index layer 83, and a low refractive index layer 84, which are laminated in that order on a transparent base film 81, an adhesive layer 85 is disposed on a surface opposite to the lamination surface, and a mold release film 86 is adhered. When this antireflection film 80 is applied to the electromagnetic wave shielding light transmitting window material shown in Fig. 3a and the gas discharge type light emitting panel shown in Fig. 3b, it is essential only that the mold release film 86 of the antireflection film 80 is peeled off and the antireflection film 80 is adhered to an outermost surface of the electromagnetic wave shielding light transmitting window material or the gas discharge type light emitting panel by using the adhesive layer 85.

In the second aspect, examples of the base film 81 include transparent films of polyester, polyethylene terephthalate (PET), polybutylene terephthalate, polymethyl methacrylate (PMMA), acrylic, polycarbonate (PC), polystyrene, cellulose triacetate (TAC), polyvinyl alcohol, polyvinyl chloride, polyvinylidene chloride, polyethylene, ethylene-vinyl acetate copolymer, polyurethane, and cellophane, and preferably of PET, PC, and PMMA.

The thickness of the base film 81 is usually specified to be within the range of 100 to 188 $\mu$m.

Preferably, the hard coat layer 82 is a synthetic resin based layer. In particular, a combination of an ultraviolet curing type synthetic resin, most of all, a polyfunctional acrylic resin, and silica fine particles is suitable. Preferably, the

thickness of this hard coat layer 82 is 2 to 20 μm.

Preferably, the high refractive index layer 83 is of an ultraviolet curing type and contains metal oxide fine particles and a binder component having an aromatic group. Examples of binder components having an aromatic group include epoxy acrylate, urethane acrylate, and bisphenol A-containing acrylate resin. Preferably, metal oxide fine particles are at least one type of high refractive index metal oxide fine particles selected from the group consisting of ITO, $TiO_2$, $ZrO_2$, $CeO_2$, $Al_2O_3$, $Y_2O_3$, $La_2O_3$, and $Ho_2O_3$. The $TiO_2$ fine particles and the ITO fine particles are particularly preferable.

In the high refractive index layer 83, with respect to the ratio of the metal oxide fine particles to the binder component, if the metal oxide fine particles are excessive and a shortage of the binder component occurs, the film strength of the high refractive index layer is reduced, and conversely, if the metal oxide fine particles are few, the refractive index cannot be increased satisfactorily. Therefore, it is preferable that the ratio of the metal oxide fine particles to the total of the metal oxide fine particles and the binder component is specified to be 10 to 60 percent by volume, in particular, 20 to 50 percent by volume.

Preferably, the thickness of the above-described high refractive index layer 83 is about 80 to 100 nm. It is preferable that the high refractive index layer 83 has a refractive index of 1.65 or more, in particular, 1.66 to 1.85. In this case, when the refractive index of the low refractive index layer 84 is specified to be 1.39 to 1.47, an antireflection film having excellent antireflection performance can be produced, wherein the minimum reflectance of the surface reflectance is 1% or less. In particular, when the refractive index of the low refractive index layer 84 is specified to be 1.45 or less, the antireflection performance can be further improved, and an antireflection film exhibiting the minimum reflectance of the surface reflectance of 0.5% or less can also be produced.

The low refractive index layer 84 is formed from a coating film cured by ultraviolet irradiation in an atmosphere having an oxygen concentration of 0 to 10,000 ppm, the coating film containing hollow silica, a binder component composed of a polyfunctional (meth)acrylic compound, and a photopolymerization initiator.

The hollow silica refers to hollow shell-shaped silica fine particles. Preferably, the average particle diameter thereof is 10 to 200 nm, and particularly is 10 to 150 nm. If the average particle diameter of this hollow silica is less than 10 nm, it is difficult to decrease the refractive index of the hollow silica. If the average particle diameter exceeds 200 nm, the light is reflected diffusely, and problems occur in that, for example, the surface roughness of the resulting low refractive index layer is increased.

The hollow silica includes air having a low refractive index (refractive index = 1.0) in the inside of the hollow and, therefore, the refractive index thereof is significantly low as compared with that of common silica (refractive index = 1.46). The refractive index of the hollow silica is determined based on the volume ratio of its hollow portion. Preferably, the refractive index is usually about 1.20 to 1.40.

The refractive index: n(hollow silica) of the hollow silica is determined from the refractive index: n(silica) of the silica constituting the shell portion of the hollow fine particle and the refractive index: n(air) of the air in the inside, as described below.

$$n(\text{hollow silica}) = n(\text{silica}) \times \text{volume fraction of silica} + n(\text{air}) \times \text{volume fraction of air}$$

As described above, n(silica) is about 1.47, and n(air) is a very low 1.0. Therefore, the refractive index of the above-described hollow silica becomes very low.

The refractive index: n(low refractive index layer) of the low refractive index layer prepared according to the second aspect by using the above-described hollow silica is determined from the refractive index: n(hollow silica) of the hollow silica and the refractive index: n(binder) of the binder component, as described below.

$$n(\text{low refractive index layer}) = n(\text{hollow silica}) \times \text{volume ratio of hollow silica in low refractive index layer} + n(\text{binder}) \times \text{volume ratio of binder in low refractive index layer}$$

Here, since the refractive index of the binder is generally about 1.50 to 1.55 except for specific fluorine-containing

acrylic binders, an important requirement for decreasing the refractive index of the low refractive index layer is to increase the volume fraction of the hollow silica in the low refractive index layer.

In the second aspect, as the content of the hollow silica in the low refractive index layer is increased, a low refractive index layer having a lower refractive index can be formed and, thereby, an antireflection film exhibiting excellent antireflection performance can be produced. On the other hand, since the content of the binder component is decreased correspondingly, the film strength of the low refractive index layer is reduced, and the abrasion resistance and the durability are reduced. However, the reduction of the film strength due to an increase of amount of blending of hollow silica can be compensated by a surface treatment of the hollow silica, and furthermore, the film strength can also be compensated by selection of the type of binder component to be blended.

In the second aspect, preferably, the hollow silica content in the low refractive index layer is specified to be 20 to 55 percent by weight, in particular, 30 to 50 percent by weight by the surface treatment of the hollow silica and selection of the binder component, so as to decrease the refractive index of the low refractive index layer to about 1.39 to 1.45 and ensure the abrasion resistance.

The polyfunctional (meth)acrylic compound serving as a binder component of the low refractive index layer of the fourth aspect will be described below.

Preferably, the content of the polyfunctional (meth)acrylic compound is 50 percent by weight or more, in particular, 90 percent by weight or more, in the entire binder components.

Examples of hexafunctional (meth)acrylic compounds represented by the above-described General formula (I) include dipentaerythritol hexaacrylate, and ethylene oxide adducts of dipentaerythritol hexaacrylate in which fluorine may substitute for H of ethylene oxide. These may be used alone, or at least two types thereof may be used in combination.

Examples of tetrafunctional (meth)acrylic compounds represented by the above-described General formula (II) include pentaerythritol tetraacrylate, and ethylene oxide adducts (1 to 8) of pentaerythritol tetraacrylate in which fluorine may substitute for H of ethylene oxide. These may be used alone, or at least two types thereof may be used in combination.

At least one type of the hexafunctional (meth)acrylic compounds represented by the above-described General formula (I) and at least one type of the tetrafunctional (meth)acrylic compounds represented by the above-described General formula (II) may be used in combination as the binder component.

The polyfunctional (meth)acrylic compounds represented by the above-described General formulae (I) and (II), in particular, the hexafunctional (meth)acrylic compounds represented by the above-described General formula (I), exhibit high hardness and excellent abrasion resistance and, therefore, are effective at forming a low refractive index layer exhibiting high abrasion resistance.

In the second aspect, it is preferable that a fluorine-containing difunctional (meth)acrylic compound represented by the following General formula (III) or a specific fluorine-containing polyfunctional (meth)acrylic compound is used in combination with the hexafunctional (meth)acrylic compound represented by the above-described General formula (I) and/or the tetrafunctional (meth)acrylic compound represented by the above-described General formula (II) as the binder components. The low refractive index layer can be provided with the abrasion resistance and the antifouling property by using these binder components. Furthermore, these binder components have refractive indices lower than those of the hexafunctional (meth)acrylic compounds represented by the above-described General formula (I) and the tetrafunctional (meth)acrylic compounds represented by the above-described General formula (II) and, therefore, a low refractive index layer having a low refractive index can be formed even when the amount of blending of the hollow silica is reduced.

$$A^a\text{-O-}(CH_2)_{xa}\text{-Rf-}(CH_2)_{xb}\text{-O-}A^b \qquad \text{(III)}$$

(In the above-described General formula (III), $A^a$ and $A^b$ independently represent an acryloyl group, a methacryloyl group, an $\alpha$-fluoroacryloyl group, or a trifluoromethacryloyl group, Rf represents a perfluoroalkylene group, and xa and xb independently represent an integer of 0 to 3.)

Examples of fluorine-containing difunctional (meth)acrylic compounds represented by the above-described General formula (III) include 2,2,3,3,4,4-hexafluoropentane glycol·diacrylate. These may be used alone or at least two types may be used in combination.

The above-described specific polyfunctional (meth)acrylic compounds, that is, trifunctional to hexafunctional (meth)acrylic compounds having at least 6 fluorine atoms in a molecule and a molecular weight of 1,000 or less and hexafunctional to pentadecafunctional (meth)acrylic compounds having at least 10 fluorine atoms in a molecule and a molecular weight of 1,000 to 5,000, may also be used alone or at least two types may also be used in combination.

At least one type of the above-described fluorine-containing difunctional (meth)acrylic compounds and at least one type of the fluorine-containing polyfunctional (meth)acrylic compounds may be used in combination.

The refractive index of the low refractive index layer can be decreased and the antifouling property can be improved by using the above-described fluorine-containing difunctional (meth)acrylic compound. However, if the amount of blending thereof is excessive, the abrasion resistance is deteriorated. Therefore, it is preferable that the fluorine-containing difunctional (meth)acrylic compound is blended by 5 percent by weight or more, in particular, 5 to 10 percent by weight into the entire binder components.

The refractive index of the low refractive index layer can also be decreased and the antifouling property can also be improved by using the above-described fluorine-containing polyfunctional (meth)acrylic compound. However, if the amount of blending thereof is excessive, the abrasion resistance is deteriorated. Therefore, it is preferable that the polyfunctional (meth)acrylic compound is blended by 5 percent by weight or more, in particular, 5 to 10 percent by weight into the entire binder components.

When the fluorine-containing difunctional (meth)acrylic compound and the fluorine-containing polyfunctional (meth)acrylic compound are used in combination, it is preferable that the fluorine-containing difunctional (meth)acrylic compound and the fluorine-containing polyfunctional (meth)acrylic compound are blended by 5 percent by weight or more in total, in particular, 5 to 10 percent by weight in total into the entire binder components.

The particle diameter of the hollow silica used in the second aspect is larger than the particle diameter of general silica fine particles (particle diameter about 5 to 20 nm) to be blended into a known low refractive index layer. Therefore, even when the same binder component is used, the film strength of the resulting low refractive index layer tends to become lower than that in the case where the silica fine particles are blended. However, the bonding force between the hollow silica and the binder component can be increased and the film strength of the resulting low refractive index layer can be increased by subjecting the hollow silica to an appropriate surface treatment, so that the abrasion resistance can be improved.

For the surface treatment of the hollow silica, it is preferable to subject the surface of the hollow silica to terminal (meth)acrylic modification with a (meth)acrylic-terminated silane coupling agent represented by the following General formula (IV).

[Chemical formula 16]

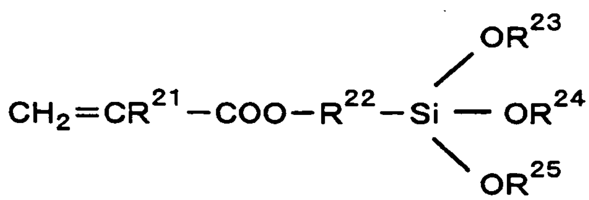

(IV)

(In the above-described General formula (IV), $R^{21}$ represents a hydrogen atom, a fluorine atom, or a methyl group, $R^{22}$ represents an alkylene group having the carbon number of 1 to 8 or a fluoroalkylene group having the carbon number of 1 to 8 in which at least one fluorine atom has substituted for at least one hydrogen atom, and $R^{23}$ to $R^{25}$ independently represent a hydrogen atom or an alkyl group having the carbon number of 1 to 4.)

Examples of the above-described (meth)acrylic-terminated silane coupling agents include $CH_2$=CH-COO-$(CH_2)_3$-Si-$(OCH_3)_3$ and $CH_2$=C($CH_3$)-COO-$(CH_2)_3$-Si-$(OCH_3)_3$. These may be used alone, or at least two types thereof may be used in combination.

In order to subject the surface of the hollow silica to terminal (meth)acrylic modification with the above-described (meth)acrylic-terminated silane coupling agent, it is preferable to subject a mixed solution of the hollow silica and the (meth)acrylic-terminated silane coupling agent to a hydrothermal reaction at 100˚C to 150˚C or to effect a reaction by irradiating this mixed solution with a microwave. That is, the surface chemical modification with the (meth)acrylic-terminated silane coupling agent cannot be effected by simply mixing the (meth)acrylic-terminated silane coupling agent and the hollow silica, and a desired surface reforming effect cannot be attained. If the reaction temperature is low in the hydrothermal reaction, satisfactory terminal (meth)acrylic modification cannot be effected. Conversely, if the reaction temperature is too high, the reactivity is reduced. Consequently, a preferable hydrothermal reaction temperature is 100˚C to 150˚C. The hydrothermal reaction time is usually about 0.1 to 10 hours, although it depends on the reaction temperature. On the other hand, when the microwave is used, if the setting temperature is too low, satisfactory terminal (meth)acrylic modification cannot be effected. Therefore, for the same reason as in the above description, a preferable setting temperature is 90˚C to 150˚C. The microwave with a frequency of 2.5 GHz is suitable for use. The terminal (meth)acrylic modification can be conducted usually in a short time of about 10 to 60 minutes by the microwave irradiation. Examples of mixed solutions to be subjected to this reaction include a reaction solution prepared from 3.8 percent by weight of hollow silica, 96 percent by weight of alcohol solvent (mixed solvent in which isopropyl alcohol to isobutyl alcohol is 1: 4 (weight ratio)), 3 percent by weight of acetic acid, 1 percent by weight of water, and 0.04 percent by weight of silane coupling agent.

When the surface of the hollow silica is chemically modified with the above-described (meth)acrylic-terminated silane coupling agent, the hollow silica is strongly bonded to the binder component. Consequently, even when the amount of blending of the hollow silica is increased, a low refractive index layer exhibiting excellent abrasion resistance can be formed and, therefore, the refractive index of the low refractive index layer can be decreased by increasing the amount of blending of the hollow silica.

The surface of the hollow silica may be subjected to terminal fluoroalkyl modification with a fluoroalkyl-terminated silane coupling agent represented by the following General formula (V). In this case, it is preferable that the terminal fluoroalkyl modification with the fluoroalkyl-terminated silane coupling agent is conducted by a hydrothermal reaction method or microwave irradiation under a condition similar to that for the above-described terminal (meth)acrylic modification with the (meth)acrylic-terminated silane coupling agent.

[Chemical formula 17]

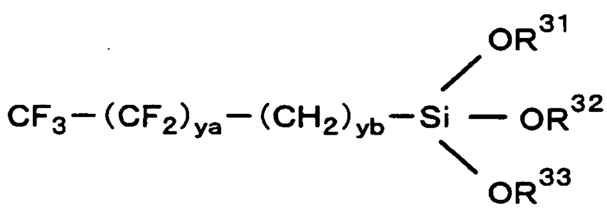

(V)

(In the above-described General formula (V), $R^{31}$ to $R^{33}$ independently represent a hydrogen atom or an alkyl group having the carbon number of 1 to 4, ya represents an integer of 1 to 8, and yb represents an integer of 1 to 3.)

Examples of the above-described fluoroalkyl-terminated silane coupling agents include $C_8F_{17}$-$(CH_2)_2$-Si-$(OCH_3)_3$ and $C_6F_{13}$-$(CH_2)_2$-Si-$(OCH_3)_3$. These may be used alone, or at least two types thereof may be used in combination.

The antifouling property of the resulting low refractive index layer can be improved by chemically modifying the surface of the hollow silica by using the above-described fluoroalkyl-terminated silane coupling agent.

The low refractive index layer of the second aspect is formed by curing the above-described binder component through ultraviolet irradiation in the presence of a photopolymerization initiator. Examples of usable photopolymerization initiators include at least one type of Irgacure 184, 819, 651, 1173, 907, and the like produced by Ciba Specialty Chemicals K.K. Preferably, the amount of blending thereof is 3 to 10 phr relative to the binder component. If the amount of blending of the photopolymerization initiator is less than this range, satisfactory cross-liking and curing cannot be conducted. If the amount is increased, the film strength of the low refractive index layer is reduced.

The low refractive index layer according to the second aspect is formed by applying a composition, in which the hollow silica, the polyfunctional (meth)acrylic compound serving as a binder component, and the photopolymerization initiator are mixed at a predetermined ratio, to the high refractive index layer or the electrically conductive high refractive index hard coat layer and curing the composition through ultraviolet irradiation in an atmosphere having an oxygen concentration of 0 to 10,000 ppm. Here, when the oxygen concentration in the ultraviolet irradiation atmosphere exceeds 1,000 ppm, the abrasion resistance is deteriorated significantly. Therefore, the oxygen concentration is specified to be 1,000 ppm or less, and preferably be 200 ppm or less.

Preferably, the thickness of the above-described low refractive index layer is 85 to 110 nm, in particular, about

100 nm.

In the second aspect, it is preferable to apply an uncured resin composition (if necessary, the above-described fine particles are blended) and, subsequently, apply the ultraviolet ray when the hard coat layer 82, the high refractive index layer 83, and the low refractive index layer 84 are formed on the base film 81. In this case, individual layers may be applied and cured one after another. Alternatively, three layers or two layers may be applied and, thereafter, be cured at a time.

Specific examples of coating methods include a method in which a coating of a coating solution prepared by dissolving the binder component and the like into a solvent, e.g., toluene, is applied through gravure coating or the like, drying is conducted and, thereafter, curing is conducted with the ultraviolet ray. This wet coating method has an advantage that a film can be formed uniformly at a high speed and a low cost. Effects of improving the adhesion and increasing the film hardness are exerted by applying the ultraviolet ray to cure after the coating, and it becomes possible to continuously produce the antireflection film without the need for heating.

Preferably, an adhesive of the adhesive layer 85 disposed on the back side of the base film 81 is a transparent adhesive of acrylic base or the like. In general, preferably, the thickness of the adhesive layer 85 is about 1 to 100 μm and, particularly, about 25 μm.

A film of about 20 to 175 μm thickness, particularly, about 35 μm thickness, formed from a material similar to that for the above-described base film and subjected to a surface mold-release treatment can be used as the mold release film 86.

The electromagnetic wave shielding light transmitting window material and the gas discharge type light emitting panel of the second aspect can be produced by using the antireflection film shown in Fig. 2 as the antireflection film used in, for example, the electromagnetic wave shielding light transmitting window material shown in Fig. 3a and the gas discharge type light emitting panel shown in Fig. 3b. In addition, for example, an electromagnetic wave shielding light transmitting window material and a gas discharge type light emitting panel, in which transparent substrates, e.g., glass substrates, are disposed on the outermost surface, can be produced by laminating and forming the above-described high refractive index layer and the low refractive index layer directly on the transparent substrate. In the case where an antireflection film is adhered to a transparent substrate, e.g., a glass substrate, on an outermost surface, this antireflection film may be the film shown in Fig. 2 in which the hard coat layer is not provided.

For the electromagnetic wave shielding light transmitting window material and the gas discharge type light emitting panel of the fourth aspect, it is possible to realize a high-visibility electromagnetic wave shielding light transmitting window material and a high-visibility gas discharge type light emitting panel having further excellent antireflection performance and antifouling property by conducting the following adjustments in the above-described antireflection film and the antireflection layer composed of a laminated film of the high refractive index layer and the low refractive index layer.

(1) An easy-to-adhere layer is disposed between the transparent base film and the hard coat layer. The easy-to-adhere layer is disposed to improve the adhesion of the hard coat layer to the base film. Usually, metal oxide fine particles, e.g., $SiO_2$, $ZrO_2$, $TiO_2$, or $Al_2O_3$, preferably, metal oxide fine particles having an average particle diameter of about 1 to 100 nm are blended to a thermosetting resin, e.g., a copolymerized polyester resin and a polyurethane based resin, so as to adjust the refractive index, and the resulting product is used. In the case where the cost becomes high due to blending of the metal oxide fine particles, it is also possible to adjust the refractive index by blending 0 to 50 percent by weight of polymer containing a high proportion of phenyl groups, bromine atoms, and sulfur atoms in the structure.

In this case, it is preferable that the refractive index of the hard coat layer is within the range of 1.48 to 1.55, and when the refractive index of the easy-to-adhere layer is assumed to be $n_a$, the refractive index of the transparent base film is assumed to be $n_b$, and the refractive index of the hard coat layer is assumed to be $n_{HC}$,

$$(n_b + n_{HC})/2 - 0.02 \leq n_a \leq (n_b + n_{HC})/2 + 0.02,$$

particularly $(n_b + n_{HC})/2 - 0.01 \leq n_a \leq (n_b + n_{HC})/2 + 0.01$, is satisfied, and the film thickness T of the easy-to-adhere layer 2 is within the range of

$$(550/4) \times (1/n_a) - 10\ nm \leq T \leq (550/4) \times (1/n_a) + 10\ nm,$$

particularly

$$(550/4) \times (1/n_a) - 5\ nm \le T \le (550/4) \times (1/n_a) + 5\ nm,$$

because a significantly excellent antireflection performance can be attained.

This has an effect of allowing the refractive index of the base film to become substantially equal to the refractive index of the hard coat layer with respect to the light wavelength of 550 nm. The effect is based on that the reflection between hard coat layer/base film is eliminated. In the fourth aspect, preferably, the easy-to-adhere layer is formed on the transparent base film during the molding of the transparent base film.

(2) At least one type of high refractive index fine particles selected from the fine particle group consisting of electrically conductive high refractive index fine particles composed of $SnO_2$ and ITO and ultra high refractive index fine particles composed of $TiO_2$, $ZrO_2$, and $CeO_2$ is used as high refractive index fine particles of the high refractive index layer. High refractive index fine particles having different particle diameters are used in combination in such a way that the average primary particle diameter of the high refractive index fine particles is 30 to 40 nm, the particle diameters are widely distributed centering the average primary diameter, the cumulative number of fine particles having a primary particle diameter of 30 nm or less is 20% or more, for example, 20% to 50%, relative to the entire fine particles, and the cumulative number of fine particles having a primary particle diameter of 45 nm or more is 20% or more, for example, 20% to 50%.

That is, it is important that the high refractive index layer contains a maximum proportion of high refractive index fine particles. When the high refractive index fine particles having different particle diameters are used in combination as described above, the amount of the high refractive index fine particles filled in the high refractive index layer is increased and, thereby, a high refractive index layer having a very high refractive index can be formed through high-density filling.

It is preferable that electrically conductive high refractive index fine particles and ultra high refractive index fine particles are used in combination as the high refractive index fine particles from the viewpoint of an improvement of the refractive index and maintenance of the antistatic property of the high refractive index layer. In particular, it is preferable that electrically conductive high refractive index fine particles:ultra high refractive index fine particles = 50 to 70:50 to 30 (volume ratio), especially 27:18 (volume ratio) is satisfied. If the electrically conductive high refractive index fine particles exceed this range, the refractive index of the high refractive index layer is decreased, and if the ultra high refractive index fine particles exceed this range, the antistatic effect cannot be exerted.

(3) The above-described fluorine-containing binder component is used as a binder component of the low refractive index layer, so as to improve the antifouling property.

(4) The film thickness of the high refractive index layer and the film thickness of the low refractive index layer are adjusted and, thereby, the reflection is reduced with respect to the average reflectance in the visible region and wavelengths at which lower reflection is required. An antireflection layer having antireflection characteristics suitable for the purpose is formed by using techniques, in which, for example, in the case where red is weak in light emission colors, the wavelength exhibiting a minimum reflectance (bottom wavelength) is allowed to shift to the longer wavelength side by increasing the film thickness of the high refractive index layer or increasing the film thickness of the low refractive index layer in such a way that the bottom wavelength is allowed to agree with the wavelength of the red light and the transmittance of red is improved, and conversely, in the case where blue is weak in light emission colors, the bottom wavelength is allowed to shift to the shorter wavelength side by decreasing the film thickness of the high refractive index layer or decreasing the film thickness of the low refractive index layer in such a way that the bottom wavelength is allowed to agree with the wavelength of the blue light and the transmittance of blue is improved.

V. Embodiments of third aspect

The embodiments of an flat display panel and a show window material prepared according to the third aspect will be described below.

The flat display panel and the show window material prepared according to the third aspect can have a configuration in which, for example, an antireflection film shown in Fig. 4 is adhered to the surface thereof.

This antireflection film 90 includes a hard coat layer 92, a high refractive index layer 93, and a low refractive index layer 94, which are laminated in that order on a base film 91, an adhesive layer 95 is disposed on a surface opposite to the lamination surface, and a mold release film 96 is adhered. When this antireflection film 90 is applied to a transparent substrate, e.g., a surface of a flat display panel or a glass substrate of a show window material, it is essential only that the mold release film 96 of the antireflection film 90 is peeled off and the antireflection film 90 is adhered to the transparent substrate, e.g., the surface of the flat display panel or the glass substrate of the show window material, by using the adhesive layer 95.

In the antireflection film 90, examples of the base film 91 include transparent films of polyester, polyethylene terephthalate (PET), polybutylene terephthalate, polymethyl methacrylate (PMMA), acrylic, polycarbonate (PC), polystyrene, cellulose triacetate (TAC), polyvinyl alcohol, polyvinyl chloride, polyvinylidene chloride, polyethylene, ethylene-vinyl acetate copolymer, polyurethane, and cellophane, and preferably of PET, PC, and PMMA.

The thickness of the base film 91 is usually specified to be within the range of 100 to 188 μm.

Preferably, the hard coat layer 92 is a synthetic resin based layer. In particular, a combination of an ultraviolet curing type synthetic resin, most of all, a polyfunctional acrylic resin, and silica fine particles is suitable. Preferably, the thickness of this hard coat layer 92 is 2 to 20 μm.

Preferably, the high refractive index layer 93 is of an ultraviolet curing type and contains metal oxide fine particles and a binder component having an aromatic group. Examples of binder components having an aromatic group include epoxy acrylate, urethane acrylate, and bisphenol A-containing acrylate resin. Preferably, metal oxide fine particles are at least one type of high refractive index metal oxide fine particles selected from the group consisting of ITO, $TiO_2$, $ZrO_2$, $CeO_2$, $Al_2O_3$, $Y_2O_3$, $La_2O_3$, and $Ho_2O_3$. The $TiO_2$ fine particles and the ITO fine particles are particularly preferable.

In the high refractive index layer 93, with respect to the ratio of the metal oxide fine particles to the binder component, if the metal oxide fine particles are excessive and a shortage of the binder component occurs, the film strength of the high refractive index layer is reduced, and conversely, if the metal oxide fine particles are few, the refractive index cannot be increased satisfactorily. Therefore, it is preferable that the ratio of the metal oxide fine particles to the total of the metal oxide fine particles and the binder component is specified to be 10 to 60 percent by volume, in particular, 20 to 50 percent by volume.

Preferably, the thickness of the above-described high refractive index layer 93 is about 80 to 100 nm. It is preferable that the high refractive index layer 93 has a refractive index of 1.65 or more, in particular, 1.66 to 1.85. In this case, when the refractive index of the low refractive index layer 94 is specified to be 1.39 to 1.47, an antireflection film having excellent antireflection performance can be produced, wherein the minimum reflectance of the surface reflectance is 1% or less. In particular, when the refractive index of the low refractive index layer 94 is specified to be 1.45 or less, the antireflection performance can be further improved, and an antireflection film exhibiting the minimum reflectance of the surface reflectance of 0.5% or less can also be produced.

In the third aspect, the low refractive index layer 94 is formed from a coating film cured by ultraviolet irradiation in an atmosphere having an oxygen concentration of 0 to 10,000 ppm, the coating film containing hollow silica, a binder component composed of a polyfunctional (meth)acrylic compound, and a photopolymerization initiator.

The hollow silica refers to hollow shell-shaped silica fine particles. Preferably, the average particle diameter thereof is 10 to 200 nm, and particularly is 10 to 150 nm. If the average particle diameter of this hollow silica is less than 10 nm, it is difficult to decrease the refractive index of the hollow silica. If the average particle diameter exceeds 200 nm, the light is reflected diffusely, and problems occur in that, for example, the surface roughness of the resulting low refractive index layer is increased.

The hollow silica includes air having a low refractive index (refractive index = 1.0) in the inside of the hollow and, therefore, the refractive index thereof is significantly low as compared with that of common silica (refractive index = 1.46). The refractive index of the hollow silica is determined based on the volume ratio of its hollow portion. Preferably, the refractive index is usually about 1.20 to 1.40.

The refractive index: n(hollow silica) of the hollow silica is determined from the refractive index: n(silica) of the silica constituting the shell portion of the hollow fine particle and the refractive index: n(air) of the air in the inside, as described below.

$$n(\text{hollow silica}) = n(\text{silica}) \times \text{volume fraction of silica} + n(\text{air}) \times \text{volume fraction of air}$$

As described above, n(silica) is about 1.47, and n(air) is a very low 1.0. Therefore, the refractive index of the above-described hollow silica becomes very low.

The refractive index: n(low refractive index layer) of the low refractive index layer according to the present invention by using the above-described hollow silica is determined from the refractive index: n(hollow silica) of the hollow silica and the refractive index: n(binder) of the binder component, as described below.

$$n(\text{low refractive index layer}) = n(\text{hollow silica}) \times \text{volume ratio of hollow silica in low refractive index layer} + n(\text{binder}) \times \text{volume ratio of binder in low refractive index layer}$$

Here, since the refractive index of the binder is generally about 1.50 to 1.55 except for specific fluorine-containing acrylic binders, an important requirement for decreasing the refractive index of the low refractive index layer is to increase the volume fraction of the hollow silica in the low refractive index layer.

In the third aspect, as the content of the hollow silica in the low refractive index layer is increased, a low refractive index layer having a lower refractive index can be formed and, thereby, an antireflection film exhibiting excellent antireflection performance can be produced. On the other hand, since the content of the binder component is decreased correspondingly, the film strength of the low refractive index layer is reduced, and the abrasion resistance and the durability are reduced. However, the reduction of the film strength due to an increase of amount of blending of hollow silica can be compensated by a surface treatment of the hollow silica, and furthermore, the film strength can also be compensated by selection of the type of binder component to be blended.

In the third aspect, preferably, the hollow silica content in the low refractive index layer is specified to be 20 to 55 percent by weight, in particular, 30 to 50 percent by weight by the surface treatment of.the hollow silica and selection of the binder component, so as to decrease the refractive index of the low refractive index layer to about 1.39 to 1.45 and ensure the abrasion resistance.

The polyfunctional (meth)acrylic compound serving as a binder component of the low refractive index layer of the fifth aspect will be described below.

Preferably, the content of the polyfunctional (meth)acrylic compound is 50 percent by weight or more, in particular, 90 percent by weight or more, in the entire binder components.

Examples of hexafunctional (meth)acrylic compounds represented by the above-described General formula (I) include dipentaerythritol hexaacrylate, and ethylene oxide adducts of dipentaerythritol hexaacrylate in which fluorine may substitute for H of ethylene oxide. These may be used alone, or at least two types thereof may be used in combination.

Examples of tetrafunctional (meth)acrylic compounds represented by the above-described General formula (II) include pentaerythritol tetraacrylate, and ethylene oxide adducts (1 to 8) of pentaerythritol tetraacrylate in which fluorine may substitute for H of ethylene oxide. These may be used alone, or at least two types thereof may be used in combination.

At least one type of the hexafunctional (meth)acrylic compounds represented by the above-described General formula (I) and at least one type of the tetrafunctional (meth)acrylic compounds represented by the above-described General formula (II) may be used in combination as the binder component.

The polyfunctional (meth)acrylic compounds represented by the above-described General formulae (I) and (II), in particular, the hexafunctional (meth)acrylic compounds represented by the above-described General formula (I), exhibit high hardness and excellent abrasion resistance and, therefore, are effective at forming a low refractive index layer exhibiting high abrasion resistance.

In the third aspect, it is preferable that a fluorine-containing difunctional (meth)acrylic compound represented by the following General formula (III) or a specific fluorine-containing polyfunctional (meth)acrylic compound is used in combination with the hexafunctional (meth)acrylic compound represented by the above-described General formula (I) and/or the tetrafunctional (meth)acrylic compound represented by the above-described General formula (II) as the binder components. The low refractive index layer can be provided with the abrasion resistance and the antifouling property by using these binder components. Furthermore, these binder components have refractive indices lower than those of the hexafunctional (meth)acrylic compounds represented by the above-described General formula (I) and the tetrafunctional (meth)acrylic compounds represented by the above-described General formula (II) and, therefore, a low refractive index layer having a low refractive index can be formed even when the amount of blending of the hollow silica is reduced.

$$A^a\text{-O-}(CH_2)_{xa}\text{-Rf-}(CH_2)_{xb}\text{-O-Ab}^b \qquad \text{(III)}$$

(In the above-described General formula (III), $A^a$ and $A^b$ independently represent an acryloyl group, a methacryloyl group, an $\alpha$-fluoroacryloyl group, or a trifluoromethacryloyl group, Rf represents a perfluoroalkylene group, and xa and xb independently represent an integer of 0 to 3.)

Examples of fluorine-containing difunctional (meth)acrylic compounds represented by the above-described

General formula (III) include 2,2,3,3,4,4-hexafluoropentane glycol·diacrylate. These may be used alone or at least two types may be used in combination.

The above-described specific polyfunctional (meth)acrylic compounds, that is, trifunctional to hexafunctional (meth)acrylic compounds having at least 6 fluorine atoms in a molecule and a molecular weight of 1,000 or less and hexafunctional to pentadecafunctional (meth)acrylic compounds having at least 10 fluorine atoms in a molecule and a molecular weight of 1,000 to 5,000, may also be used alone or at least two types may also be used in combination.

At least one type of the above-described fluorine-containing difunctional (meth)acrylic compounds and at least one type of the fluorine-containing polyfunctional (meth)acrylic compounds may be used in combination.

The refractive index of the low refractive index layer can be decreased and the antifouling property can be improved by using the above-described fluorine-containing difunctional (meth)acrylic compound. However, if the amount of blending thereof is excessive, the abrasion resistance is deteriorated. Therefore, it is preferable that the fluorine-containing difunctional (meth)acrylic compound is blended by 5 percent by weight or more, in particular, 5 to 10 percent by weight into the entire binder components.

The refractive index of the low refractive index layer can also be decreased and the antifouling property can also be improved by using the above-described fluorine-containing polyfunctional (meth)acrylic compound. However, if the amount of blending thereof is excessive, the abrasion resistance is deteriorated. Therefore, it is preferable that the polyfunctional (meth)acrylic compound is blended by 5 percent by weight or more, in particular, 5 to 10 percent by weight into the entire binder components.

When the fluorine-containing difunctional (meth)acrylic compound and the fluorine-containing polyfunctional (meth)acrylic compound are used in combination, it is preferable that the fluorine-containing difunctional (meth)acrylic compound and the fluorine-containing polyfunctional (meth)acrylic compound are blended by 5 percent by weight or more in total, in particular, 5 to 10 percent by weight in total into the entire binder components.

The particle diameter of the hollow silica used in the third aspect is larger than the particle diameter of general silica fine particles (particle diameter about 5 to 20 nm) to be blended into a known low refractive index layer. Therefore, even when the same binder component is used, the film strength of the resulting low refractive index layer tends to become lower than that in the case where the silica fine particles are blended. However, the bonding force between the hollow silica and the binder component can be increased and the film strength of the resulting low refractive index layer can be increased by subjecting the hollow silica to an appropriate surface treatment, so that the abrasion resistance can be improved.

For the surface treatment of the hollow silica, it is preferable to subject the surface of the hollow silica to terminal (meth)acrylic modification with a (meth)acrylic-terminated silane coupling agent represented by the following General formula (IV).

[Chemical formula 20]

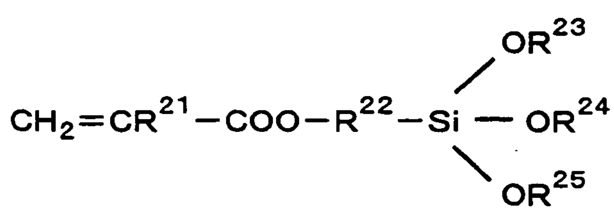

(IV)

(In the above-described General formula (IV), $R^{21}$ represents a hydrogen atom, a fluorine atom, or a methyl group, $R^{22}$ represents an alkylene group having the carbon number of 1 to 8 or a fluoroalkylene group having the carbon number of 1 to 8 in which at least one fluorine atom has substituted for at least one hydrogen atom, and $R^{23}$ to $R^{25}$ independently represent a hydrogen atom or an alkyl group having the carbon number of 1 to 4.)

Examples of the above-described (meth)acrylic-terminated silane coupling agents include $CH_2=CH-COO-(CH_2)_3-Si-(OCH_3)_3$ and $CH_2=C(CH_3)-COO-(CH_2)_3-Si-(OCH_3)_3$. These may be used alone, or at least two types

thereof may be used in combination.

In order to subject the surface of the hollow silica to terminal (meth)acrylic modification with the above-described (meth)acrylic-terminated silane coupling agent, it is preferable to subject a mixed solution of the hollow silica and the (meth)acrylic-terminated silane coupling agent to a hydrothermal reaction at 100˚C to 150˚C or to effect a reaction by irradiating this mixed solution with a microwave. That is, the surface chemical modification with the (meth)acrylic-terminated silane coupling agent cannot be effected by simply mixing the (meth)acrylic-terminated silane coupling agent and the hollow silica, and a desired surface reforming effect cannot be attained. If the reaction temperature is low in the hydrothermal reaction, satisfactory terminal (meth)acrylic modification cannot be effected. Conversely, if the reaction temperature is too high, the reactivity is reduced. Consequently, a preferable hydrothermal reaction temperature is 100˚C to 150˚C. The hydrothermal reaction time is usually about 0.1 to 10 hours, although it depends on the reaction temperature. On the other hand, when the microwave is used, if the setting temperature is too low, satisfactory terminal (meth)acrylic modification cannot be effected. Therefore, for the same reason as in the above description, a preferable setting temperature is 90˚C to 150˚C. The microwave with a frequency of 2.5 GHz is suitable for use. The terminal (meth)acrylic modification can be conducted usually in a short time of about 10 to 60 minutes by the microwave irradiation. Examples of mixed solutions to be subjected to this reaction include a reaction solution prepared from 3.8 percent by weight of hollow silica, 96 percent by weight of alcohol solvent (mixed solvent in which isopropyl alcohol to isobutyl alcohol is 1: 4 (weight ratio)), 3 percent by weight of acetic acid, 1 percent by weight of water, and 0.04 percent by weight of silane coupling agent.

When the surface of the hollow silica is chemically modified with the above-described (meth)acrylic-terminated silane coupling agent, the hollow silica is strongly bonded to the binder component. Consequently, even when the amount of blending of the hollow silica is increased, a low refractive index layer exhibiting excellent abrasion resistance can be formed and, therefore, the refractive index of the low refractive index layer can be decreased by increasing the amount of blending of the hollow silica.

The surface of the hollow silica may be subjected to terminal fluoroalkyl modification with a fluoroalkyl-terminated silane coupling agent represented by the following General formula (V). In this case, it is preferable that the terminal fluoroalkyl modification with the fluoroalkyl-terminated silane coupling agent is conducted by a hydrothermal reaction method or microwave irradiation under a condition similar to that for the above-described terminal (meth)acrylic modification with the (meth)acrylic-terminated silane coupling agent.

[Chemical formula 21]

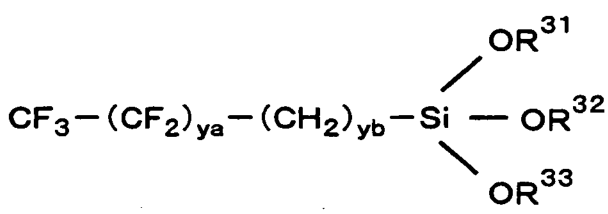

(V)

(In the above-described General formula (V), $R^{31}$ to $R^{33}$ independently represent a hydrogen atom or an alkyl group having the carbon number of 1 to 4, ya represents an integer of 1 to 8, and yb represents an integer of 1 to 3.)

Examples of the above-described fluoroalkyl-terminated silane coupling agents include $C_8F_{17}$-$(CH_2)_2$-Si-$(OCH_3)_3$ and $C_6F_{13}$-$(CH_2)_2$-Si-$(OCH_3)_3$. These may be used alone, or at least two types thereof may be used in combination.

The antifouling property of the resulting low refractive index layer can be improved by chemically modifying the surface of the hollow silica by using the above-described fluoroalkyl-terminated silane coupling agent.

The low refractive index layer of the third aspect is formed by curing the above-described binder component through ultraviolet irradiation in the presence of a photopolymerization initiator. Examples of usable photopolymerization

initiators include at least one type of Irgacure 184, 819, 651, 1173, 907, and the like produced by Ciba Specialty Chemicals K.K. Preferably, the amount of blending thereof is 3 to 10 phr relative to the binder component. If the amount of blending of the photopolymerization initiator is less than this range, satisfactory cross-liking and curing cannot be conducted. If the amount is increased, the film strength of the low refractive index layer is reduced.

The low refractive index layer prepared according to the third aspect is formed by applying a composition, in which the hollow silica, the polyfunctional (meth)acrylic compound serving as a binder component, and the photopolymerization initiator are mixed at a predetermined ratio, to the high refractive index layer or the electrically conductive high refractive index hard coat layer and curing the composition through ultraviolet irradiation in an atmosphere having an oxygen concentration of 0 to 10,000 ppm. Here, when the oxygen concentration in the ultraviolet irradiation atmosphere exceeds 1,000 ppm, the abrasion resistance is deteriorated significantly. Therefore, the oxygen concentration is specified to be 1,000 ppm or less, and preferably be 200 ppm or less.

Preferably, the thickness of the above-described low refractive index layer is 85 to 110 nm, in particular, about 100 nm.

In the third aspect, it is preferable to apply an uncured resin composition (if necessary, the above-described fine particles are blended) and, subsequently, apply the ultraviolet ray when the hard coat layer 92, the high refractive index layer 93, and the low refractive index layer 94 are formed on the base film 91. In this case, individual layers may be applied and cured one after another. Alternatively, three layers or two layers may be applied and, thereafter, be cured at a time.

Specific examples of coating methods include a method in which a coating of a coating solution prepared by dissolving the binder component and the like into a solvent, e.g., toluene, is applied through gravure coating or the like, drying is conducted and, thereafter, curing is conducted with the ultraviolet ray. This wet coating method has an advantage that a film can be formed uniformly at a high speed and a low cost. Effects of improving the adhesion and increasing the film hardness are exerted by applying the ultraviolet ray to cure after the coating, and it becomes possible to continuously produce the antireflection film without the need for heating.

Preferably, an adhesive of the adhesive layer 95 disposed on the back side of the base film 91 is a transparent adhesive of acrylic base or the like. In general, preferably, the thickness of the adhesive layer 95 is about 1 to 100 μm and, particularly, about 25 μm.

A film of about 20 to 175 μm thickness, particularly, about 35 μm thickness, formed from a material similar to that for the above-described base film and subjected to a surface mold-release treatment can be used as the mold release film 96.

The flat display panel and the show window material prepared by the process of the third aspect can be produced by using the above-described antireflection film 90. In addition, for example, a flat display panel, in which a transparent substrate, e.g., a glass substrate, is disposed on the outermost surface, can be produced by laminating and forming the above-described high refractive index layer and the low refractive index layer directly on the transparent substrate. Likewise, a show window material can also be produced by laminating and forming the above-described high refractive index layer and the low refractive index layer directly on the transparent substrate, e.g., a glass substrate. In the case where an antireflection film is adhered to a transparent substrate, e.g., a glass substrate, this antireflection film may be the film shown in Fig. 4 in which the hard coat layer is not provided.

For the flat display panel and the show window material prepared by the process of the third aspect, it is possible to realize a high-visibility flat display panel and the show window material having further excellent antireflection performance and antifouling property by conducting the following adjustments in the above-described antireflection film and the antireflection layer composed of a laminated film composed of the high refractive index layer and the low refractive index layer.

(1) An easy-to-adhere layer is disposed between the transparent base film and the hard coat layer. The easy-to-adhere layer is disposed to improve the adhesion of the hard coat layer to the base film. Usually, metal oxide fine particles, e.g., $SiO_2$, $ZrO_2$, $TiO_2$, or $Al_2O_3$, preferably metal oxide fine particles having an average particle diameter of about 1 to 100 nm are blended to a thermosetting resin, e.g., a copolymerized polyester resin and a polyurethane based resin, so as to adjust the refractive index, and the resulting product is used. In the case where the cost becomes high due to blending of the metal oxide fine particles, it is also possible to adjust the refractive index by blending 0 to 50 percent by weight of polymer containing a high proportion of phenyl groups, bromine atoms, and sulfur atoms in the structure.

In this case, it is preferable that the refractive index of the hard coat layer is within the range of 1.48 to 1.55, and when the refractive index of the easy-to-adhere layer is assumed to be $n_a$, the refractive index of the transparent base film is assumed to be $n_b$, and the refractive index of the hard coat layer is assumed to be $n_{HC}$,

$$(n_b + n_{HC})/2 - 0.02 \leq n_a \leq (n_b + n_{HC})/2 + 0.02,$$

particularly

$$(n_b + n_{HC})/2 - 0.01 \leq n_a \leq (n_b + n_{HC})/2 + 0.01,$$

is satisfied, and the film thickness T of the easy-to-adhere layer is within the range of

$$(550/4) \times (1/n_a) - 10\ nm \leq T \leq (550/4) \times (1/n_a) + 10\ nm,$$

particularly

$$(550/4) \times (1/n_a) - 5\ nm \leq T \leq (550/4) \times (1/n_a) + 5\ nm,$$

because a significantly excellent antireflection performance can be attained.

This has an effect of allowing the refractive index of the base film to become substantially equal to the refractive index of the hard coat layer with respect to the light wavelength of 550 nm. The effect is based on that the reflection between hard coat layer/base film is eliminated. In the third aspect, preferably, the easy-to-adhere layer is formed on the transparent base film during the molding of the transparent base film.

(2) At least one type of high refractive index fine particles selected from the fine particle group consisting of electrically conductive high refractive index fine particles composed of $SnO_2$ and ITO and ultra high refractive index fine particles composed of $TiO_2$, $ZrO_2$, and $CeO_2$ is used as high refractive index fine particles of the high refractive index layer. High refractive index fine particles having different particle diameters are used in combination in such a way that the average primary particle diameter of the high refractive index fine particles is 30 to 40 nm, the particle diameters are widely distributed centering the average primary diameter, the cumulative number of fine particles having a primary particle diameter of 30 nm or less is 20% or more, for example, 20% to 50%, relative to the entire fine particles, and the cumulative number of fine particles having a primary particle diameter of 45 nm or more is 20% or more, for example, 20% to 50%.

That is, it is important that the high refractive index layer contains a maximum proportion of high refractive index fine particles. When the high refractive index fine particles having different particle diameters are used in combination as described above, the amount of the high refractive index fine particles filled in the high refractive index layer is increased and, thereby, a high refractive index layer having a very high refractive index can be formed through high-density filling.

It is preferable that electrically conductive high refractive index fine particles and ultra high refractive index fine particles are used in combination as the high refractive index fine particles from the viewpoint of an improvement of the refractive index and maintenance of the antistatic property of the high refractive index layer. In particular, it is preferable that electrically conductive high refractive index fine particles:ultra high refractive index fine particles = 50 to 70:50 to 30 (volume ratio), especially 27:18 (volume ratio) is satisfied. If the electrically conductive high refractive index fine particles exceed this range, the refractive index of the high refractive index layer is decreased, and if the ultra high refractive index fine particles exceed this range, the antistatic effect cannot be exerted.

(3) The above-described fluorine-containing binder component is used as a binder component of the low refractive index layer, so as to improve the antifouling property.

(4) The film thickness of the high refractive index layer and the film thickness of the low refractive index layer are adjusted and, thereby, the reflection is reduced with respect to the average reflectance in the visible region and wavelengths at which lower reflection is required. For example, although the reflectance at the wavelength exhibiting a minimum reflectance (bottom wavelength) is increased by increasing the film thickness of the high refractive index layer and, in addition, decreasing the film thickness of the low refractive index layer in such a way that the bottom wavelength is not changed, it becomes possible to bring the surface reflection color of the display close to a neutral color by decreasing the average reflectance in the visible light region. For the show window material as well, the visible light reflectance is reduced on average and the difference (color difference) between the color in the window and the visually identified color of an exhibit displayed by using the show window material is reduced by conducting the film thickness adjustment similarly.

A configuration, in which the film thickness of the high refractive index layer is increased in such a way that the wavelength exhibiting the minimum reflectance of the antireflection layer is not changed as described above, will be

described below in detail.

In general, an antireflection layer is formed by laminating a hard coat layer, a high refractive index layer, and a low refractive index layer in that order, wherein the film thickness of the hard coat layer is about 2 to 10 μm, and the film thickness of the high refractive index layer is 1/4λ relative to the wavelength of 550 nm. It is possible to decrease the reflectance on the shorter wavelength side and increase the transmittance of blue light emission on the shorter wavelength side by forming the high refractive index layer having a film thickness larger than 1/4λ.

For example, a hard coat layer, a high refractive index layer, and a low refractive index layer were applied ("Z-7503" produced by JSR) in that order on a TAC ("TAC" produced by Fuji Photo Film Co., Ltd.) film, and the film thickness of the high refractive index layer was varied. The high refractive index layer was an ITO fine particle ("Ei-3" produced by DAI NIPPON TORYO CO., LTD.)-containing high refractive index layer (n = 1.68). The low refractive index layer was hollow silica-containing pentaerythritol tetraacrylate ("PE-4A" produced by Kyoeisha Chemical Co., Ltd.) (n = 1.43). The resulting average reflectances are as shown in Table 15.

[Table 15]

| No. | Film thickness of high refractive index layer (nm) | Film thickness of low refractive index layer (nm) | Average reflectance (%) | Overall evaluation |
|---|---|---|---|---|
| 1 | 81 | 96 | 2.55 | Δ |
| 2 | 90 | 92 | 2.49 | ○ |
| 3 | 98 | 88 | 2.43 | ○ |
| 4 | 104 | 84 | 2.39 | ○ |
| 5 | 114 | 80 | 2.32 | ○ |
| 6 | 131 | 69 | 2.58 | Δ |

The reflectances of No. 1 and No. 4 are shown in Fig. 5, and the reflectances of No. 1 and Nos. 5 and 6 are shown in Fig. 6.

As is clear from these results, when the thickness of the high refractive index layer is increased, the reflectance on the shorter wavelength side is decreased, and the average reflectance is decreased, although when the film thickness of the high refractive index layer is increased to a certain level or higher, both the minimum reflectance and the average reflectance are increased, so that the suitable film thickness of the high refractive index layer is about 90 nm or more, and about 130 nm or less.

The above-described flat display panel prepared by the process of the third aspect is of great value as flat display panels of LCDs, organic EL, CRTs, and the like and, therefore, is useful in car navigation systems, touch panels, and the like including these displays. The show window material prepared of the process of the third aspect is of great value as show windows for displaying, in particular, high quality goods, e.g., arts, ornaments, and precious metals.

VI. Embodiments of fourth aspect

The embodiments of a solar cell module prepared according to the fourth aspect will be described below.

Each of Figs. 7a to 7c is a schematic sectional view of an antireflection layer portion on a surface, showing an embodiment of a solar cell module produced by the process of the fourth aspect. In a solar cell module shown in Fig. 7a an antireflection film 101A is adhered to a surface of a glass substrate 111 serving as a surface side transparent protective material. In a solar cell module shown in Fig. 7b an antireflection film 101B is adhered to the surface of the glass substrate 111 serving as the surface side transparent protective material. In a solar cell module shown in Fig. 7c, an antireflection film 101C is disposed directly on the surface of the glass substrate 111 serving as the surface side transparent protective material.

In the fourth aspect, the main configuration itself of the solar cell module is not specifically limited. As shown in Fig. 8 a general solar cell module configuration can be adopted.

The antireflection film 101A shown in Fig. 7a includes a hard coat layer 103, a high refractive index layer 104, and a low refractive index layer 105, which are laminated in that order on a transparent base film 102, and an adhesive layer 106 is disposed on a surface opposite to the lamination surface.

In the antireflection film 101A, examples of the base film 102 include transparent films of polyester, polyethylene terephthalate (PET), polybutylene terephthalate, polymethyl methacrylate (PMMA), acrylic, polycarbonate (PC), polystyrene, cellulose triacetate (TAC), polyvinyl alcohol, polyvinyl chloride, polyvinylidene chloride, polyethylene, ethylene-vinyl acetate copolymer, polyurethane, and cellophane, and preferably of PET, PC, and PMMA.

The thickness of the base film 102 is usually specified to be within the range of 100 to 188 μm.

Preferably, the hard coat.layer 103 is a synthetic resin based layer. In particular, a combination of an ultraviolet curing type synthetic resin, most of all, a polyfunctional acrylic resin, and silica fine particles is suitable. Preferably, the thickness of this hard coat layer 103 is 2 to 20 μm.

Preferably, the high refractive index layer 104 is of an ultraviolet curing type and contains metal oxide fine particles and a binder component having an aromatic group. Examples of binder components having an aromatic group include epoxy acrylate, urethane acrylate, and bisphenol A-containing acrylate resin. Preferably, metal oxide fine particles are at least one type of high refractive index metal oxide fine particles selected from the group consisting of ITO, $TiO_2$, $ZrO_2$, $CeO_2$, $Al_2O_3$, $Y_2O_3$, $La_2O_3$, and $Ho_2O_3$. The $TiO_2$ fine particles and the ITO fine particles are particularly preferable.

In the high refractive index layer 104, with respect to the ratio of the metal oxide fine particles to the binder component, if the metal oxide fine particles are excessive and a shortage of the binder component occurs, the film strength of the high refractive index layer is reduced, and conversely, if the metal oxide fine particles are few, the refractive index cannot be increased satisfactorily. Therefore, it is preferable that the ratio of the metal oxide fine particles to the total of the metal oxide fine particles and the binder component is specified to be 10 to 60 percent by volume, in particular, 20 to 50 percent by volume.

Preferably, the thickness of the above-described high refractive index layer 104 is about 80 to 100 nm. It is preferable that the high refractive index layer 104 has a refractive index of 1.65 or more, in particular, 1.66 to 1.85. In this case, when the refractive index of the low refractive index layer 105 is specified to be 1.39 to 1.47, an antireflection film having excellent antireflection performance can be produced, wherein the minimum reflectance of the surface reflectance is 1% or less. In particular, when the refractive index of the low refractive index layer 105 is specified to be 1.45 or less, the antireflection performance can be further improved, and an antireflection film exhibiting the minimum reflectance of the surface reflectance of 0.5% or less can also be produced.

In the fourth aspect, the low refractive index layer 105 is formed from a coating film cured by ultraviolet irradiation in an atmosphere having an oxygen concentration of 0 to 10,000 ppm, the coating film containing hollow silica, a binder component composed of a polyfunctional (meth)acrylic compound, and a photopolymerization initiator.

The hollow silica refers to hollow shell-shaped silica fine particles. Preferably, the average particle diameter thereof is 10 to 200 nm, and particularly is 10 to 150 nm. If the average particle diameter of this hollow silica is less than 10 nm, it is difficult to decrease the refractive index of the hollow silica. If the average particle diameter exceeds 200 nm, the light is reflected diffusely, and problems occur in that, for example, the surface roughness of the resulting low refractive index layer is increased.

The hollow silica includes air having a low refractive index (refractive index = 1.0) in the inside of the hollow and, therefore, the refractive index thereof is significantly low as compared with that of common silica (refractive index = 1.46). The refractive index of the hollow silica is determined based on the volume ratio of its hollow portion. Preferably, the refractive index is usually about 1.20 to 1.40.

The refractive index: n(hollow silica) of the hollow silica is determined from the refractive index: n(silica) of the silica constituting the shell portion of the hollow fine particle and the refractive index: n(air) of the air in the inside, as described below.

$$n(\text{hollow silica}) = n(\text{silica}) \times \text{volume fraction of silica} + n(\text{air}) \times \text{volume fraction of air}$$

As described above, n(silica) is about 1.47, and n(air) is a very low 1.0. Therefore, the refractive index of the above-described hollow silica becomes very low.

The refractive index: n(low refractive index layer) of the low refractive index layer prepared according to the fourth aspect by using the above-described hollow silica is determined from the refractive index: n(hollow silica) of the hollow silica and the refractive index: n(binder) of the binder component, as described below.

$$n(\text{low refractive index layer}) = n(\text{hollow silica}) \times \text{volume ratio of hollow silica in low refractive index layer} + n(\text{binder}) \times \text{volume ratio of binder in low refractive index layer}$$

Here, since the refractive index of the binder is generally about 1.50 to 1.55 except for specific fluorine-containing acrylic binders, an important requirement for decreasing the refractive index of the low refractive index layer is to increase the volume fraction of the hollow silica in the low refractive index layer.

In the fourth aspect, as the content of the hollow silica in the low refractive index layer is increased, a low refractive index layer having a lower refractive index can be formed and, thereby, an antireflection film exhibiting excellent antireflection performance can be produced. On the other hand, since the content of the binder component is decreased correspondingly, the film strength of the low refractive index layer is reduced, and the abrasion resistance and the durability are reduced. However, the reduction of the film strength due to an increase of amount of blending of hollow silica can be compensated by a surface treatment of the hollow silica, and furthermore, the film strength can also be compensated by selection of the type of binder component to be blended.

In the fourth aspect, preferably, the hollow silica content in the low refractive index layer is specified to be 20 to 55 percent by weight, in particular, 30 to 50 percent by weight by the surface treatment of the hollow silica and selection of the binder component, so as to decrease the refractive index of the low refractive index layer to about 1.39 to 1.45 and ensure the abrasion resistance.

The polyfunctional (meth)acrylic compound serving as a binder component of the low refractive index layer of the sixth aspect will be described below.

Preferably, the content of the polyfunctional (meth)acrylic compound is 50 percent by weight or more, in particular, 90 percent by weight or more, in the entire binder components.

Examples of hexafunctional (meth)acrylic compounds represented by the above-described General formula (I) include dipentaerythritol hexaacrylate, and ethylene oxide adducts of dipentaerythritol hexaacrylate in which fluorine may substitute for H of ethylene oxide. These may be used alone, or at least two types thereof may be used in combination.

Examples of tetrafunctional (meth)acrylic compounds represented by the above-described General formula (II) include pentaerythritol tetraacrylate, and ethylene oxide adducts (1 to 8) of pentaerythritol tetraacrylate in which fluorine may substitute for H of ethylene oxide. These may be used alone, or at least two types thereof may be used in combination.

At least one type of the hexafunctional (meth)acrylic compounds represented by the above-described General formula (I) and at least one type of the tetrafunctional (meth)acrylic compounds represented by the above-described General formula (II) may be used in combination as the binder component.

The polyfunctional (meth)acrylic compounds represented by the above-described General formulae (I) and (II), in particular, the hexafunctional (meth)-acrylic compounds represented by the above-described General formula (I), exhibit high hardness and excellent abrasion resistance and, therefore, are effective at forming a low refractive index layer exhibiting high abrasion resistance.

In the fourth aspect, it is preferable that a fluorine-containing difunctional (meth)acrylic compound represented by the following General formula (III) or a specific fluorine-containing polyfunctional (meth)acrylic compound is used in combination with the hexafunctional (meth)acrylic compound represented by the above-described General formula (I) and/or the tetrafunctional (meth)acrylic compound represented by the above-described General formula (II) as the binder components. The low refractive index layer can be provided with the abrasion resistance and the antifouling property by using these binder components. Furthermore, these binder components have refractive indices lower than those of the hexafunctional (meth)acrylic compounds represented by the above-described General formula (I) and the tetrafunctional (meth)acrylic compounds represented by the above-described General formula (II) and, therefore, a low refractive index layer having a low refractive index can be formed even when the amount of blending of the hollow silica is reduced.

$$A^a\text{-O-}(CH^2)_{xa}\text{-Rf-}(CH_2)_{xb}\text{-O-}A^b \qquad \text{(III)}$$

(In the above-described General formula (III), $A^a$ and $A^b$ independently represent an acryloyl group, a methacryloyl group, an $\alpha$-fluoroacryloyl group, or a trifluoromethacryloyl group, Rf represents a perfluoroalkylene group, and xa and xb independently represent an integer of 0 to 3.)

Examples of fluorine-containing difunctional (meth)acrylic compounds represented by the above-described

General formula (III) include 2,2,3,3,4,4-hexafluoropentane glycol·diacrylate. These may be used alone or at least two types may be used in combination.

The above-described specific polyfunctional (meth)acrylic compounds, that is, trifunctional to hexafunctional (meth)acrylic compounds having at least 6 fluorine atoms in a molecule and a molecular weight of 1,000 or less and hexafunctional to pentadecafunctional (meth)acrylic compounds having at least 10 fluorine atoms in a molecule and a molecular weight of 1,000 to 5,000, may also be used alone or at least two types may also be used in combination.

At least one type of the above-described fluorine-containing difunctional (meth)acrylic compounds and at least one type of the fluorine-containing polyfunctional (meth)acrylic compounds may be used in combination.

The refractive index of the low refractive index layer can be decreased and the antifouling property can be improved by using the above-described fluorine-containing difunctional (meth)acrylic compound. However, if the amount of blending thereof is excessive, the abrasion resistance is deteriorated. Therefore, it is preferable that the fluorine-containing difunctional (meth)acrylic compound is blended by 5 percent by weight or more, in particular, 5 to 10 percent by weight into the entire binder components.

The refractive index of the low refractive index layer can also be decreased and the antifouling property can also be improved by using the above-described fluorine-containing polyfunctional (meth)acrylic compound. However, if the amount of blending thereof is excessive, the abrasion resistance is deteriorated. Therefore, it is preferable that the polyfunctional (meth)acrylic compound is blended by 5 percent by weight or more, in particular, 5 to 10 percent by weight into the entire binder components.

When the fluorine-containing difunctional (meth)acrylic compound and the fluorine-containing polyfunctional (meth)acrylic compound are used in combination, it is preferable that the fluorine-containing difunctional (meth)acrylic compound and the fluorine-containing polyfunctional (meth)acrylic compound are blended by 5 percent by weight or more in total, in particular, 5 to 10 percent by weight in total into the entire binder components.

The particle diameter of the hollow silica used in the fourth aspect is larger than the particle diameter of general silica fine particles (particle diameter about 5 to 20 nm) to be blended into a known low refractive index layer. Therefore, even when the same binder component is used, the film strength of the resulting low refractive index layer tends to become lower than that in the case where the silica fine particles are blended. However, the bonding force between the hollow silica and the binder component can be increased and the film strength of the resulting low refractive index layer can be increased by subjecting the hollow silica to an appropriate surface treatment, so that the abrasion resistance can be improved.

For the surface treatment of the hollow silica, it is preferable to subject the surface of the hollow silica to terminal (meth)acrylic modification with a (meth)acrylic-terminated silane coupling agent represented by the following General formula (IV).

[Chemical formula 24]

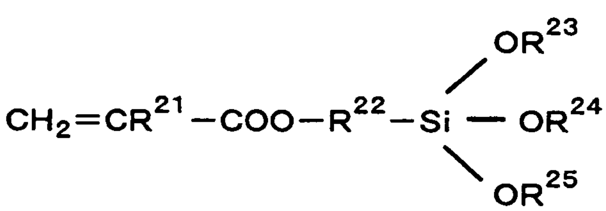

(IV)

(In the above-described General formula (IV), $R^{21}$ represents a hydrogen atom, a fluorine atom, or a methyl group, $R^{22}$ represents an alkylene group having the carbon number of 1 to 8 or a fluoroalkylene group having the carbon number of 1 to 8 in which at least one fluorine atom has substituted for at least one hydrogen atom, and $R^{23}$ to $R^{25}$ independently represent a hydrogen atom or an alkyl group having the carbon number of 1 to 4.)

Examples of the above-described (meth)acrylic-terminated silane coupling agents include $CH_2=CH-COO-(CH_2)_3-Si-(OCH_3)_3$ and $CH_2=C(CH_3)-COO-(CH_2)_3-Si-(OCH_3)_3$. These may be used alone, or at least two types

thereof may be used in combination.

In order to subject the surface of the hollow silica to terminal (meth)acrylic modification with the above-described (meth)acrylic-terminated silane coupling agent, it is preferable to subject a mixed solution of the hollow silica and the (meth)acrylic-terminated silane coupling agent to a hydrothermal reaction at 100˚C to 150˚C or to effect a reaction by irradiating this mixed solution with a microwave. That is, the surface chemical modification with the (meth)acrylic-terminated silane coupling agent cannot be effected by simply mixing the (meth)acrylic-terminated silane coupling agent and the hollow silica, and a desired surface reforming effect cannot be attained. If the reaction temperature is low in the hydrothermal reaction, satisfactory terminal (meth)acrylic modification cannot be effected. Conversely, if the reaction temperature is too high, the reactivity is reduced. Consequently, a preferable hydrothermal reaction temperature is 100˚C to 150˚C. The hydrothermal reaction time is usually about 0.1 to 10 hours, although it depends on the reaction temperature. On the other hand, when the microwave is used, if the setting temperature is too low, satisfactory terminal (meth)acrylic modification cannot be effected. Therefore, for the same reason as in the above description, a preferable setting temperature is 90˚C to 150˚C. The microwave with a frequency of 2.5 GHz is suitable for use. The terminal (meth)acrylic modification can be conducted usually in a short time of about 10 to 60 minutes by the microwave irradiation. Examples of mixed solutions to be subjected to this reaction include a reaction solution prepared from 3.8 percent by weight of hollow silica, 96 percent by weight of alcohol solvent (mixed solvent in which isopropyl alcohol to isobutyl alcohol is 1: 4 (weight ratio)), 3 percent by weight of acetic acid, 1 percent by weight of water, and 0.04 percent by weight of silane coupling agent.

When the surface of the hollow silica is chemically modified with the above-described (meth)acrylic-terminated silane coupling agent, the hollow silica is strongly bonded to the binder component. Consequently, even when the amount of blending of the hollow silica is increased, a low refractive index layer exhibiting excellent abrasion resistance can be formed and, therefore, the refractive index of the low refractive index layer can be decreased by increasing the amount of blending of the hollow silica.

The surface of the hollow silica may be subjected to terminal fluoroalkyl modification with a fluoroalkyl-terminated silane coupling agent represented by the following General formula (V). In this case, it is preferable that the terminal fluoroalkyl modification with the fluoroalkyl-terminated silane coupling agent is conducted by a hydrothermal reaction method or microwave irradiation under a condition similar to that for the above-described terminal (meth)acrylic modification with the (meth)acrylic-terminated silane coupling agent.

[Chemical formula 25]

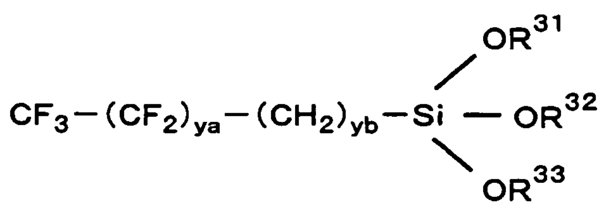

(V)

(In the above-described General formula (V), $R^{31}$ to $R^{33}$ independently represent a hydrogen atom or an alkyl group having the carbon number of 1 to 4, ya represents an integer of 1 to 8, and yb represents an integer of 1 to 3.)

Examples of the above-described fluoroalkyl-terminated silane coupling agents include $C_8F_{17}$-$(CH_2)_2$-Si-$(OCH_3)$ and $C_6F_{13}$-$(CH_2)_2$-Si-$(OCH_3)_3$. These may be used alone, or at least two types thereof may be used in combination.

The antifouling property of the resulting low refractive index layer can be improved by chemically modifying the surface of the hollow silica by using the above-described fluoroalkyl-terminated silane coupling agent.

The low refractive index layer prepared by the process of the fourth aspect is formed by curing the above-described binder component through ultraviolet irradiation in the presence of a photopolymerization initiator. Examples

of usable photopolymerization initiators include at least one type of Irgacure 184, 819, 651, 1173, 907, and the like produced by Ciba Specialty Chemicals K.K. Preferably, the amount of blending thereof is 3 to 10 phr relative to the binder component. If the amount of blending of the photopolymerization initiator is less than this range, satisfactory cross-liking and curing cannot be conducted. If the amount is increased, the film strength of the low refractive index layer is reduced.

The low refractive index layer prepared according to the sixth aspect is formed by applying a composition, in which the hollow silica, the polyfunctional (meth)acrylic compound serving as a binder component, and the photopolymerization initiator are mixed at a predetermined ratio, to the high refractive index layer or the electrically conductive high refractive index hard coat layer and curing the composition through ultraviolet irradiation in an atmosphere having an oxygen concentration of 0 to 10,000 ppm. Here, when the oxygen concentration in the ultraviolet irradiation atmosphere exceeds 1,000 ppm, the abrasion resistance is deteriorated significantly. Therefore, the oxygen concentration is specified to be 1,000 ppm or less, and preferably be 200 ppm or less.

Preferably, the thickness of the above-described low refractive index layer is 85 to 110 nm, in particular, about 100 nm.

In the fourth aspect, it is preferable to apply an uncured resin composition (if necessary, the above-described fine particles are blended) and, subsequently, apply the ultraviolet ray when the hard coat layer 103, the high refractive index layer 104, and the low refractive index layer 105 are formed on the base film 102. In this case, individual layers may be applied and cured one after another. Alternatively, three layers or two layers may be applied and, thereafter, be cured at a time.

Specific examples of coating methods include a method in which a coating of a coating solution prepared by dissolving the binder component and the like into a solvent, e.g., toluene, is applied through gravure coating or the like, drying is conducted and, thereafter, curing is conducted with the ultraviolet ray. This wet coating method has an advantage that a film can be formed uniformly at a high speed and a low cost. Effects of improving the adhesion and increasing the film hardness are exerted by applying the ultraviolet ray to cure after the coating, and it becomes possible to continuously produce the antireflection film without the need for heating.

Preferably, an adhesive of the adhesive layer 106 disposed on the back side of the base film 102 is a transparent adhesive of acrylic base or the like. In general, preferably, the thickness of the adhesive layer 106 is about 1 to 100 $\mu$m and, particularly, about 25 $\mu$m.

In the solar cell module shown in Fig. 7a, the above-described antireflection film 101A is adhered to the glass substrate 111 serving as a surface-side transparent protective material. In the case where an antireflection film is adhered to a transparent substrate, e.g., a glass substrate, as described above, the hard coat layer is not always required and, therefore, may not be provided.

In the solar cell module shown in Fig. 7b, the antireflection film 101B provided with no hard coat layer is adhered to the glass substrate 111 serving as a surface-side transparent protective material. The configuration is similar to that of the above-described solar cell module shown in Fig. 7a except that the antireflection film 101B is provided with no hard coat layer and the high refractive index layer 104 and the low refractive index layer 105 are disposed directly on the transparent base film 102.

As shown in Fig. 7c, in the solar cell module prepared by the process of the fourth aspect, the high refractive index layer 104 and the low refractive index layer 105 may be formed by lamination directly on the glass substrate 111 serving as a surface-side transparent protective material and, thereby, the antireflection layer 101C may be disposed directly on the glass substrate 111.

For the above-described solar cell module prepared by process of the fourth aspect, it is possible to realize a solar cell module exhibiting high power generation efficiency and having further excellent antireflection performance and antifouling property by, for example, conducting the following adjustments in the antireflection film and the antireflection layer composed of a laminated film of the high refractive index layer and the low refractive index layer.

(1) An easy-to-adhere layer is disposed between the transparent base film and the hard coat layer. The easy-to-adhere layer is disposed to improve the adhesion of the hard coat layer to the base film. Usually, metal oxide fine particles, e.g., $SiO_2$, $ZrO_2$, $TiO_2$, or $Al_2O_3$, preferably metal oxide fine particles having an average particle diameter of about 1 to 100 nm are blended to a thermosetting resin, e.g., a copolymerized polyester resin and a polyurethane based resin, so as to adjust the refractive index, and the resulting product is used. In the case where the cost becomes high due to blending of the metal oxide fine particles, it is also possible to adjust the refractive index by blending 0 to 50 percent by weight of polymer containing a high proportion of phenyl groups, bromine atoms, and sulfur atoms in the structure.

In this case, it is preferable that the refractive index of the hard coat layer is within the range of 1.48 to 1.55, and when the refractive index of the easy-to-adhere layer is assumed to be $n_a$, the refractive index of the transparent base film is assumed to be $n_b$, and the refractive index of the hard coat layer is assumed to be $n_{HC}$,

$$(n_b + n_{HC})/2 - 0.02 \leq n_a \leq (n_b + n_{HC})/2 + 0.02,$$

particularly

$$(n_b + n_{HC})/2 - 0.01 \leq n_a \leq (n_b + n_{HC})/2 + 0.01,$$

is satisfied, and the film thickness T of the easy-to-adhere layer is within the range of

$$(550/4) \times (1/n_a) - 10\ nm \leq T \leq (550/4) \times (1/n_a) + 10\ nm,$$

particularly

$$(550/4) \times (1/n_a) - 5\ nm \leq T \leq (550/4) \times (1/n_a) + 5\ nm,$$

because a significantly excellent antireflection performance can be attained.

This has an effect of allowing the refractive index of the base film to become substantially equal to the refractive index of the hard coat layer with respect to the light wavelength of 550 nm. The effect is based on that the reflection between hard coat layer/base film is eliminated. In the fourth aspect, preferably, the easy-to-adhere layer is formed on the transparent base film during the molding of the transparent base film.

(2) At least one type of high refractive index fine particles selected from the fine particle group consisting of electrically conductive high refractive index fine particles composed of $SnO_2$ and ITO and ultra high refractive index fine particles composed of $TiO_2$ $ZrO_2$, and $CeO_2$ is used as high refractive index fine particles of the high refractive index layer. High refractive index fine particles having different particle diameters are used in combination in such a way that the average primary particle diameter of the high refractive index fine particles is 30 to 40 nm, the particle diameters are widely distributed centering the average primary diameter, the cumulative number of fine particles having a primary particle diameter of 30 nm or less is 20% or more, for example, 20% to 30%, relative to the entire fine particles, and the cumulative number of fine particles having a primary particle diameter of 45 nm or more is 20% or more, for example, 20% to 60%.

That is, it is important that the high refractive index layer contains a maximum proportion of high refractive index fine particles. When the high refractive index fine particles having different particle diameters are used in combination as described above, the amount of the high refractive index fine particles filled in the high refractive index layer is increased and, thereby, a high refractive index layer having a very high refractive index can be formed through high-density filling.

It is preferable that electrically conductive high refractive index fine particles and ultra high refractive index fine particles are used in combination as the high refractive index fine particles from the viewpoint of an improvement of the refractive index and maintenance of the antistatic property of the high refractive index layer. In particular, it is preferable that electrically conductive high refractive index fine particles:ultra high refractive index fine particles = 50 to 70:50 to 30 (volume ratio), especially 27:18 (volume ratio) is satisfied. If the electrically conductive high refractive index fine particles exceed this range, the refractive index of the high refractive index layer is decreased, and if the ultra high refractive index fine particles exceed this range, the antistatic effect cannot be exerted.

(3) The above-described fluorine-containing binder component is used as a binder component of the low refractive index layer, so as to improve the antifouling property.

(4) The film thickness of the high refractive index layer and the film thickness of the low refractive index layer are adjusted, for example, the film thickness of the high refractive index layer is decreased or the film thickness of the low refractive index layer is decreased and, thereby, the wavelength exhibiting a minimum reflectance (bottom wavelength) of the antireflection layer is allowed to shift to the shorter wavelength side. Consequently, the reflectance in the ultraviolet region including high solar energy is decreased and the energy exchange efficiency is increased.

A method for allowing the minimum reflectance of the antireflection layer to shift to the shorter wavelength side by adjusting the film thickness of the high refractive index layer and/or the low refractive index layer, as described above, will be further specifically described below.

The transmittance at the wavelength exhibiting a small reflectance at the antireflection layer is inevitably increased. Therefore, when the reflectance of the light with the wavelength most easily absorbed by a coloring matter of a dye sensitization solar cell is decreased, the transmittance at that wavelength is increased. Since the light on the shorter wavelength side has large energy, the coloring matter is allowed to absorb the light having higher energy by decreasing the reflectance at that wavelength.

In general, the antireflection film is designed in such a way that the wavelength exhibiting the minimum reflectance is within the range of 550 to 600 nm. The reason for this is that since the highest human luminous efficacy is exhibited at a wavelength of 550 nm, the reflectance at this wavelength is allowed to become a minimum.

However, since the absorption wavelength of the dye sensitization solar cell is different depending on the coloring matter, the design must be made in accordance with the coloring matter.

For example, a hard coat layer, a high refractive index layer, and a low refractive index layer were applied ("Z-7503" produced by JSR) in that order on a TAC ("TAC" produced by Fuji Photo Film Co., Ltd.) film, and the film thicknesses of the high refractive index layer and the low refractive index layer were varied. The high refractive index layer was an ITO fine particle ("Ei-3" produced by DAI NIPPON TORYO CO., LTD.)-containing high refractive index layer (n = 1.68). The low refractive index layer was hollow silica-containing pentaerythritol tetraacrylate ("PE-4A" produced by Kyoeisha Chemical Co., Ltd.) (n = 1.43). The resulting reflectances at a wavelength of 400 nm are as shown in the following Table 16.

[Table 16]

| No. | Film thickness of high refractive index layer (nm) | Film thickness of low refractive index layer (nm) | 400 nm reflectance (%) |
|---|---|---|---|
| 1 | 81 | 96 | >4 |
| 2 | 81 | 73 | <2 |
| 3 | 33 | 96 | <2 |

As is clear from these results, the wavelength exhibiting the minimum reflectance can be changed and the reflectance on the shorter wavelength side can be decreased (the transmittance can be increased) by decreasing the film thicknesses of the low refractive index layer and the high refractive index layer.

## Claims

1. A process for preparing an antireflection film, comprising laminating a hard coat layer (2), a high refractive index layer (3), and a low refractive index layer (4), in that order on a transparent base film (1),
   wherein the low refractive index layer (4) is formed by applying a coating film to the high refractive index layer and curing the coating film by ultraviolet irradiation in an atmosphere having an oxygen concentration of 0 to 10,000 ppm, the **characterized in that** coating film contains:

   hollow silica fine particles;
   a polyfunctional (meth)acrylic compound; and
   a photopolymerization initiator,

   wherein the polyfunctional (meth)acrylic compound comprises, as primary components, a hexafunctional (meth) acrylic compound represented by the following General formula (I) and/or a tetrafunctional (meth)acrylic compound represented by the following General formula (II):

[ Chemical formula 26]

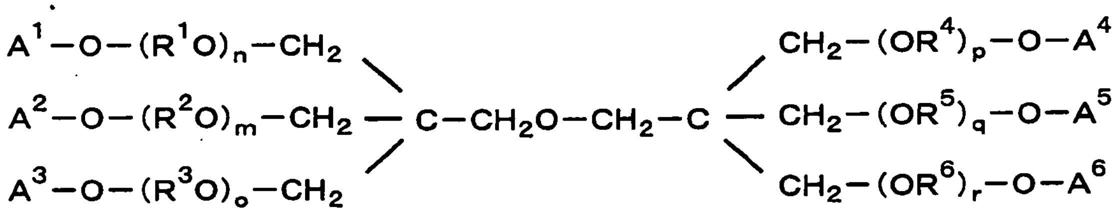

(I)

(in the above-described General formula (I), $A^1$ to $A^6$ independently represent an acryloyl group, a methacryloyl group, an $\alpha$-fluoroacryloyl group, or a trifluoromethacryloyl group,
n, m, o, p, q, and r independently represent an integer of 0 to 2, and
$R^1$ to $R^6$ independently represent an alkylene group having the carbon number of 1 to 3 or a fluoroalkylene group having the carbon number of 1 to 3 in which at least one fluorine atom has substituted for at least one hydrogen atom), and

[ Chemical formula 27]

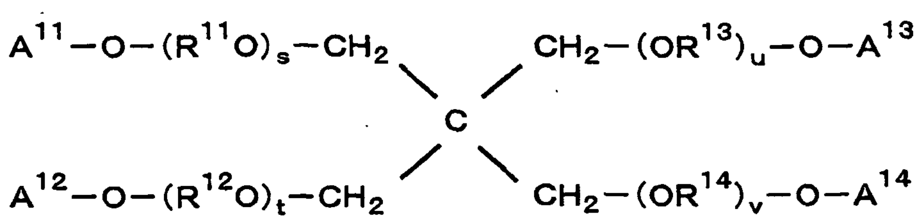

(II)

(in the above-described General formula (II), $A^{11}$ to $A^{14}$ independently represent an acryloyl group, a methacryloyl group, an $\alpha$-fluoroacryloyl group, or a trifluoromethacryloyl group,
s, t, u, and v independently represent an integer of 0 to 2, and
$R^{11}$ to $R^{14}$ independently represent an alkylene group having the carbon number of 1 to 3 or a fluoroalkylene group having the carbon number of 1 to 3 in which at least one fluorine atom has substituted for at least one hydrogen atom).

**2.** The process according to Claim 1,
wherein the polyfunctional (meth)acrylic compound further comprises a fluorine-containing difunctional (meth)acrylic compound represented by the following General formula (III), and the proportion of the fluorine-containing difunctional (meth)acrylic compound in the entire polyfunctional (meth)acrylic compounds is 5 percent by weight or more:

$$A^a\text{-O-}(CH^2)_{xa}\text{-Rf-}(CH_2)_{xb}\text{-O-}A^b \qquad (III)$$

(in the above-described General formula (III), $A^a$ and $A^b$ independently represent an acryloyl group, a methacryloyl

group, an α-fluoroacryloyl group, or a trifluoromethacryloyl group, Rf represents a perfluoroalkylene group, and xa and xb independently represent an integer of 0 to 3).

3. The process according to Claim 2, wherein the polyfunctional (meth)acrylic compound further comprises at least one type of fluorine-containing polyfunctional (meth)acrylic compound selected from the group consisting of trifunctional to hexafunctional (meth)acrylic compounds having at least 6 fluorine atoms in a molecule and a molecular weight of 1,000 or less and hexafunctional to pentadecafunctional (meth)acrylic compounds having at least 10 fluorine atoms in a molecule and a molecular weight of 1,000 to 5,000, and the proportion of the fluorine-containing polyfunctional (meth)acrylic compound in the entire polyfunctional (meth)acrylic compounds is 5 percent by weight or more.

4. The process according to Claim 1, wherein the hollow silica fine particles are (meth)acrylic-modified hollow silica fine particles having a surface subjected to terminal (meth)acrylic modification with a (meth)acrylic-terminated silane coupling agent represented by the following General formula (IV):

[Chemical formula 28]

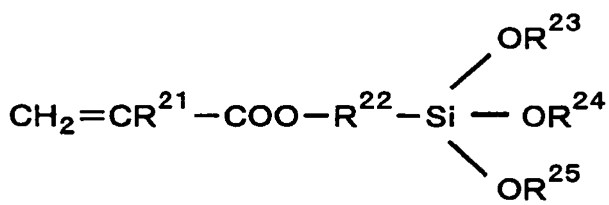

(IV)

(in the above-described General formula (IV), $R^{21}$ represents a hydrogen atom, a fluorine atom, or a methyl group, $R^{22}$ represents an alkylene group having the carbon number of 1 to 8 or a fluoroalkylene group having the carbon number of 1 to 8 in which at least one fluorine atom has substituted for at least one hydrogen atom, and $R^{23}$ to $R^{25}$ independently represent a hydrogen atom or an alkyl group having the carbon number of 1 to 4).

5. The process according to Claim 4, wherein the surface of the hollow silica fine particles are subjected to terminal (meth)acrylic modification with the (meth)acrylic-terminated silane coupling agent by a hydrothermal reaction at 100°C to 150°C or a reaction under microwave irradiation.

6. The process according to Claim 1, wherein the hollow silica fine particles are fluoroalkyl-modified hollow silica fine particles having a surface subjected to terminal fluoroalkyl modification with a fluoroalkyl-terminated silane coupling agent represented by the following General formula (V):

[ Chemical formula 29]

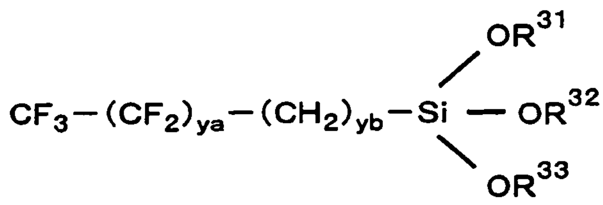

(V)

(in the above-described General formula (V), $R^{31}$ to $R^{33}$ independently represent a hydrogen atom or an alkyl group having the carbon number of 1 to 4, ya represents an integer of 1 to 8, and yb represents an integer of 1 to 3).

**7.** The process according to Claim 6
wherein the surface of the hollow silica fine particles are subjected to terminal fluoroalkyl modification with the fluoroalkyl-terminated silane coupling agent by a hydrothermal reaction

**8.** A process for preparing an electromagnetic wave shielding light transmitting window material, comprising laminating and integrating an electromagnetic wave shielding layer, a transparent substrate, and an antireflection layer (80) serving as an outermost surface layer,
wherein the antireflection layer (80) is provided with a high refractive index layer (83) and a low refractive index layer (84) disposed on the high refractive index layer (83), and
the low refractive index layer (84) is composed of a photo-cured coating film containing:

hollow silica fine particles;
a polyfunctional (meth)acrylic compound; and
a photopolymerization initiator, wherein the polyfunctional (meth)acrylic compound comprises, as primary components, a hexafunctional (meth)acrylic compound represented by the following General formula (I) and/or a tetrafunctional (meth)acrylic compound represented by the following General formula (II):

[ Chemical formula 39]

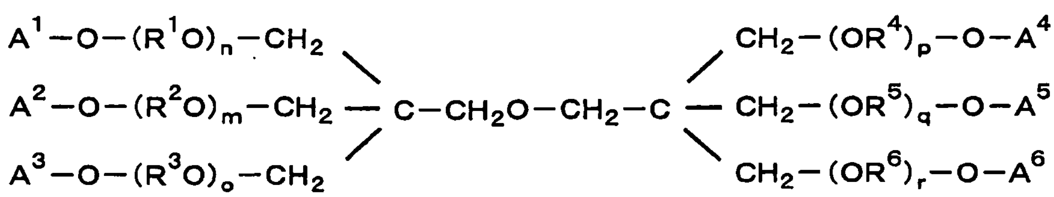

(I)

(in the above-described General formula (I), $A^1$ to $A^6$ independently represent an acryloyl group, a methacryloyl group, an $\alpha$-fluoroacryloyl group, or a trifluoromethacryloyl group,

n, m, o, p, q, and r independently represent an integer of 0 to 2, and $R^1$ to $R^6$ independently represent an alkylene group having the carbon number of 1 to 3 or a fluoroalkylene group having the carbon number of 1 to 3 in which at least one fluorine atom has substituted for at least one hydrogen atom), and

[Chemical formula 40]

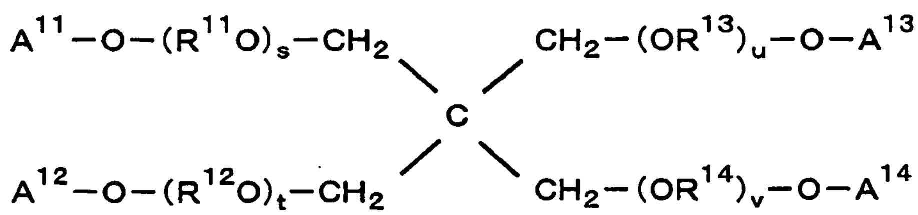

(II)

(in the above-described General formula (II), $A^{11}$ to $A^{14}$ independently represent an acryloyl group, a methacryloyl group, an $\alpha$-fluoroacryloyl group, or a trifluoromethacryloyl group,
s, t, u, and v independently represent an integer of 0 to 2, and
$R^{11}$ to $R^{14}$ independently represent an alkylene group having the carbon number of 1 to 3 or a fluoroalkylene group having the carbon number of 1 to 3 in which at least one fluorine atom has substituted for at least one hydrogen atom).

**9.** The process according to Claim 8, wherein the polyfunctional (meth) acrylic compound further comprises a fluorine-containing difunctional (meth)acrylic compound represented by the following General formula (III), and the proportion of the fluorine-containing difunctional (meth)acrylic compound in the entire polyfunctional (meth)acrylic compounds is 5 percent by weight or more:

$$A^a\text{-O-}(CH^2)_{xa}\text{-Rf-}(CH_2)_{xb}\text{-O-}A^b \qquad \text{(III)}$$

(in the above-described General formula (III), $A^a$ and $A^b$ independently represent an acryloyl group, a methacryloyl group, an $\alpha$-fluoroacryloyl group, or a trifluoromethacryloyl group, Rf represents a perfluoroalkylene group, and xa and xb independently represent an integer of 0 to 3).

**10.** The process according to Claim 8, wherein the polyfunctional (meth)acrylic compound further comprises at least one type of fluorine-containing polyfunctional (meth)acrylic compound selected from the group consisting of trifunctional to hexafunctional (meth)acrylic compounds having at least 6 fluorine atoms in a molecule and a molecular weight of 1,000 or less and hexafunctional to pentadecafunctional (meth)acrylic compounds having at least 10 fluorine atoms in a molecule and a molecular weight of 1,000 to 5,000, and the proportion of the fluorine-containing polyfunctional (meth)acrylic compound in the entire polyfunctional (meth)acrylic compounds is 5 percent by weight or more.

**11.** The process according to Claim 8, wherein the surface of the hollow silica fine particles are subjected to terminal (meth)acrylic modification, by a hydrothermal reaction at 100˚C to 150˚C or a reaction under microwave irradiation, with a (meth)acrylic-terminated silane coupling agent represented by the following General formula (IV) :

[Chemical formula 41]

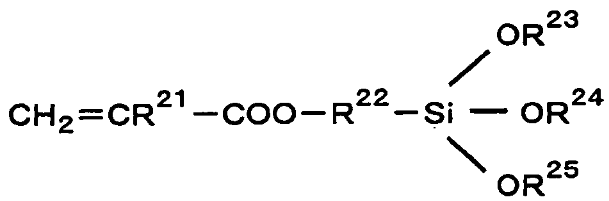

(IV)

(in the above-described General formula (IV), $R^{21}$ represents a hydrogen atom, a fluorine atom, or a methyl group, $R^{22}$ represents an alkylene group having the carbon number of 1 to 8 or a fluoroalkylene group having the carbon number of 1 to 8 in which at least one fluorine atom has substituted for at least one hydrogen atom, and $R^{23}$ to $R^{25}$ independently represent a hydrogen atom or an alkyl group having the carbon number of 1 to 4).

**12.** The process according to Claim 8, wherein the surface of the hollow silica fine particles are subjected to terminal fluoroalkyl modification, by a hydrothermal reaction at 100˚C to 150˚C or a reaction under microwave irradiation, with a fluoroalkyl-terminated silane coupling agent represented by the following General formula (V):

[Chemical formula 42]

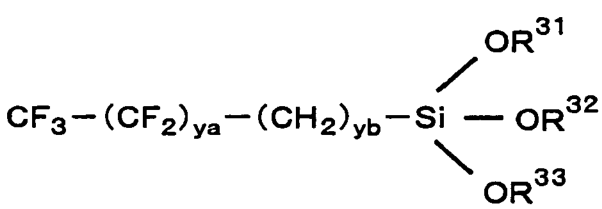

(V)

(in the above-described General formula (V), $R^{31}$ to $R^{33}$ independently represent a hydrogen atom or an alkyl group having the carbon number of 1 to 4, ya represents an integer of 1 to 8, and yb represents an integer of 1 to 3).

**13.** The process according to Claim 8, wherein the high refractive index layer (83) comprises high refractive index fine particles and a binder component containing an aromatic group.

**14.** The process according to Claim 8, wherein the antireflection layer (80) is disposed directly on the transparent substrate.

**15.** The process according to Claim 8, wherein the antireflection layer (80) is an antireflection film adhered to the outermost surface, and the antireflection film comprises a hard coat layer (82), a high refractive index layer (83), and a low refractive index layer (84), which are laminated in that order on a transparent base film 81).

**16.** A process for preparing a gas discharge type light emitting panel, comprising laminating and integrating a light emitting panel main body, an electromagnetic wave shielding layer disposed on the front of the light emitting panel main body, and an antireflection layer (80) serving as an outermost surface layer,
wherein the antireflection layer (80) is provided with a high refractive index layer (83) and a low refractive index layer (84) disposed on the high refractive index layer (83), and
the low refractive index layer (84) is composed of a photo-cured coating film containing:

hollow silica fine particles;
a polyfunctional (meth)acrylic compound; and
a photopolymerization initiator, wherein the polyfunctional (meth)acrylic compound comprises, as primary components, a hexafunctional (meth)acrylic compound represented by the following General formula (I) and/or a tetrafunctional (meth)acrylic compound represented by the following General formula (II) :

[ Chemical formula 43]

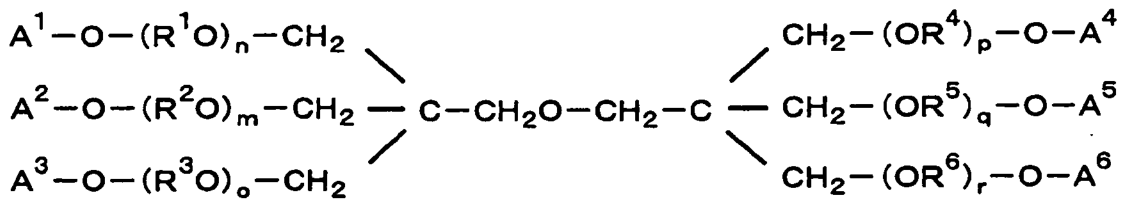

(I)

(in the above-described General formula (I), $A^1$ to $A^6$ independently represent an acryloyl group, a methacryloyl group, an α-fluoroacryloyl group, or a trifluoromethacryloyl group,
n, m, o, p, q, and r independently represent an integer of 0 to 2, and
$R^1$ to $R^6$ independently represent an alkylene group having the carbon number of 1 to 3 or a fluoroalkylene group having the carbon number of 1 to 3 in which at least one fluorine atom has substituted for at least one hydrogen atom), and

[ Chemical formula 44]

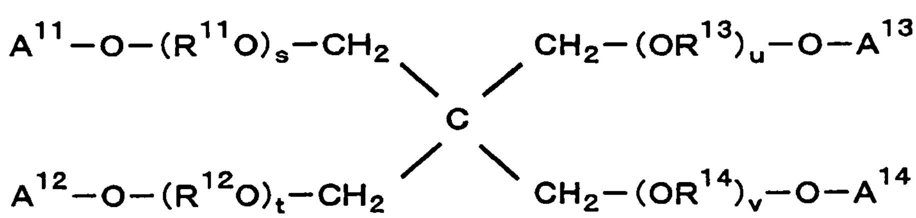

(II)

(in the above-described General formula (II), $A^{11}$ to $A^{14}$ independently represent an acryloyl group, a methacryloyl group, an α-fluoroacryloyl group, or a trifluoromethacryloyl group,

s, t, u, and v independently represent an integer of 0 to 2, and $R^{11}$ to $R^{14}$ independently represent an alkylene group having the carbon number of 1 to 3 or a fluoroalkylene group having the carbon number of 1 to 3 in which at least one fluorine atom has substituted for at least one hydrogen atom).

**17.** The process according to Claim 16, wherein the polyfunctional (meth)acrylic compound further comprises a fluorine-containing difunctional (meth)acrylic compound represented by the following General formula (III), and the proportion of the fluorine-containing difunctional (meth)acrylic compound in the entire polyfunctional (meth)acrylic compounds is 5 percent by weight or morse:

$$A^a\text{-O-}(CH^2)_{xa}\text{-Rf-}(CH_2)_{xb}\text{-O-}A^b \qquad \text{(III)}$$

(in the above-described General formula (III), $A^a$ and $A^b$ independently represent an acryloyl group, a methacryloyl group, an $\alpha$-fluoroacryloyl group, or a trifluoromethacryloyl group, Rf represents a perfluoroalkylene group, and xa and xb independently represent an integer of 0 to 3).

**18.** The process according to Claim 16, wherein the polyfunctional (meth)acrylic compound further comprises at least one type of fluorine-containing polyfunctional (meth)acrylic compound selected from the group consisting of trifunctional to hexafunctional (meth)acrylic compounds having at least 6 fluorine atoms in a molecule and a molecular weight of 1,000 or less and hexafunctional to pentadecafunctional (meth)acrylic compounds having at least 10 fluorine atoms in a molecule and a molecular weight of 1,000 to 5,000, and the proportion of the fluorine-containing polyfunctional (meth)acrylic compound in the entire polyfunctional (meth)acrylic compounds is 5 percent by weight or more.

**19.** The process according to Claim 16, wherein the surface of the hollow silica fine particles are subjected to terminal (meth)acrylic modification by a hydrothermal reaction at 100˚C to 150˚C or a reaction under microwave irradiation with a (meth)acrylic-terminated silane coupling agent represented by the following General formula (IV) :

[Chemical formula 45]

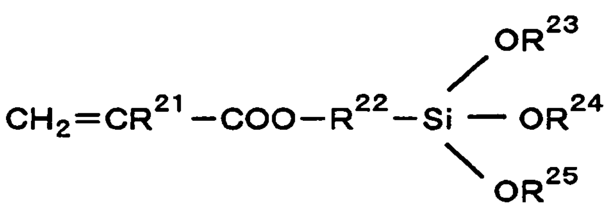

(IV)

(in the above-described General formula (IV), $R^{21}$ represents a hydrogen atom, a fluorine atom, or a methyl group, $R^{22}$ represents an alkylene group having the carbon number of 1 to 8 or a fluoroalkylene group having the carbon number of 1 to 8 in which at least one fluorine atom has substituted for at least one hydrogen atom, and $R^{23}$ to $R^{25}$ independently-represent a hydrogen atom or an alkyl group having the carbon number of 1 to 4).

**20.** The process according to Claim 16, wherein the surface of the hollow silica fine particles are subjected to terminal fluoroalkyl modification, by a hydrothermal reaction at 100˚C to 150˚C or a reaction under microwave irradiation, with a fluoroalkyl-terminated silane coupling agent represented by the following General formula (V) :

[Chemical formula 46]

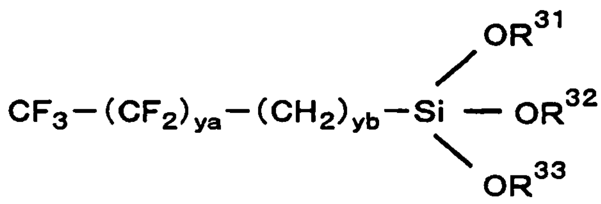

(V)

(in the above-described General formula (V), $R^{31}$ to $R^{33}$ independently represent a hydrogen atom or an alkyl group having the carbon number of 1 to 4, ya represents an integer of 1 to 8, and yb represents an integer of 1 to 3).

**21.** The process according to Claim 16, wherein the high refractive index (83) layer comprises high refractive index fine particles and a binder component containing an aromatic group.

**22.** The process according to Claim 16, wherein a transparent substrate is disposed on the front side of the light emitting panel, and the antireflection layer (80) is disposed directly on the transparent substrate.

**23.** The process according to Claim 16, wherein the antireflection layer (80) is an antireflection film adhered to the outermost surface, and the antireflection film comprises a hard coat layer (82), a high refractive index layer (83), and a low refractive index layer (84), which are laminated in that order on a transparent base film (81).

**24.** A process for preparing a flat display panel, comprising forming on the surface of the panel, an antireflection layer (90) provided with a high refractive index layer (93) and a low refractive index layer (94) disposed on the high refractive index layer (93),
wherein the low refractive index layer (94) is composed of a photo-cured coating film containing:

hollow silica fine particles;
a polyfunctional (meth)acrylic compound; and
a photopolymerization initiator,

wherein the polyfunctional (meth)acrylic compound comprises, as primary components, a hexafunctional (meth) acrylic compound represented by the following General formula (I) and/or a tetrafunctional (meth)acrylic compound represented by the following General formula (II):

[Chemical formula 47]

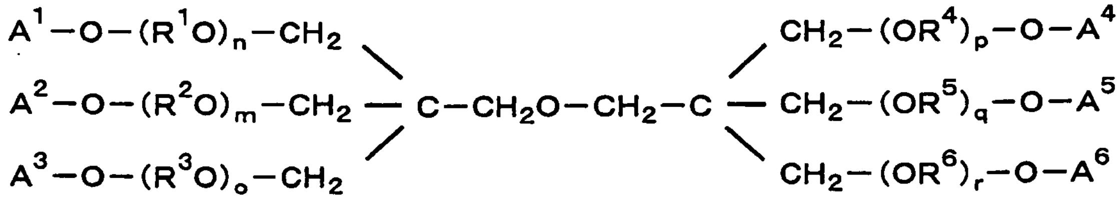

(I)

(in the above-described General formula (I), $A^1$ to $A^6$ independently represent an acryloyl group, a methacryloyl group, an $\alpha$-fluoroacryloyl group, or a trifluoromethacryloyl group,
n, m, o, p, q, and r independently represent an integer of 0 to 2, and
$R^1$ to $R^6$ independently represent an alkylene group having the carbon number of 1 to 3 or a fluoroalkylene group having the carbon number of 1 to 3 in which at least one fluorine atom has substituted for at least one hydrogen atom), and

[Chemical formula 48]

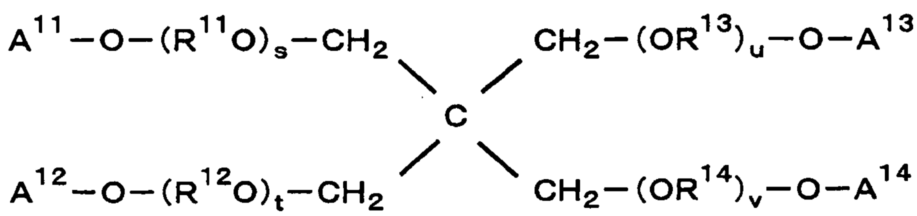

(II)

(in the above-described General formula (II), $A^{11}$ to $A^{14}$ independently represent an acryloyl group, a methacryloyl group, an $\alpha$-fluoroacryloyl group, or a trifluoromethacryloyl group,
s, t, u, and v independently represent an integer of 0 to 2, and
$R^{11}$ to $R^{14}$ independently represent an alkylene group having the carbon number of 1 to 3 or a fluoroalkylene group having the carbon number of 1 to 3 in which at least one fluorine atom has substituted for at least one hydrogen atom).

**25.** The process according to Claim 24, wherein the polyfunctional (meth) acrylic compound further comprises a fluorine-containing difunctional (meth)acrylic compound represented by the following General formula (III), and the proportion of the fluorine-containing difunctional (meth)acrylic compound in the entire polyfunctional (meth)acrylic compounds is 5 percent by weight or more:

$$A^a\text{-O-}(CH_2)_{xa}\text{-Rf-}(CH_2)_{xb}\text{-O-}A^b \qquad \text{(III)}$$

(in the above-described General formula (III), $A^a$ and $A^b$ independently represent an acryloyl group, a methacryloyl group, an $\alpha$-fluoroacryloyl group, or a trifluoromethacryloyl group, Rf represents a perfluoroalkylene group, and xa and independently represent an integer of 0 to 3).

**26.** The process according to Claim 24, wherein the polyfunctional (meth)acrylic compound further comprises at least one type of fluorine-containing polyfunctional (meth)acrylic compound selected from the group consisting of trifunctional to hexafunctional (meth)acrylic compounds having at least 6 fluorine atoms in a molecule and a molecular weight of 1,000 or less and hexafunctional to pentadecafunctional (meth)acrylic compounds having at least 10 fluorine atoms in a molecule and a molecular weight of 1,000 to 5,000, and the proportion of the fluorine-containing polyfunctional (meth)acrylic compound in the entire polyfunctional (meth)acrylic compounds is 5 percent by weight or more.

**27.** The process according to Claim 24, wherein the surface of the hollow silica fine particles are subjected to terminal (meth)acrylic modification, by a hydrothermal reaction at 100˚C to 150˚C or a reaction under microwave irradiation, with a (meth)acrylic-terminated silane coupling agent represented by the following General formula (IV):

[Chemical formula 49]

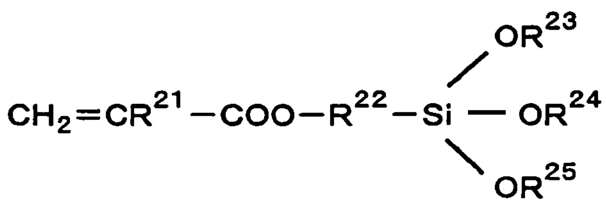

(IV)

(in the above-described General formula (IV), $R^{21}$ represents a hydrogen atom, a fluorine atom, or a methyl group, $R^{22}$ represents an alkylene group having the carbon number of 1 to 8 or a fluoroalkylene group having the carbon number of 1 to 8 in which at least one fluorine atom has substituted for at least one hydrogen atom, and $R^{23}$ to $R^{25}$ independently represent a hydrogen atom or an alkyl group having the carbon number of 1 to 4).

**28.** The process according to Claim 24, wherein the surface of the hollow silica fine particles are subjected to terminal fluoroalkyl modification, by a hydrothermal reaction at 100˚C to 150˚C or a reaction under microwave irradiation, with a fluoroalkyl-terminated silane coupling agent represented by the following General formula (V):

[Chemical formula 50]

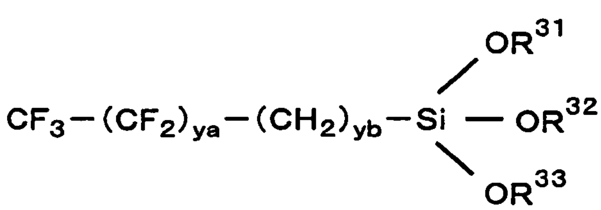

(V)

(in the above-described General formula (V), $R^{31}$ to $R^{33}$ independently represent a hydrogen atom or an alkyl

group having the carbon number of 1 to 4, ya represents an integer of 1 to 8, and yb represents an integer of 1 to 3).

**29.** The process according to Claim 24, wherein the high refractive index layer (93) comprises high refractive index fine particles and a binder component containing an aromatic group.

**30.** The process according to claim 24, wherein a transparent substrate is disposed on the surface side, and the antireflection layer (90) is disposed directly on the transparent substrate.

**31.** The process according to Claim 24, wherein the antireflection layer is an antireflection film adhered to the outermost surface, and the antireflection film comprises a hard coat layer (92) , a high refractive index layer (93), and a low refractive index layer (94), which, are laminated in that order on a transparent base film (91).

**32.** The process according to Claim 28, wherein the display surface reflection color is brought close to a neutral color by increasing the film thickness of the high refractive index layer and, in addition, decreasing the film thickness of the low refractive index layer in such a way that the wavelength of the antireflection layer exhibiting a minimum reflectance is not varied, while the reflectance at the wavelength exhibiting the minimum reflectance is increased but the average reflectance in the visible light region is decreased.

**33.** A process for preparing a show window material comprising forming on the surface of the material, an antireflection layer provided with a high refractive index layer and a low refractive index layer disposed on the high refractive index layer,
wherein the low refractive index layer is composed of a photo-cured coating film containing:

hollow silica fine particles;
a polyfunctional (meth)acrylic compound; and
a photopolymerization initiator, wherein

wherein the polyfunctional (meth)acrylic compound comprises, as primary components, a hexafunctional (meth) acrylic compound represented by the following General formula (I) and/or a tetrafunctional (meth)acrylic compound represented by the following General formula (II):

[Chemical formula 51]

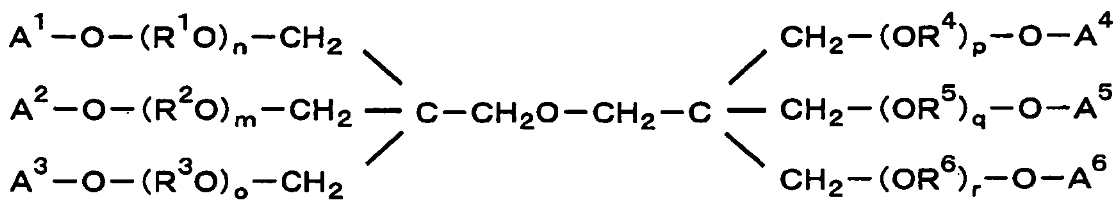

(I)

(in the above-described General formula (I), $A^1$ to $A^6$ independently represent an acryloyl group, a methacryloyl group, an $\alpha$-fluoroacryloyl group, or a trifluoromethacryloyl group,
n, m, o, p, q, and r independently represent an integer of 0 to 2, and
$R^1$ to $R^6$ independently represent an alkylene group having the carbon number of 1 to 3 or a fluoroalkylene group having the carbon number of 1 to 3 in which at least one fluorine atom has substituted for at least one hydrogen atom), and

[Chemical formula 52]

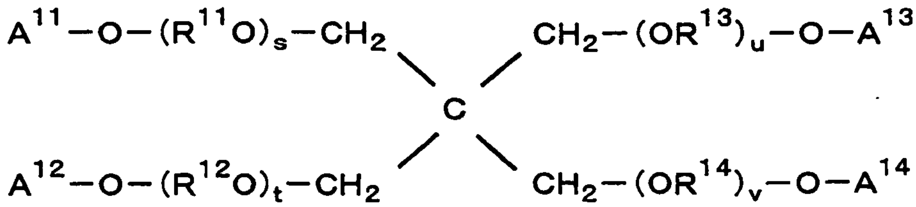

(II)

(in the above-described General formula (II), $A^{11}$ to $A^{14}$ independently represent an acryloyl group, a methacryloyl group, an $\alpha$-fluoroacryloyl group, or a trifluoromethacryloyl group,
s, t, u, and v independently represent an integer of 0 to 2, and
$R^{11}$ to $R^{14}$ independently represent an alkylene group having the carbon number of 1 to 3 or a fluoroalkylene group having the carbon number of 1 to 3 in which at least one fluorine atom has substituted for at least one hydrogen atom).

**34.** The process according to Claim 33, wherein the polyfunctional (meth) acrylic compound further comprises a fluorine-containing difunctional (meth)acrylic compound represented by the following General formula (III), and the proportion of the fluorine-containing difunctional (meth)acrylic compound in the entire polyfunctional (meth)acrylic compounds is 5 percent by weight or more:

$$A^a\text{-O-}(CH_2)_{xa}\text{-Rf-}(CH_2)_{xb}\text{-O-}A^b \qquad (III)$$

(in the above-described General formula (III), $A^a$ and $A^b$ independently represent an acryloyl group, a methacryloyl group, an $\alpha$-fluoroacryloyl group, or a trifluoromethacryloyl group, Rf represents a perfluoroalkylene group, and xa and xb independently represent an integer of 0 to 3).

**35.** The process according to Claim 33 wherein in the polyfunctional (meth) acrylic compound further comprises at least one type of fluorine-containing polyfunctional (meth)acrylic compound selected from the group consisting of trifunctional to hexafunctional (meth)acrylic compounds having at least 6 fluorine atoms in a molecule and a molecular weight of 1,000 or less and hexafunctional to pentadecafunctional (meth)acrylic compounds having at least 10 fluorine atoms in a molecule and a molecular weight of 1,000 to 5,000, and the proportion of the fluorine-containing polyfunctional (meth)acrylic compound in the entire polyfunctional (meth) acrylic compounds is 5 percent by weight or more.

**36.** The process according to Claim 33 wherein the surface of the hollow silicate fine particles are subjected to terminal (meth)acrylic modification, by a hydrothermal reaction at 100˚C to 150˚C or a reaction under microwave irradiation, with a (meth)acrylic-terminated silane coupling agent represented by the following General formula (IV):

[Chemical formula 53]

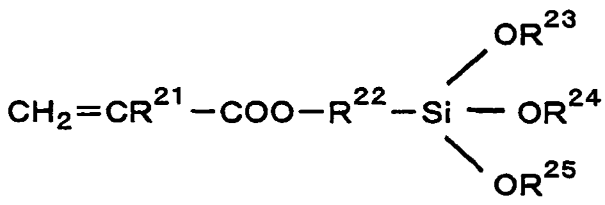

(IV)

(in the above-described General formula (IV), $R^{21}$ represents a hydrogen atom, a fluorine atom, or a methyl group, $R^{22}$ represents an alkylene group having the carbon number of 1 to 8 or a fluoroalkylene group having the carbon number of 1 to 8 in which at least one fluorine atom has substituted for at least one hydrogen atom, and $R^{23}$ to $R^{25}$ independently represent a hydrogen atom or an alkyl group having the carbon number of 1 to 4).

**37.** The process according to Claim 33, wherein the surface of the hollow silical fine particles are subjected to terminal fluoroalkyl modification, by a hydrothermal reaction at 100˚C to 150˚C or a reaction under microwave irradiation, with a fluoroalkyl-terminated silane coupling agent represented by the following General formula (V):

[Chemical formula 54]

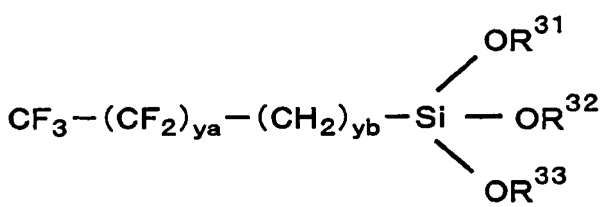

(V)

(in the above-described General formula (V), $R^{31}$ to $R^{33}$ independently represent a hydrogen atom or an alkyl group having the carbon number of 1 to 4, ya represents an integer of 1 to 8, and yb represents an integer of 1 to 3).

**38.** The process according to Claim 33, wherein the high refractive index layer comprises high refractive index fine particles and a binder component containing an aromatic group.

**39.** The process according to Claim 33, wherein the material comprises a transparent substrate and the antireflection layer disposed directly on the surface of the transparent substrate.

**40.** The process according to Claim 33, wherein the material comprise, a transparent substrate and an antireflection film adhered to the surface of the transparent substrate and composed of a hard coat layer, a high refractive index

layer, and a low refractive index layer, which are laminated in that order on a transparent base film.

**41.** The process according to Claim 33, wherein the color difference between an actual color of an exhibit and a visually identified color is reduced by increasing the film thickness of the high refractive index layer and, in addition, decreasing the film thickness of the low refractive index layer in such a way that the wavelength of the antireflection layer exhibiting a minimum reflectance is not varied, while the reflectance at the wavelength exhibiting the minimum reflectance is increased but the average reflectance in the visible light region is decreased.

**42.** A process for preparing a solar cell module, comprising sealing a cell for a solar cell between a surface-side transparent protective material and a back-side transparent protective material and an antireflection layer (101A, 101B, 101C) is disposed on the surface of the surface-side transparent protective material,
wherein the antireflection layer (101A, 101B, 101C) is provided with a high refractive index layer (104) and a low refractive index layer (105) disposed on the high refractive index layer (104), and
the low refractive index layer (105) is composed of a photo-cured coating film containing:

hollow silica fine particles;
a polyfunctional (meth)acrylic compound; and
a photopolymerization initiator,

wherein the polyfunctional (meth)acrylic compound comprises, as primary components, a hexafunctional (meth) acrylic compound represented by the following General formula (I) and/or a tetrafunctional (meth)acrylic compound represented by the following General formula (II):

[Chemical formula 55]

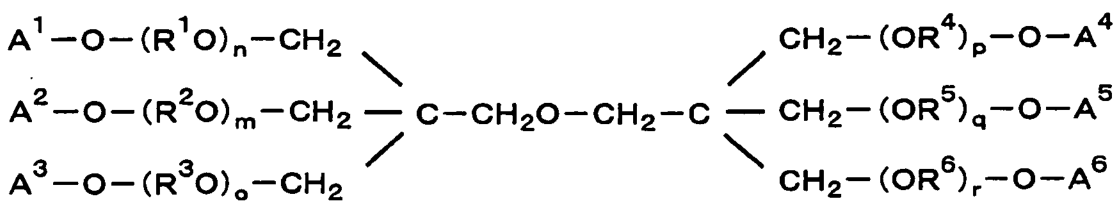

(I)

(in the above-described General formula (I), $A^1$ to $A^6$ independently represent an acryloyl group, a methacryloyl group, an $\alpha$-fluoroacryloyl group, or a trifluoromethacryloyl group,
n, m, o, p, q, and r independently represent an integer of 0 to 2, and
$R^1$ to $R^6$ independently represent an alkylene group having the carbon number of 1 to 3 or a fluoroalkylene group having the carbon number of 1 to 3 in which at least one fluorine atom has substituted for at least one hydrogen atom), and

[Chemical formula 56]

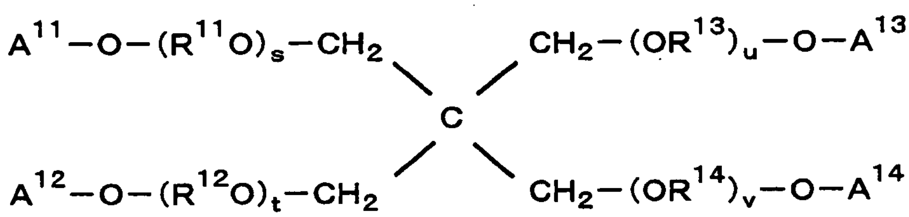

(II)

(in the above-described General formula (II), $A^{11}$ to $A^{14}$ independently represent an acryloyl group, a methacryloyl group, an $\alpha$-fluoroacryloyl group, or a trifluoromethacryloyl group,
s, t, u, and v independently represent an integer of 0 to 2, and
$R^{11}$ to $R^{14}$ independently represent an alkylene group having the carbon number of 1 to 3 or a fluoroalkylene group having the carbon number of 1 to 3 in which at least one fluorine atom has substituted for at least one hydrogen atom).

**43.** The process according to Claim 42, wherein the polyfunctional (meth) acrylic compound further comprises a fluorine-containing difunctional (meth)acrylic compound represented by the following General formula (III), and the proportion of the fluorine-containing difunctional (meth)acrylic compound in the entire polyfunctional (meth)acrylic compounds is 5 percent by weight or more:

$$A^a\text{-O-}(CH_2)_{xa}\text{-Rf-}(CH_2)_{xb}\text{-O-}A^b \qquad \text{(III)}$$

(in the above-described General formula (III), $A^a$ and $A^b$ independently represent an acryloyl group, a methacryloyl group, an $\alpha$-fluoroacryloyl group, or a trifluoromethacryloyl group, Rf represents a perfluoroalkylene group, and xa and xb independently represent an integer of 0 to 3).

**44.** The process according to Claim 42, wherein the polyfunctional (meth) acrylic compound further comprises at least one type of fluorine-containing polyfunctional (meth)acrylic compound selected from the group consisting of trifunctional to hexafunctional (meth)acrylic compounds having at least 6 fluorine atoms in a molecule and a molecular weight of 1,000 or less and hexafunctional to pentadecafunctional (meth)acrylic compounds having at least 10 fluorine atoms in a molecule and a molecular weight of 1,000 to 5,000, and the proportion of the fluorine-containing polyfunctional (meth)acrylic compound in the entire polyfunctional (meth)acrylic compounds is 5 percent by weight or more.

**45.** The process according to Claim 42, wherein hollow silica fine particles are (meth) acrylic-modified hollow silica fine particles having a surface subjected to terminal (meth)acrylic modification, by a hydrothermal reaction at 100°C to 150°C or a reaction under microwave irradiation, with a (meth)acrylic-terminated silane coupling agent represented by the following General formula (IV):

[Chemical formula 57]

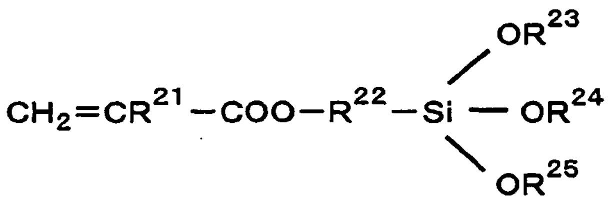

(IV)

(in the above-described General formula (IV), $R^{21}$ represents a hydrogen atom, a fluorine atom, or a methyl group $R^{22}$ represents an alkylene group having the carbon number of 1 to 8 or a fluoroalkylene group having the carbon number of 1 to 8 in which at least one fluorine atom has substituted for at least one hydrogen atom, and $R^{23}$ to $R^{25}$ independently represent a hydrogen atom or an alkyl group having the carbon number of 1 to 4).

**46.** The process according to Claim 42, wherein the hollow silica fine particles are fluoroalkyl-modified hollow silica, fine particles having a surface subjected to terminal fluoroalkyl modification, by a hydrothermal reaction at 100˚C to 150˚C or a reaction under microwave irradiation, with a fluoroalkyl-terminated silane coupling agent represented by the following General formula (V):

[Chemical formula 58]

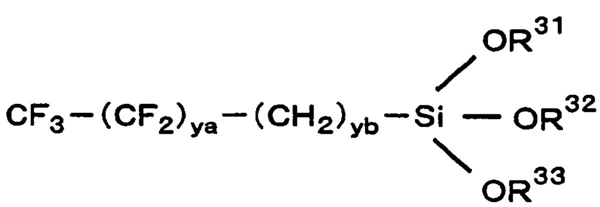

(V)

(in the above-described General formula (V), $R^{31}$ to $R^{33}$ independently represent a hydrogen atom or an alkyl group having the carbon number of 1 to 4, ya represents an integer of 1 to 8, and yb represents an integer of 1 to 3).

**47.** The process according to Claim 42, wherein the high refractive index layer comprises high refractive index fine particles and a binder component containing an aromatic group.

**48.** The process according to Claim 42, wherein the antireflection layer (101A, 101B, 101C) is disposed directly on the surface-side transparent protective material.

**49.** The process according to Claim 42,
wherein the antireflection layer (101A, 101B, 101C) is an antireflection film adhered to the surface-side transparent

protective material and the antireflection film is composed of the high refractive index layer (104) and the low refractive index layer (105), which are laminated in that order on a transparent base film (102).

**50.** The process according to Claim 49, wherein a hard coat layer is disposed between the transparent base film and the high refractive index layer.

**51.** The process according to Claim 42, wherein the wavelength of the antireflection layer exhibiting a minimum reflectance is allowed to shift to the shorter wavelength side by decreasing the film thickness of the high refractive index layer or the low refractive index layer.

**Patentansprüche**

**1.** Verfahren zur Herstellung einer Antireflexfolie, umfassend das Laminieren einer Hartbelagschicht (2), einer Schicht mit hohem Brechungsindex (3) und einer Schicht mit niedrigem Brechungsindex (4), in dieser Reihenfolge auf eine transparente Grundfolie (1),
wobei die Schicht mit niedrigem Brechungsindex (4) durch das Aufbringen einer Beschichtungsfolie auf die Schicht mit hohem Brechungsindex und das Aushärten des Beschichtungsfolie durch Ultraviolettstrahlung in einer Atmosphäre, die eine Sauerstoffkonzentration von 0 bis 10.000 ppm aufweist, gebildet wird, **dadurch gekennzeichnet, dass** die Beschichtungsfolie Folgendes enthält:

hohle Siliciumdioxidfeinteilchen;
eine polyfunktionelle (Meth)acrylverbindung; und
einen Photopolymerisationsinitiator, wobei die polyfunktionelle (Meth)acrylverbindung als primäre Komponenten eine hexafunktionelle (Meth)acrylverbindung, die durch die folgende allgemeine Formel (I) dargestellt ist, und/oder eine tetrafunktionelle (Meth)acrylverbindung, die durch die folgende allgemeine Formel (II) dargestellt ist:

[Chemische Formel 26]

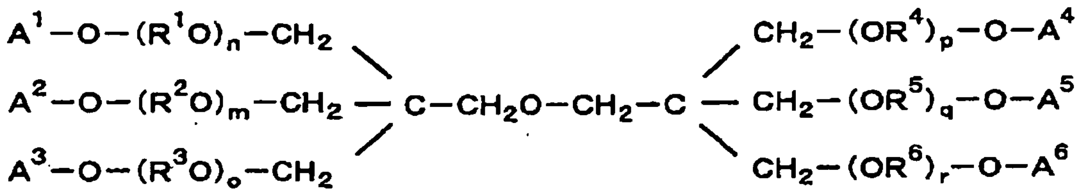

(I)

(in der oben beschriebenen allgemeinen Formel (I) stellen $A^1$ bis $A^6$ unabhängig eine Acryloylgruppe, eine Methacryloylgruppe, eine α-Fluoracryloyigruppe oder eine Trifluormethacryloylgruppe dar,
n, m, o, p, q und r stellen unabhängig eine ganze Zahl von 0 bis 2 dar und
$R^1$ bis $R^6$ stellen unabhängig eine Alkylengruppe, die die Kohlenstoffzahl von 1 bis 3 aufweist, oder eine Fluoralkylengruppe, die die Kohlenstoffzahl von 1 bis 3 aufweist, dar, wobei mindestens ein Fluoratom durch mindestens ein Wasserstoffatom substituiert ist) und

[Chemische Formel 27]

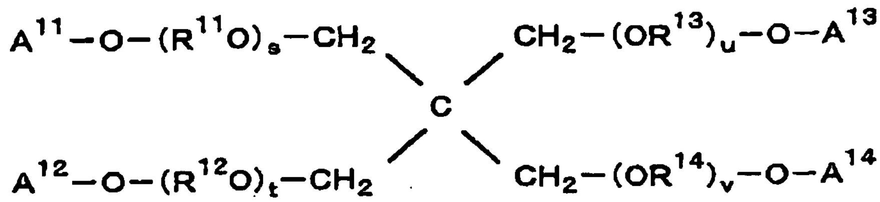

(II)

(in der oben beschriebenen allgemeinen Formel (II) stellen $A^{11}$ bis $A^{14}$ unabhängig eine Acryloylgruppe, eine Methacryloylgruppe, eine α-Fluoracryloylgruppe oder eine Trifluormethacryloylgruppe dar,
s, t, u und v stellen unabhängig eine ganze Zahl von 0 bis 2 dar und
$R^{11}$ bis $R^{14}$ stellen unabhängig eine Alkylengruppe, die die Kohlenstoffzahl von 1 bis 3 aufweist, oder eine Fluoralkylengruppe, die die Kohlenstoffzahl von 1 bis 3 aufweist, dar, wobei mindestens ein Fluoratom durch mindestens ein Wasserstoffatom substituiert ist).

2. Verfahren nach Anspruch 1, wobei die polyfunktionelle (Meth)acrylverbindung des Weiteren eine fluorhaltige difunktionelle (Meth)acrylverbindung umfasst, die durch die folgende allgemeine Formel (III) dargestellt ist, und der Anteil der fluorhaltigen difunktionellen (Meth)acrylverbindung in den gesamten polyfunktionellen (Meth)acrylverbindungen 5 Gewichtsprozent oder mehr beträgt:

$$A^a\text{-O-}(CH_2)xa\text{-Rf-}(CH_2)xb\text{-O-}A^b \qquad \text{(III)}$$

(in der oben beschriebenen allgemeinen Formel (III) stellen $A^a$ und $A^b$ unabhängig eine Acryloylgruppe, eine Methacryloylgruppe, eine α-Fluoracryloylgruppe oder eine Trifluormethacryloylgruppe dar, Rf stellt eine Perfluoralkylengruppe dar und xa und xb stellen unabhängig eine ganze Zahl von 0 bis 3 dar).

3. Verfahren nach Anspruch 2, wobei die polyfunktionelle (Meth)acrylverbindung des Weiteren mindestens einen Typ fluorhaltige polyfunktionelle (Meth)acrylverbindung umfasst, ausgewählt aus der Gruppe bestehend aus trifunktionellen bis hexafunktionellen (Meth)acrylverbindungen, die mindestens 6 Fluoratome in einem Molekül und ein Molekulargewicht von 1.000 oder weniger aufweisen, und hexafunktionellen bis pentadekafunktionellen (Meth) acrylverbindungen, die mindestens 10 Fluoratome in einem Molekül und ein Molekulargewicht von 1.000 bis 5.000 aufweisen, und der Anteil der fluorhaltigen polyfunktionellen (Meth)acrylverbindung in den gesamten polyfunktionellen (Meth)acrylverbindungen 5 Gewichtsprozent oder mehr beträgt.

4. Verfahren nach Anspruch 1, wobei die hohlen Siliciumdioxidfeinteilchen (meth)acrylmodifizierte hohle Siliciumdioxidfeinteilchen sind, bei denen eine Oberfläche einer terminalen (Meth)acrylmodifikation mit einem (meth)acrylterminierten Silankopplungsmittel unterworfen wird, das durch folgende allgemeine Formel (IV) dargestellt ist:

[Chemische Formel 28]

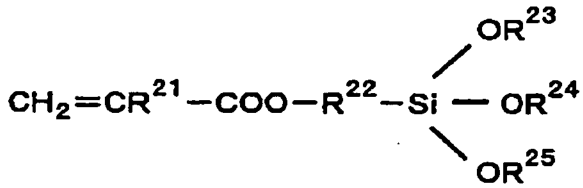

(IV)

(in der oben beschriebenen allgemeinen Formel (IV) stellt $R^{21}$ ein Wasserstoffatom, ein Fluoratom oder eine Methylgruppe dar,
$R^{22}$ stellt eine Alkylengruppe, die die Kohlenstoffzahl von 1 bis 8 aufweist, oder eine Fluoralkylengruppe, die die Kohlenstoffzahl von 1 bis 8 aufweist, dar, wobei mindestens ein Fluoratom durch mindestens ein Wasserstoffatom substituiert ist, und
$R^{23}$ bis $R^{25}$ stellen unabhängig ein Wasserstoffatom oder eine Alkylgruppe dar, die die Kohlenstoffzahl von 1 bis 4 aufweist).

**5.** Verfahren nach Anspruch 4, wobei die die Oberfläche der hohlen Siliciumdioxidfeinteilchen einer terminalen (Meth) acrylmodifikation mit dem (meth)acrylterminierten Silankopplungsmittel durch eine hydrothermische Reaktion bei 100 °C bis 150 °C oder eine Reaktion unter Mikrowellenbestrahlung unterworfen wird.

**6.** Verfahren nach Anspruch 1, wobei die hohlen Siliciumdioxidfeinteilchen fluoralkylmodifizierte hohle Siliciumdioxidfeinteilchen sind, von denen eine Oberfläche einer terminalen Fluoralkylmodifikation mit einem fluoralkylterminierten Silankopplungsmittel unterworfen wird, das durch die folgende allgemeine Formel (V) dargestellt ist:

[Chemische Formel 29]

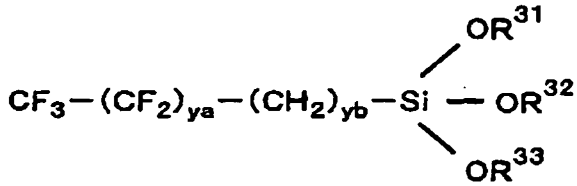

(V)

(in der oben beschriebenen allgemeinen Formel (V) stellen $R^{31}$ bis R33 unabhängig ein Wasserstoffatom oder eine Alkylgruppe, die die Kohlenstoffzahl von 1 bis 4 aufweist, dar, ya stellt eine ganze Zahl von 1 bis 8 dar, und yb stellt eine ganze Zahl von 1 bis 3 dar).

**7.** Verfahren nach Anspruch 6, wobei die Oberfläche der hohlen Siliciumdioxidfeinteilchen einer terminalen Fluoralkylmodifikation mit dem fluoralkylterminierten Silankopplungsmittel durch eine hydrothermische Reaktion bei 100 °C bis 150 °C oder eine Reaktion unter Mikrowellenbestrahlung unterworfen wird.

**8.** Verfahren zur Herstellung eines gegen elektromagnetische Wellen schützenden, lichtdurchlässigen Fenstermaterials, umfassend das Laminieren und Integrieren einer gegen elektromagnetische Wellen schützenden Schicht, eines transparenten Substrats und einer Antireflexschicht (80), die als äußerste Oberflächenschicht dient,
wobei die Antireflexschicht (80) mit einer Schicht mit hohem Brechungsindex (83) und einer Schicht mit niedrigem Brechungsindex (84), die sich auf der Schicht mit hohem Brechungsindex (83) befindet, ausgestattet ist, und
die Schicht mit niedrigem Brechungsindex (84) aus einer photoausgehärteten Beschichtungsfolie besteht, die Folgendes enthält:

hohle Siliciumdioxidfeinteilchen;
eine polyfunktionelle (Meth)acrylverbindung; und
einen Photopolymerisationsinitiator, wobei die polyfunktionelle (Meth)acrylverbindung als primäre Komponenten eine hexafunktionelle (Meth)acrylverbindung, die durch die folgende allgemeine Formel (I) dargestellt ist, und/oder eine tetrafunktionelle (Meth)acrylverbindung, die durch die folgende allgemeine Formel (II) dargestellt ist, umfasst:

[Chemische Formel 39]

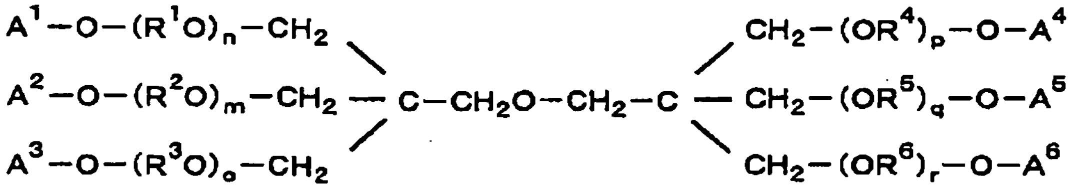

(I)

(in der oben beschriebenen allgemeinen Formel (I) stellen $A^1$ bis $A^6$ unabhängig eine Acryloylgruppe, eine Methacryloylgruppe, eine α-Fluoracryloylgruppe oder eine Trifluormethacryloylgruppe dar,
n, m, o, p, q und r stellen unabhängig eine ganze Zahl von 0 bis 2 dar und
$R^1$ bis $R^6$ stellen unabhängig eine Alkylengruppe, die die Kohlenstoffzahl von 1 bis 3 aufweist, oder eine Fluoralkylengruppe, die die Kohlenstoffzahl von 1 bis 3 aufweist, dar, wobei mindestens ein Fluoratom durch mindestens ein Wasserstoffatom substituiert ist) und

[Chemische Formel 40]

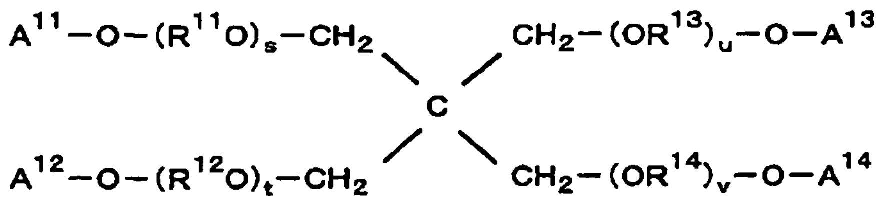

(II)

(in der oben beschriebenen allgemeinen Formel (II) stellen $A^{11}$ bis $A^{14}$ unabhängig eine Acryloylgruppe, eine Methacryloylgruppe, eine α-Fluoracryloylgruppe oder eine Trifluormethacryloylgruppe dar,
s, t, u und v stellen unabhängig eine ganze Zahl von 0 bis 2 dar und
$R^{11}$ bis $R^{14}$ stellen unabhängig eine Alkylengruppe, die die Kohlenstoffzahl von 1 bis 3 aufweist, oder eine Fluoralkylengruppe, die die Kohlenstoffzahl von 1 bis 3 aufweist, wobei mindestens ein Fluoratom durch mindestens ein Wasserstoffatom substituiert ist).

**9.** Verfahren nach Anspruch 8, wobei die polyfunktionelle (Meth)acrylverbindung des Weiteren eine fluorhaltige difunktionelle (Meth)acrylverbindung umfasst, die durch die folgende allgemeine Formel (III) dargestellt ist, und der Anteil der fluorhaltigen difunktionellen (Meth)acrylverbindung in den gesamten polyfunktionellen (Meth)acrylverbindungen 5 Gewichtsprozent oder mehr beträgt:

$$A^a\text{-O-}(CH_2)xa\text{-Rf-}(CH_2)xb\text{-O-}A^b \qquad (III)$$

(in der oben beschriebenen allgemeinen Formel (III) stellen $A^a$ und $A^b$ unabhängig eine Acryloylgruppe, eine Methacryloylgruppe, eine α-Fluoracryloylgruppe oder eine Trifluormethacryloylgruppe dar, Rf stellt eine Perfluoralkylengruppe dar und xa und xb stellen unabhängig eine ganze Zahl von 0 bis 3 dar).

**10.** Verfahren nach Anspruch 8, wobei die polyfunktionelle (Meth)acrylverbindung des Weiteren mindestens einen Typ fluorhaltige polyfunktionelle (Meth)acrylverbindung umfasst, ausgewählt aus der Gruppe bestehend aus trifunktionellen bis hexafunktionellen (Meth)acrylverbindungen, die mindestens 6 Fluoratome in einem Molekül und ein Molekulargewicht von 1.000 oder weniger aufweisen, und hexafunktionellen bis pentadekafunktionellen (Meth)acrylverbindungen, die mindestens 10 Fluoratome in einem Molekül und ein Molekulargewicht von 1.000 bis 5.000 aufweisen, und der Anteil der fluorhaltigen polyfunktionellen (Meth)acrylverbindung in den gesamten polyfunktionellen (Meth)acrylverbindungen 5 Gewichtsprozent oder mehr beträgt.

**11.** Verfahren nach Anspruch 8, wobei die Oberfläche der hohlen Siliciumdioxidfeinteilchen einer terminalen (Meth) acrylmodifikation durch eine hydrothermische Reaktion bei 100 °C bis 150 °C oder eine Reaktion unter Mikrowellenbestrahlung mit einem (meth)acrylterminierten Silankopplungsmittel unterworfen wird, das durch die folgende allgemeine Formel (IV) dargestellt ist:

[Chemische Formel 41]

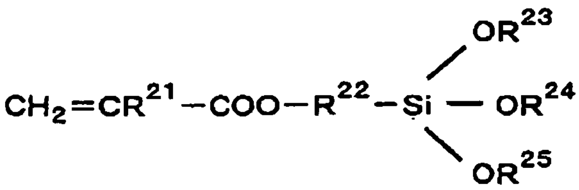

(IV)

(in der oben beschriebenen allgemeinen Formel (IV) stellt $R^{21}$ ein Wasserstoffatom, ein Fluoratom oder eine Methylgruppe dar,
$R^{22}$ stellt eine Alkylengruppe, die die Kohlenstoffzahl von 1 bis 8 aufweist, oder eine Fluoralkylengruppe, die die Kohlenstoffzahl von 1 bis 8 aufweist, dar, wobei mindestens ein Fluoratom durch mindestens ein Wasserstoffatom substituiert ist, und
$R^{23}$ bis $R^{25}$ stellen unabhängig ein Wasserstoffatom oder eine Alkylgruppe dar, die die Kohlenstoffzahl von 1 bis 4 aufweist).

**12.** Verfahren nach Anspruch 8, wobei die Oberfläche der hohlen Siliciumdioxidfeinteilchen einer terminalen Fluoralkylmodifikation durch eine hydrothermische Reaktion bei 100 °C bis 150 °C oder eine Reaktion unter Mikrowellenbestrahlung mit einem fluoralkylterminierten Silankopplungsmittel unterworfen wird, das durch die folgende allgemeine Formel (V) dargestellt ist:

[Chemische Formel 42]

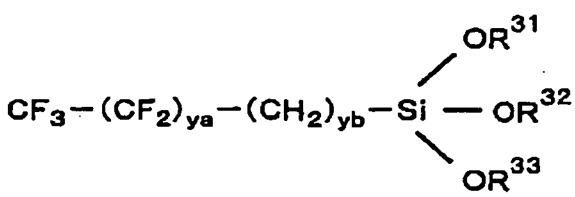

(V)

(in der oben beschriebenen allgemeinen Formel (V) stellen $R^{31}$ bis $R^{33}$ unabhängig ein Wasserstoffatom oder eine Alkylgruppe, die die Kohlenstoffzahl von 1 bis 4 aufweist, dar, ya stellt eine ganze Zahl von 1 bis 8 dar, und yb stellt eine ganze Zahl von 1 bis 3 dar).

**13.** Verfahren nach Anspruch 8, wobei die Schicht mit hohem Brechungsindex (83) Feinteilchen mit hohem Brechungsindex und eine Bindemittelkomponente umfasst, die eine aromatische Gruppe enthält.

**14.** Verfahren nach Anspruch 8, wobei die Antireflexschicht (80) sich direkt auf dem transparenten Substrat befindet.

**15.** Verfahren nach Anspruch 8, wobei die Antireflexschicht (80) eine Antireflexfolie ist, die an der äußersten Oberfläche befestigt ist, und die Antireflexfolie eine Hartbelagschicht (82), eine Schicht mit hohem Brechungsindex (83) und eine Schicht mit niedrigem Brechungsindex (84) umfasst, die in dieser Reihenfolge auf eine transparente Grundfolie (81) auflaminiert sind.

**16.** Verfahren zur Herstellung einer lichtmittierenden Platte vom Gasentladungstyp, umfassend das Laminieren und Intergrieren eines Hauptkörpers aus einer lichtemittierenden Platte, einer gegen elektromagnetische Wellen schützenden Schicht, die sich auf der Vorderseite des Hauptkörpers aus einer lichtemittierenden Platte befindet, und einer Antireflexschicht (80), die als äußerste Oberflächenschicht dient,
wobei die Antireflexschicht (80) mit einer Schicht mit hohem Brechungsindex (83) und einer Schicht mit niedrigem Brechungsindex (84), die sich auf der Schicht mit hohem Brechungsindex (83) befindet, ausgestattet ist, und
die Schicht mit niedrigem Brechungsindex (84) aus einer photoausgehärteten Beschichtungsfolie besteht, die Folgendes enthält:

hohle Siliciumdioxidfeinteilchen;
eine polyfunktionelle (Meth)acrylverbindung; und
einen Photopolymerisationsinitiator, wobei die polyfunktionelle (Meth)acrylverbindung als primäre Komponenten eine hexafunktionelle (Meth)acrylverbindung, die durch die folgende allgemeine Formel (I) dargestellt ist, und/oder eine tetrafunktionelle (Meth)acrylverbindung, die durch die folgende allgemeine Formel (II) dargestellt ist, umfasst:

[Chemische Formel 43]

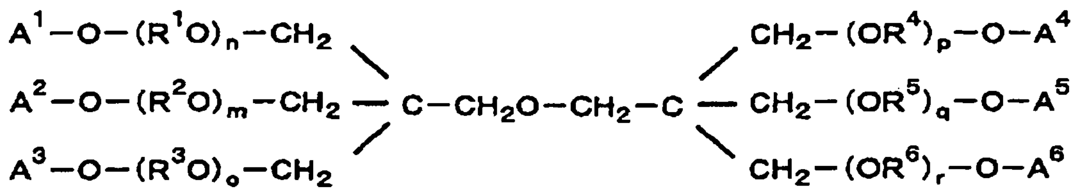

(in der oben beschriebenen allgemeinen Formel (I) stellen $A^1$ bis $A^6$ unabhängig eine Acryloylgruppe, eine Methacryloylgruppe, eine $\alpha$-Fluoracryloylgruppe oder eine Trifluormethacryloylgruppe dar,
n, m, o, p, q und r stellen unabhängig eine ganze Zahl von 0 bis 2 dar und
$R^1$ bis $R^6$ stellen unabhängig eine Alkylengruppe, die die Kohlenstoffzahl von 1 bis 3 aufweist, oder eine Fluoralkylengruppe, die die Kohlenstoffzahl von 1 bis 3 aufweist, dar, wobei mindestens ein Fluoratom durch mindestens ein Wasserstoffatom substituiert ist) und

[Chemische Formel 44]

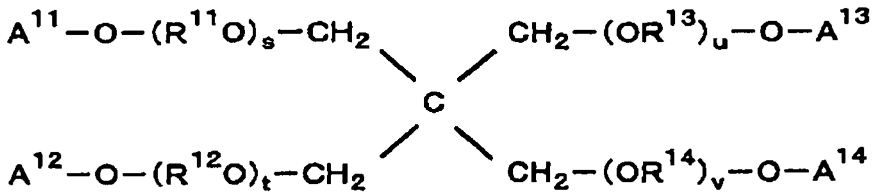

(II)

(in der oben beschriebenen allgemeinen Formel (II) stellen $A^{11}$ bis $A^{14}$ unabhängig eine Acryloylgruppe, eine Methacryloylgruppe, eine $\alpha$-Fluoracryloylgruppe oder eine Trifluormethacryloylgruppe dar,

s, t, u und v r stellen unabhängig eine ganze Zahl von 0 bis 2 dar und
$R^{11}$ bis $R^{14}$ stellen unabhängig eine Alkylengruppe, die die Kohlenstoffzahl von 1 bis 3 aufweist, oder eine Fluoralkylengruppe, die die Kohlenstoffzahl von 1 bis 3 aufweist, wobei mindestens ein Fluoratom durch mindestens ein Wasserstoffatom substituiert ist).

**17.** Verfahren nach Anspruch 16, wobei die polyfunktionelle (Meth)acrylverbindung des Weiteren eine fluorhaltige difunktionelle (Meth)acrylverbindung umfasst, die durch die folgende allgemeine Formel (III) dargestellt ist, und der Anteil der fluorhaltigen difunktionellen (Meth)acrylverbindung in den gesamten polyfunktionellen (Meth)acrylverbindungen 5 Gewichtsprozent oder mehr beträgt:

$$A^a\text{-O-}(CH_2)xa\text{-Rf-}(CH_2)xb\text{-O-}A^b \qquad (III)$$

(in der oben beschriebenen allgemeinen Formel (III) stellen $A^a$ und $A^b$ unabhängig eine Acryloylgruppe, eine Methacryloylgruppe, eine $\alpha$-Fluoracryloylgruppe oder eine Trifluormethacryloylgruppe dar, Rf stellt eine Perfluoralkylengruppe dar und xa und xb stellen unabhängig eine ganze Zahl von 0 bis 3 dar).

**18.** Verfahren nach Anspruch 16, wobei die polyfunktionelle (Meth)acrylverbindung des Weiteren mindestens einen Typ fluorhaltige polyfunktionelle (Meth)acrylverbindung umfasst, ausgewählt aus der Gruppe bestehend aus trifunktionellen bis hexafunktionellen (Meth)acrylverbindungen, die mindestens 6 Fluoratome in einem Molekül und ein Molekulargewicht von 1.000 oder weniger aufweisen, und hexafunktionellen bis pentadekafunktionellen (Meth) acrylverbindungen, die mindestens 10 Fluoratome in einem Molekül und ein Molekulargewicht von 1.000 bis 5.000 aufweisen, und der Anteil der fluorhaltigen polyfunktionellen (Meth)acrylverbindung in den gesamten polyfunktionellen (Meth)acrylverbindungen 5 Gewichtsprozent oder mehr beträgt.

**19.** Verfahren nach Anspruch 16, wobei die die Oberfläche der hohlen Siliciumdioxidfeinteilchen einer terminalen (Meth) acrylmodifikation durch eine hydrothermische Reaktion bei 100 ˚C bis 150 ˚C oder eine Reaktion unter Mikrowellenbestrahlung mit einem (meth)acrylterminierten Silankopplungsmittel unterworfen wird, das durch folgende Formel (IV) dargestellt ist:

[Chemische Formel 45]

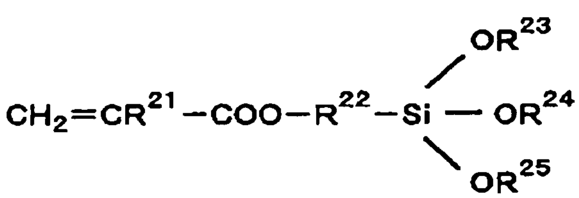

(IV)

(in der oben beschriebenen allgemeinen Formel (IV) stellt $R^{21}$ ein Wasserstoffatom, ein Fluoratom oder eine Methylgruppe dar,
$R^{22}$ stellt eine Alkylengruppe, die die Kohlenstoffzahl von 1 bis 8 aufweist, oder eine Fluoralkylengruppe, die die Kohlenstoffzahl von 1 bis 8 aufweist, dar, wobei mindestens ein Fluoratom durch mindestens ein Wasserstoffatom substituiert ist, und
$R^{23}$ bis $R^{25}$ stellen unabhängig ein Wasserstoffatom oder eine Alkylgruppe dar, die die Kohlenstoffzahl von 1 bis 4 aufweist).

**20.** Verfahren nach Anspruch 16, wobei die die Oberfläche der hohlen Siliciumdioxidfeinteilchen einer terminalen Fluoralkylmodifikation durch eine hydrothermische Reaktion bei 100 ˚C bis 150 ˚C oder eine Reaktion unter Mikrowellenbestrahlung mit einem fluoralkylterminierten Silankopplungsmittel unterworfen wird, das durch die folgende allgemeine Formel (V) dargestellt ist:

[Chemische Formel 46]

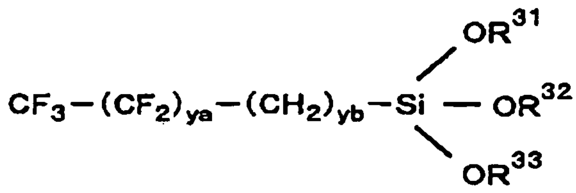

(V)

(in der oben beschriebenen allgemeinen Formel (V) stellen $R^{31}$ bis $R^{33}$ unabhängig ein Wasserstoffatom oder eine Alkylgruppe, die die Kohlenstoffzahl von 1 bis 4 aufweist, dar, ya stellt eine ganze Zahl von 1 bis 8 dar und yb stellt eine ganze Zahl von 1 bis 3 dar).

**21.** Verfahren nach Anspruch 16, wobei die Schicht von hohem Brechungsindex (83) Feinteilchen von hohem Brechungsindex und eine Bindemittelkomponente umfasst, die eine aromatische Gruppe enthält.

**22.** Verfahren nach Anspruch 16, wobei ein transparentes Substrat sich auf der Vorderseite der lichtemittierenden Platte befindet und die Antireflexschicht (80) sich direkt auf dem transparenten Substrat befindet.

**23.** Verfahren nach Anspruch 16, wobei die Antireflexschicht (80) eine Antireflexfolie ist, die an der äußersten Oberfläche befestigt ist, und die Antireflexfolie eine Hartbelagschicht (82), eine Schicht mit hohem Brechungsindex (83) und eine Schicht mit niedrigem Brechungsindex (84) umfasst, die in dieser Reihenfolge auf eine transparente Grundfolie (81) auflaminiert sind.

**24.** Verfahren zur Herstellung einer flachen Anzeigetafel, umfassend das Bilden auf der Oberfläche der Tafel einer Antireflexschicht (90), die mit einer Schicht mit hohem Brechungsindex (93) und einer Schicht von niedrigem Brechungsindex (94), die auf die Schicht von hohem Brechungsindex (93) aufgebracht ist, ausgestattet ist,
wobei die Schicht mit niedrigem Brechungsindex (94) aus einer photoausgehärteten Beschichtungsfolie besteht, die Folgendes enthält:

hohle Siliciumdioxidfeinteilchen;
eine polyfunktionelle (Meth)acrylverbindung; und
einen Photopolymerisationsinitiator, wobei die polyfunktionelle (Meth)acrylverbindung als primäre Komponenten eine hexafunktionelle (Meth)acrylverbindung, die durch die folgende allgemeine Formel (I) dargestellt ist, und/oder eine tetrafunktionelle (Meth)acrylverbindung, die durch die folgende allgemeine Formel (II) dargestellt ist:

[Chemische Formel 47]

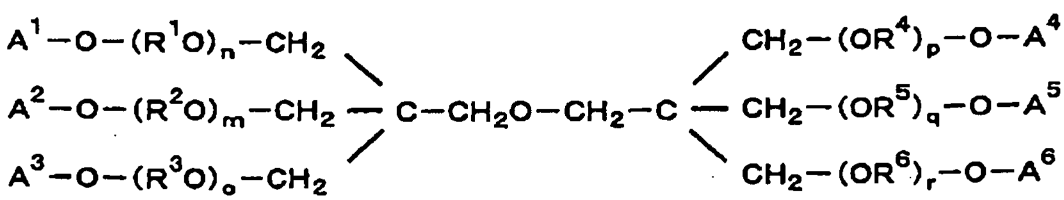

(I)

(in der oben beschriebenen allgemeinen Formel (I) stellen $A^1$ bis $A^6$ unabhängig eine Acryloylgruppe, eine Methacryloylgruppe, eine $\alpha$-Fluoracryloylgruppe oder eine Trifluormethacryloylgruppe dar,
n, m, o, p, q und r stellen unabhängig eine ganze Zahl von 0 bis 2 dar und
$R^1$ bis $R^6$ stellen unabhängig eine Alkylengruppe, die die Kohlenstoffzahl von 1 bis 3 aufweist, oder eine Fluoralkylengruppe, die die Kohlenstoffzahl von 1 bis 3 aufweist, dar, wobei mindestens ein Fluoratom durch mindestens ein Wasserstoffatom substituiert ist) und

[Chemische Formel 48]

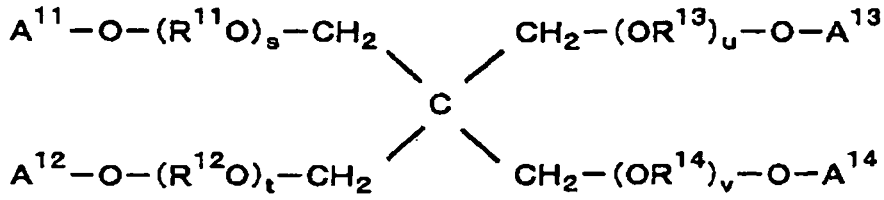

(II)

umfasst
(in der oben beschriebenen allgemeinen Formel (II) stellen $A^{11}$ bis $A^{14}$ unabhängig eine Acryloylgruppe, eine Methacryloylgruppe, eine $\alpha$-Fluoracryloylgruppe oder eine Trifluormethacryloylgruppe dar,
s, t, u und v r stellen unabhängig eine ganze Zahl von 0 bis 2 dar und
$R^{11}$ bis $R^{14}$ stellen unabhängig eine Alkylengruppe, die die Kohlenstoffzahl von 1 bis 3 aufweist, oder eine Fluoralkylengruppe, die die Kohlenstoffzahl von 1 bis 3 aufweist, wobei mindestens ein Fluoratom durch mindestens ein Wasserstoffatom substituiert ist).

**25.** Verfahren nach Anspruch 24, wobei die polyfunktionelle (Meth)acrylverbindung des Weiteren eine fluorhaltige difunktionelle (Meth)acrylverbindung umfasst, die durch die folgende allgemeine Formel (III) dargestellt ist, und der Anteil der fluorhaltigen difunktionellen (Meth)acrylverbindung in den gesamten polyfunktionellen (Meth)acrylverbindungen 5 Gewichtsprozent oder mehr beträgt:

$$A^a\text{-O-}(CH_2)xa\text{-Rf-}(CH_2)xb\text{-O-}A^b \qquad \text{(III)}$$

(in der oben beschriebenen allgemeinen Formel (III) stellen $A^a$ und $A^b$ unabhängig eine Acryloylgruppe, eine Methacryloylgruppe, eine $\alpha$-Fluoracryloylgruppe oder eine Trifluormethacryloylgruppe dar, Rf stellt eine Perfluoralkylengruppe dar und xa und xb stellen unabhängig eine ganze Zahl von 0 bis 3 dar).

**26.** Verfahren nach Anspruch 24, wobei die polyfunktionelle (Meth)acrylverbindung des Weiteren mindestens einen Typ fluorhaltige polyfunktionelle (Meth)acrylverbindung umfasst, ausgewählt aus der Gruppe bestehend aus trifunktionellen bis hexafunktionellen (Meth)acrylverbindungen, die mindestens 6 Fluoratome in einem Molekül und ein Molekulargewicht von 1.000 oder weniger aufweisen, und hexafunktionellen bis pentadekafunktionellen (Meth) acrylverbindungen, die mindestens 10 Fluoratome in einem Molekül und ein Molekulargewicht von 1.000 bis 5.000 aufweisen, und der Anteil der fluorhaltigen polyfunktionellen (Meth)acrylverbindung in den gesamten polyfunktionellen (Meth)acrylverbindungen 5 Gewichtsprozent oder mehr beträgt.

**27.** Verfahren nach Anspruch 24, wobei die Oberfläche der hohlen Siliciumdioxidfeinteilchen einer terminalen (Meth) acrylmodifikation durch eine hydrothermische Reaktion bei 100 °C bis 150 °C oder eine Reaktion unter Mikrowellenbestrahlung mit einem (meth)acrylterminierten Silankopplungsmittel unterworfen wird, das durch die folgende allgemeine Formel (IV) dargestellt ist:

[Chemische Formel 49]

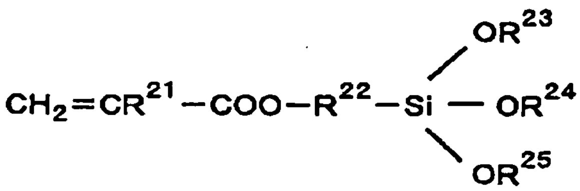

(IV)

(in der oben beschriebenen allgemeinen Formel (IV) stellt $R^{21}$ ein Wasserstoffatom, ein Fluoratom oder eine Methylgruppe dar,
$R^{22}$ stellt eine Alkylengruppe, die die Kohlenstoffzahl von 1 bis 8 aufweist, oder eine Fluoralkylengruppe, die die Kohlenstoffzahl von 1 bis 8 aufweist, dar, wobei mindestens ein Fluoratom durch mindestens ein Wasserstoffatom substituiert ist, und
$R^{23}$ bis $R^{25}$ stellen unabhängig ein Wasserstoffatom oder eine Alkylgruppe dar, die die Kohlenstoffzahl von 1 bis 4 aufweist).

**28.** Verfahren nach Anspruch 24, wobei die Oberfläche der hohlen Siliciumdioxidfeinteilchen einer terminalen Fluoralkylmodifikation durch eine hydrothermische Reaktion bei 100 °C bis 150 °C oder eine Reaktion unter Mikrowellenbestrahlung mit einem fluoralkylterminierten Silankopplungsmittel unterworfen wird, das durch die folgende allgemeine Formel (V) dargestellt ist:

[Chemische Formel 50]

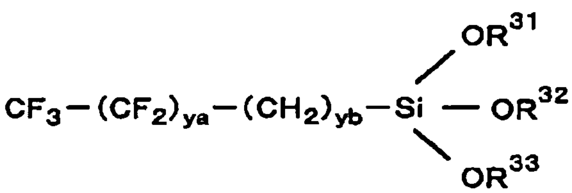

(V)

(in der oben beschriebenen allgemeinen Formel (V) stellen $R^{31}$ bis $R^{33}$ unabhängig ein Wasserstoffatom oder eine Alkylgruppe, die die Kohlenstoffzahl von 1 bis 4 aufweist, dar, ya stellt eine ganze Zahl von 1 bis 8 dar, und yb stellt eine ganze Zahl von 1 bis 3 dar).

**29.** Verfahren nach Anspruch 24, wobei die Schicht mit hohem Brechungsindex (93) Feinteilchen mit hohem Brechungsindex und eine Bindemittelkomponente umfasst, die eine aromatische Gruppe enthält.

**30.** Verfahren nach Anspruch 24, wobei ein transparentes Substrat sich auf der Oberflächenseite befindet und die Antireflexschicht (90) sich direkt auf dem transparenten Substrat befindet.

**31.** Verfahren nach Anspruch 24, wobei die Antireflexschicht eine Antireflexfolie ist, die an der äußersten Oberfläche befestigt ist, und die Antireflexfolie eine Hartbelagschicht (92), eine Schicht mit hohem Brechungsindex (93) und eine Schicht mit niedrigem Brechungsindex (94) umfasst, die in dieser Reihenfolge auf eine transparente Grundfolie (91) auflaminiert sind.

**32.** Verfahren nach Anspruch 28, wobei die Reflexionsfarbe der Anzeigeoberfläche durch Erhöhen der Foliendicke der

Schicht mit hohem Brechungsindex und außerdem Reduzieren der Foliendicke der Schicht mit niedrigem Brechungsindex derart in die Nähe einer neutralen Farbe gebracht wird, dass die Wellenlänge der Antireflexschicht, die einen Mindestreflexionsgrad aufweist, nicht variiert wird, während der Reflexionsgrad bei der Wellenlänge, die den Mindestereflexionsgrad aufweist, erhöht, jedoch der durchschnittliche Reflexionsgrad im Bereich sichtbaren Lichts reduziert wird.

**33.** Verfahren zur Herstellung eines Ausstellungsfenstermaterials, umfassend das Bilden auf der Oberfläche des Materials einer Antireflexschicht, die mit einer Schicht mit hohem Brechungsindex und einer Schicht mit niedrigem Brechungsindex, die sich auf der Schicht mit hohem Brechungsindex (93) befindet, ausgestattet ist,
wobei die Schicht mit niedrigem Brechungsindex aus einer photoausgehärteten Beschichtungsfolie besteht, die Folgendes enthält:

hohle Siliciumdioxidfeinteilchen;
eine polyfunktionelle (Meth)acrylverbindung; und
einen Photopolymerisationsinitiator, wobei die polyfunktionelle (Meth)acrylverbindung als primäre Komponenten eine hexafunktionelle (Meth)acrylverbindung, die durch die folgende allgemeine Formel (I) dargestellt ist, und/oder eine tetrafunktionelle (Meth)acrylverbindung, die durch die folgende allgemeine Formel (II) dargestellt ist:

[Chemische Formel 51]

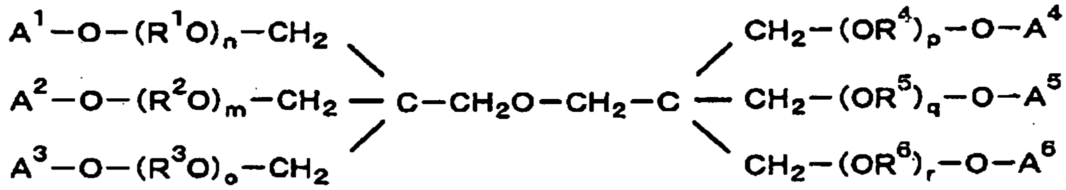

(I)

(in der oben beschriebenen allgemeinen Formel (I) stellen $A^1$ bis $A^6$ unabhängig eine Acryloylgruppe, eine Methacryloylgruppe, eine $\alpha$-Fluoracryloylgruppe oder eine Trifluormethacryloylgruppe dar,
n, m, o, p, q und r stellen unabhängig eine ganze Zahl von 0 bis 2 dar und
$R^1$ bis $R^6$ stellen unabhängig eine Alkylengruppe, die die Kohlenstoffzahl von 1 bis 3 aufweist, oder eine Fluoralkylengruppe, die die Kohlenstoffzahl von 1 bis 3 aufweist, dar, wobei mindestens ein Fluoratom durch mindestens ein Wasserstoffatom substituiert ist) und

[Chemische Formel 52]

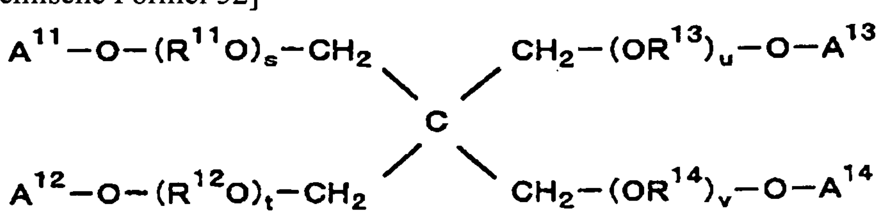

(II)

umfasst
(in der oben beschriebenen allgemeinen Formel (II) stellen $A^{11}$ bis $A^{14}$ unabhängig eine Acryloylgruppe, eine Methacryloylgruppe, eine $\alpha$-Fluoracryloylgruppe oder eine Trifluormethacryloylgruppe dar,

s, t, u und v r stellen unabhängig eine ganze Zahl von 0 bis 2 dar und
$R^{11}$ bis $R^{14}$ stellen unabhängig eine Alkylengruppe, die die Kohlenstoffzahl von 1 bis 3 aufweist, oder eine Fluoralkylengruppe, die die Kohlenstoffzahl von 1 bis 3 aufweist, wobei mindestens ein Fluoratom durch mindestens ein Wasserstoffatom substituiert ist).

**34.** Verfahren nach Anspruch 33, wobei die polyfunktionelle (Meth)acrylverbindung des Weiteren eine fluorhaltige difunktionelle (Meth)acrylverbindung umfasst, die durch die folgende allgemeine Formel (III) dargestellt ist, und der Anteil der fluorhaltigen difunktionellen (Meth)acrylverbindung in den gesamten polyfunktionellen (Meth)acrylverbindungen 5 Gewichtsprozent oder mehr beträgt:

$$A^a\text{-O-}(CH_2)xa\text{-Rf-}(CH_2)xb\text{-O-}A^b \qquad \text{(III)}$$

(in der oben beschriebenen allgemeinen Formel (III) stellen $A^a$ und $A^b$ unabhängig eine Acryloylgruppe, eine Methacryloylgruppe, eine $\alpha$-Fluoracryloylgruppe oder eine Trifluormethacryloylgruppe dar, Rf stellt eine Perfluoralkylengruppe dar und xa und xb stellen unabhängig eine ganze Zahl von 0 bis 3 dar).

**35.** Verfahren nach Anspruch 33, wobei die polyfunktionelle (Meth)acrylverbindung des Weiteren mindestens einen Typ fluorhaltige polyfunktionelle (Meth)acrylverbindung umfasst, ausgewählt aus der Gruppe bestehend aus trifunktionellen bis hexafunktionellen (Meth)acrylverbindungen, die mindestens 6 Fluoratome in einem Molekül und ein Molekulargewicht von 1.000 oder weniger aufweisen, und hexafunktionellen bis pentadekafunktionellen (Meth) acrylverbindungen, die mindestens 10 Fluoratome in einem Molekül und ein Molekulargewicht von 1.000 bis 5.000 aufweisen, und der Anteil der fluorhaltigen polyfunktionellen (Meth)acrylverbindung in den gesamten polyfunktionellen (Meth)acrylverbindungen 5 Gewichtsprozent oder mehr beträgt.

**36.** Verfahren nach Anspruch 33, wobei die Oberfläche der hohlen Siliciumdioxidfeinteilchen einer terminalen (Meth) acrylmodifikation durch eine hydrothermische Reaktion bei 100 ˚C bis 150 ˚C oder eine Reaktion unter Mikrowellenbestrahlung mit einem (meth)acrylterminierten Silankopplungsmittel unterworfen wird, das durch die folgende allgemeine Formel (IV) dargestellt ist:

[Chemische Formel 53]

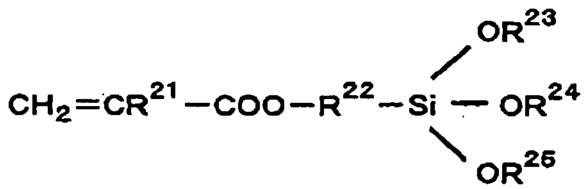

(in der oben beschriebenen allgemeinen Formel (IV) stellt $R^{21}$ ein Wasserstoffatom, ein Fluoratom oder eine Methylgruppe dar,
$R^{22}$ stellt eine Alkylengruppe, die die Kohlenstoffzahl von 1 bis 8 aufweist, oder eine Fluoralkylengruppe, die die Kohlenstoffzahl von 1 bis 8 aufweist, dar, wobei mindestens ein Fluoratom durch mindestens ein Wasserstoffatom substituiert ist, und
$R^{23}$ bis $R^{25}$ stellen unabhängig ein Wasserstoffatom oder eine Alkylgruppe dar, die die Kohlenstoffzahl von 1 bis 4 aufweist).

**37.** Verfahren nach Anspruch 33, wobei die Oberfläche der hohlen Siliciumdioxidfeinteilchen einer terminalen Fluoralkylmodifikation durch eine hydrothermische Reaktion bei 100 ˚C bis 150 ˚C oder eine Reaktion unter Mikrowellenbestrahlung mit einem fluoralkylterminierten Silankopplungsmittel unterworfen wird, das durch die folgende allgemeine Formel (V) dargestellt ist:

[Chemische Formel 54]

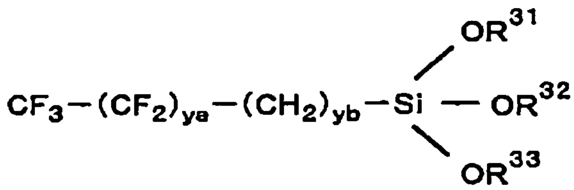

(V)

(in der oben beschriebenen allgemeinen Formel (V) stellen $R^{31}$ bis R33 unabhängig ein Wasserstoffatom oder eine Alkylgruppe, die die Kohlenstoffzahl von 1 bis 4 aufweist, dar, ya stellt eine ganze Zahl von 1 bis 8 dar und yb stellt eine ganze Zahl von 1 bis 3 dar).

**38.** Verfahren nach Anspruch 33, wobei die Schicht mit hohem Brechungsindex Feinteilchen mit hohem Brechungsindex und eine Bindemittelkomponente umfasst, die eine aromatische Gruppe enthält.

**39.** Verfahren nach Anspruch 33, wobei das Material ein transparentes Substrat umfasst und die Antireflexschicht sich direkt auf der Oberfläche des transparenten Substrats befindet.

**40.** Verfahren nach Anspruch 33, wobei das Material ein transparentes Substrat und eine Antireflexfolie umfasst, die an der Oberfläche des transparenten Substrats befestigt ist und aus einer Hartbelagschicht, einer Schicht mit hohem Brechungsindex und einer Schicht mit niedrigem Brechungsindex besteht, die in dieser Reihenfolge auf eine transparente Grundfolie auflaminiert sind.

**41.** Verfahren nach Anspruch 33, wobei der Farbunterschied zwischen einer tatsächlichen Farbe eines Exponats und einer visuell identifizierten Farbe durch Erhöhen der Foliendicke der Schicht mit hohem Brechungsindex und außerdem Reduzieren der Foliendicke der Schicht mit niedrigem Brechungsindex derart reduziert wird, dass die Wellenlänge der Antireflexschicht, die einen Mindestreflexionsgrad aufweist, nicht variiert wir, während der Reflexionsgrad bei der Wellenlänge, die den Mindestreflexionsgrad aufweist, erhöht, jedoch der durchschnittliche Reflexionsgrad im Bereich sichtbaren Lichts reduziert wird.

**42.** Verfahren zur Herstellung eines Solarzellenmoduls, umfassend das Einsetzen einer Zelle für eine Solarzelle zwischen einem oberflächenseitigen transparenten Schutzmaterial und einem rückseitigen transparenten Schutzmaterial und wobei eine Antireflexschicht (101 A, 101 B, 101 C) sich auf der Oberfläche des oberflächenseitigen transparenten Schutzmaterials befindet,
wobei die Antireflexschicht (101 A, 101 B, 101 C) mit einer Schicht mit hohem Brechungsindex (104) und einer Schicht mit niedrigem Brechungsindex (105), die sich auf der Schicht mit hohem Brechungsindex (104) befindet, ausgestattet ist, und
die Schicht mit niedrigem Brechungsindex (105) aus einer photoausgehärteten Beschichtungsfolie besteht, enthaltend:

hohle Siliciumdioxidfeinteilchen;
eine polyfunktionelle (Meth)acrylverbindung; und
einen Photopolymerisationsinitiator, wobei die polyfunktionelle (Meth)acrylverbindung als primäre Komponenten eine hexafunktionelle (Meth)acrylverbindung, die durch die folgende allgemeine Formel (I) dargestellt ist, und/oder eine tetrafunktionelle (Meth)acrylverbindung, die durch die folgende allgemeine Formel (II) dargestellt ist:

[Chemische Formel 55]

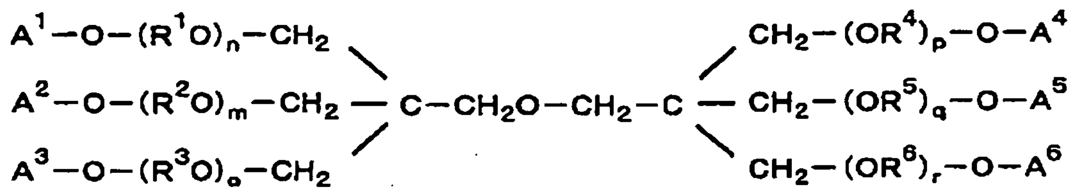

(I)

(in der oben beschriebenen allgemeinen Formel (I) stellen $A^1$ bis $A^6$ unabhängig eine Acryloylgruppe, eine Methacryloylgruppe, eine $\alpha$-Fluoracryloylgruppe oder eine Trifluormethacryloylgruppe dar,
n, m, o, p, q und r stellen unabhängig eine ganze Zahl von 0 bis 2 dar und
$R^1$ bis $R^6$ stellen unabhängig eine Alkylengruppe, die die Kohlenstoffzahl von 1 bis 3 aufweist, oder eine Fluoralkylengruppe, die die Kohlenstoffzahl von 1 bis 3 aufweist, dar, wobei mindestens ein Fluoratom durch mindestens ein Wasserstoffatom substituiert ist) und

[Chemische Formel 56]

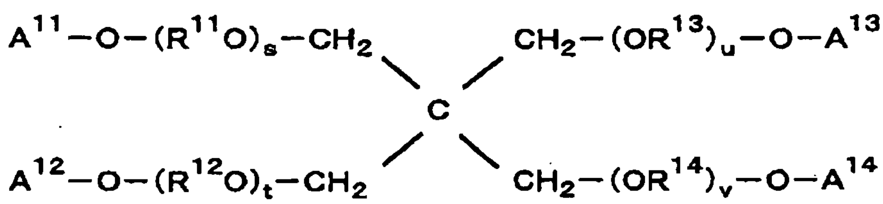

(II)

umfasst
(in der oben beschriebenen allgemeinen Formel (II) stellen $A^{11}$ bis $A^{14}$ unabhängig eine Acryloylgruppe, eine Methacryloylgruppe, eine $\alpha$-Fluoracryloylgruppe oder eine Trifluormethacryloylgruppe dar,
s, t, u und v r stellen unabhängig eine ganze Zahl von 0 bis 2 dar und
$R^{11}$ bis $R^{14}$ stellen unabhängig eine Alkylengruppe, die die Kohlenstoffzahl von 1 bis 3 aufweist, oder eine Fluoralkylengruppe, die die Kohlenstoffzahl von 1 bis 3 aufweist, wobei mindestens ein Fluoratom durch mindestens ein Wasserstoffatom substituiert ist).

**43.** Verfahren nach Anspruch 42, wobei die polyfunktionelle (Meth)acrylverbindung des Weiteren eine fluorhaltige difunktionelle (Meth)acrylverbindung umfasst, die durch die folgende allgemeine Formel (III) dargestellt ist, und der Anteil der fluorhaltigen difunktionellen (Meth)acrylverbindung in den gesamten polyfunktionellen (Meth)acrylverbindungen 5 Gewichtsprozent oder mehr beträgt:

$$A^a\text{-O-}(CH_2)x_a\text{-Rf-}(CH_2)xb\text{-O-}A^b \qquad \text{(III)}$$

(in der oben beschriebenen allgemeinen Formel (III) stellen $A^a$ und $A^b$ unabhängig eine Acryloylgruppe, eine Methacryloylgruppe, eine $\alpha$-Fluoracryloylgruppe oder eine Trifluormethacryloylgruppe dar, Rf stellt eine Perfluoralkylengruppe dar und xa und xb stellen unabhängig eine ganze Zahl von 0 bis 3 dar).

**44.** Verfahren nach Anspruch 42, wobei die polyfunktionelle (Meth)acrylverbindung des Weiteren mindestens einen Typ fluorhaltige polyfunktionelle (Meth)acrylverbindung umfasst, ausgewählt aus der Gruppe bestehend aus trifunktionellen bis hexafunktionellen (Meth)acrylverbindungen, die mindestens 6 Fluoratome in einem Molekül und ein Molekulargewicht von 1.000 oder weniger aufweisen, und hexafunktionellen bis pentadekafunktionellen (Meth) acrylverbindungen, die mindestens 10 Fluoratome in einem Molekül und ein Molekulargewicht von 1.000 bis 5.000 aufweisen, und der Anteil der fluorhaltigen polyfunktionellen (Meth)acrylverbindung in den gesamten polyfunktionellen (Meth)acrylverbindungen 5 Gewichtsprozent oder mehr beträgt.

**45.** Verfahren nach Anspruch 42, wobei die hohlen Siliciumdioxidfeinteilchen (meth)acrylmodifizierte hohle Siliciumdioxidfeinteilchen sind, bei denen eine Oberfläche einer terminalen (Meth)acrylmodifikation durch eine hydrothermische Reaktion bei 100 °C bis 150 °C oder eine Reaktion unter Mikrowellenbestrahlung mit einem (meth)acrylterminierten Silankopplungsmittel unterworfen wird, das durch folgende Formel (IV) dargestellt ist:

[Chemische Formel 57]

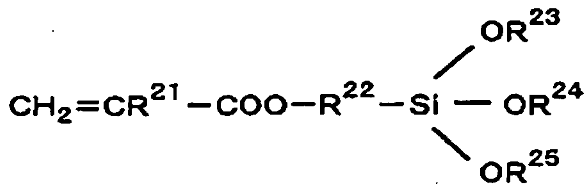

(IV)

(in der oben beschriebenen allgemeinen Formel (IV) stellt $R^{21}$ ein Wasserstoffatom, ein Fluoratom oder eine Methylgruppe dar,
$R^{22}$ stellt eine Alkylengruppe, die die Kohlenstoffzahl von 1 bis 8 aufweist, oder eine Fluoralkylengruppe, die die Kohlenstoffzahl von 1 bis 8 aufweist, dar, wobei mindestens ein Fluoratom durch mindestens ein Wasserstoffatom substituiert ist, und
$R^{23}$ bis $R^{25}$ stellen unabhängig ein Wasserstoffatom oder eine Alkylgruppe dar, die die Kohlenstoffzahl von 1 bis 4 aufweist).

**46.** Verfahren nach Anspruch 42, wobei die hohlen Siliciumdioxidfeinteilchen fluoralkylmodifizierte hohle Siliciumdioxidfeinteilchen sind, von denen eine Oberfläche einer terminalen Fluoralkylmodifikation durch eine hydrothermische Reaktion bei 100 °C bis 150 °C oder eine Reaktion unter Mikrowellenbestrahlung mit einem fluoralkylterminierten Silankopplungsmittel unterworfen wird, das durch die folgende allgemeine Formel (V) dargestellt ist:

[Chemische Formel 58]

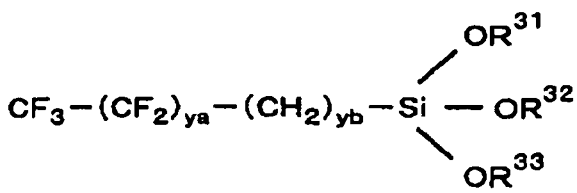

(V)

(in der oben beschriebenen allgemeinen Formel (V) stellen $R^{31}$ bis R33 unabhängig ein Wasserstoffatom oder eine Alkylgruppe, die die Kohlenstoffzahl von 1 bis 4 aufweist, dar, ya stellt eine ganze Zahl von 1 bis 8 dar und yb stellt eine ganze Zahl von 1 bis 3 dar).

**47.** Verfahren nach Anspruch 42, wobei die Schicht mit hohem Brechungsindex Feinteilchen mit hohem Brechungsindex

und eine Bindemittelkomponente umfasst, die eine aromatische Gruppe enthält.

**48.** Verfahren nach Anspruch 42, wobei die Antireflexschicht (101 A, 101 B, 101 C) sich direkt auf dem oberflächenseitigen transparenten Schutzmaterial befindet.

**49.** Verfahren nach Anspruch 42, wobei die Antireflexschicht (101 A, 101 B, 101 C) eine Antireflexfolie ist, die an dem oberflächenseitigen transparenten Schutzmaterial befestigt ist, und die Antireflexionsfolie aus der Schicht mit hohem Brechungsindex (104) und der Schicht mit niedrigem Brechungsindex (105) besteht, die in dieser Reihenfolge auf eine transparente Grundfolie (102) auflaminiert sind.

**50.** Verfahren nach Anspruch 49, wobei sich eine Hartbelagschicht zwischen der transparenten Grundfolie und der Schicht mit hohem Brechungsindex befindet

**51.** Verfahren nach Anspruch 42, wobei man die Wellenlänge der Antireflexschicht, die einen Mindestreflexionsgrad aufweist, sich auf die kürzere Wellenlängenseite durch Reduzieren der Foliendicke der Schicht mit hohem Brechungsindex oder der Schicht mit niedrigem Brechungsindex verschieben lässt.

**Revendications**

**1.** Procédé de préparation d'un film antireflet, comprenant la stratification d'une couche de revêtement dure (2), d'une couche à indice de réfraction élevé (3), et d'une couche à indice de réfraction bas (4), dans cet ordre sur un film transparent de base (1),
dans lequel la couche à indice de réfraction bas (4) est formée en appliquant un film de revêtement à la couche à indice de réfraction élevé et en durcissant le film de revêtement par irradiation par des rayons UV dans une atmosphère présentant une concentration en oxygène de 0 à 10 000 ppm, **caractérisé en ce que** le film de revêtement contient :

de fines particules creuses de silice ;
un composé (méth)acrylique polyfonctionnel ; et
un initiateur de photopolymérisation, dans lequel le composé (méth)acrylique polyfonctionnel comprend, comme composants primaires, un composé (méth)acrylique hexafonctionnel représenté par la formule générale suivante (I) et/ou un composé (méth)acrylique tétrafonctionnel représenté par la formule générale suivante (II) :

[Formule chimique 26]

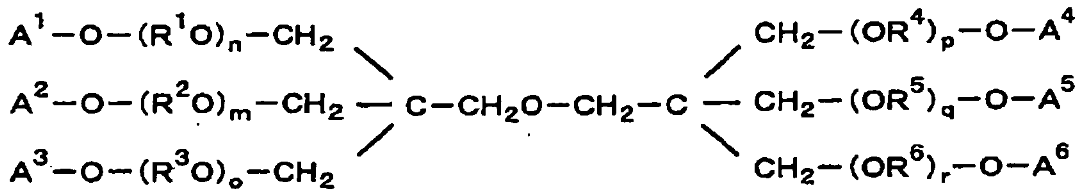

(I)

(dans la formule générale ci-dessus décrite (I), $A^1$ à $A^6$ représentent indépendamment un groupe acryloyle, un groupe méthacryloyle, un groupe $\alpha$-fluoroacryloyle ou un groupe trifluorométhacryloyle,
n, m, o, p, q, et r représentent indépendamment un nombre entier d'une valeur de 0 à 2, et
$R^1$ à $R^6$ représentent indépendamment un groupe alcylène ayant le nombre d'atomes de carbone de 1 à 3 ou un groupe alcylène fluoré ayant le nombre d'atomes de carbone de 1 à 3 dans lequel au moins un atome de fluor est substitué par au moins un atome d'hydrogène), et

[Formule chimique 27]

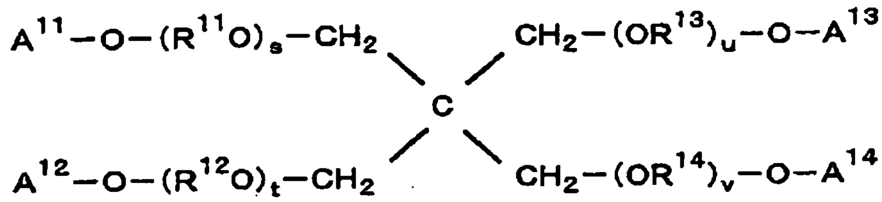

(II)

(dans la formule générale ci-dessus décrite (II), $A^{11}$ à $A^{14}$ représentent indépendamment un groupe acryloyle, un groupe méthacryloyle, un groupe $\alpha$-fluoroacryloyle, ou un groupe trifluorométhacryloyle,
s, t, u, et v représentent indépendamment un nombre entier d'une valeur de 0 à 2, et
$R^{11}$ à $R^{14}$ représentent indépendamment un groupe alcylène ayant le nombre d'atomes de carbone de 1 à 3 ou un groupe alcylène fluoré ayant le nombre d'atomes de carbone de 1 à 3 dans lequel au moins un atome de fluor est substitué par au moins un atome d'hydrogène).

2. Procédé selon la revendication 1, dans lequel le composé (méth)acrylique polyfonctionnel comprend en outre un composé (méth)acrylique difonctionnel contenant du fluor représenté par la formule générale suivante (III), et la proportion de composé (méth)acrylique difonctionnel contenant du fluor dans les composés (méth)acryliques polyfonctionnels entiers est de 5 pour cent en poids ou plus :

$$A^a\text{-O-}(CH_2)_{xa}\text{-Rf-}(CH_2)_{xb}\text{-O-}A^b \qquad \text{(III)}$$

(dans la formule générale ci-dessus décrite (III), $A^a$ et $A^b$ représentent indépendamment un groupe acryloyle, un groupe méthacryloyle, un groupe $\alpha$-fluoroacryloyle, ou un groupe trifluorométhacryloyle, Rf représente un groupe perfluoroalcylène, et xa et xb représentent indépendamment un nombre entier d'une valeur de 0 à 3).

3. Procédé selon la revendication 2, dans lequel le composé (méth)acrylique polyfonctionnel comprend en outre au moins un type de composé (méth)acrylique polyfonctionnel contenant du fluor choisi parmi le groupe constitué des composés (méth)acryliques hexafonctionnels ayant au moins 6 atomes de fluor dans une molécule et un poids moléculaire de 1 000 ou moins et des composés (méth)acryliques hexafonctionnels à pentadécafonctionnels ayant au moins 10 atomes de fluor dans une molécule et un poids moléculaire de 1 000 à 5 000, et la proportion du composé (méth)acrylique polyfonctionnel contenant du fluor dans les composés (méth)acryliques polyfonctionnels entiers est de 5 pour cent en poids ou plus.

4. Procédé selon la revendication 1, dans lequel les fines particules creuses de silice sont de la silice creuse modifiée par un composé (méth)acrylique ayant une surface soumise à une modification (méth)acrylique terminale avec un agent de couplage au silane terminé par un groupe (méth)acrylique représenté par la formule générale suivante (IV) :

[Formule chimique 28]

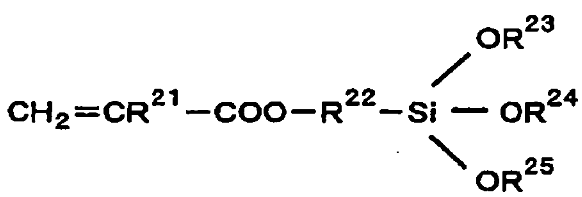

(IV)

(dans la formule générale ci-dessus décrite (IV), $R^{21}$ représente un atome d'hydrogène, un atome de fluor, ou un groupe méthyle,
$R^{22}$ représente un groupe alcylène ayant le nombre d'atomes de carbone de 1 à 8 ou un groupe alcylène fluoré ayant le nombre d'atomes de carbone de 1 à 8 dans lequel au moins un atome de fluor est substitué par au moins un atome d'hydrogène, et
$R^{23}$ à $R^{25}$ représentent indépendamment un atome d'hydrogène ou un groupe alkyle ayant le nombre d'atomes de carbone de 1 à 4).

5. Procédé selon la revendication 4, dans lequel la surface des fines particules de silice creuse est soumise à une modification (méth)acrylique terminale avec l'agent de couplage au silane terminé par un groupe (méth)acrylique par une réaction hydrothermique à une température de 100°C à 150°C ou une réaction sous irradiation micro-onde.

6. Procédé selon la revendication 1, dans lequel les fines particules creuses de silice sont de la silice creuse modifiée par un groupe alkyle fluoré ayant une surface soumise à une modification terminale type fluoroalkyle avec un agent du couplage au silane terminé par un groupe alkyle fluoré représenté par la formule générale suivante (V) :

[Formule chimique 29]

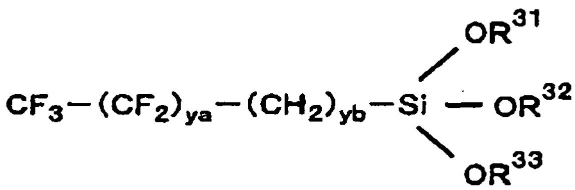

(V)

(dans la formule générale ci-dessus décrite (V), $R^{31}$ à $R^{33}$ représentent indépendamment un atome d'hydrogène ou un groupe alkyle ayant le nombre d'atomes de carbone de 1 à 4, ya représente un nombre entier d'une valeur de 1 à 8, et yb représente un nombre entier d'une valeur de 1 à 3).

7. Procédé selon la revendication 6, dans lequel la surface des fines particules creuses de silice est soumise à une modification terminale par un groupe alkyle fluoré avec l'agent de couplage au silane terminé par un groupe alkyle fluoré par une réaction hydrothermique à une température de 100°C à 150°C ou une réaction sous irradiation micro-onde.

8. Procédé de préparation d'un matériau pour vitre de protection contre les ondes électromagnétiques et à transmission de lumière, comprenant une stratification et une intégration d'une couche de protection contre les ondes électromagnétiques, d'un substrat transparent, et d'une couche antireflet (80) servant de couche de surface la plus externe, dans lequel la couche antireflet (80) est proposée avec une couche à indice de réfraction élevé (83) et une couche à indice de réfraction bas (84) disposée sur la couche à indice de réfraction élevé (83), et
la couche à indice de réfraction bas (84) est composée d'un film de revêtement photo-durci contenant :

de fines particules creuses de silice ;
un composé (méth)acrylique polyfonctionnel ; et
un initiateur de photopolymérisation, dans lequel le composé (méth)acrylique polyfonctionnel comprend, comme composants primaires, un composé (méth)acrylique hexafonctionnel représenté par la formule générale suivante (I) et/ou un composé (méth)acrylique tétrafonctionnel représenté par la formule générale suivante (II) :

[Formule chimique 39]

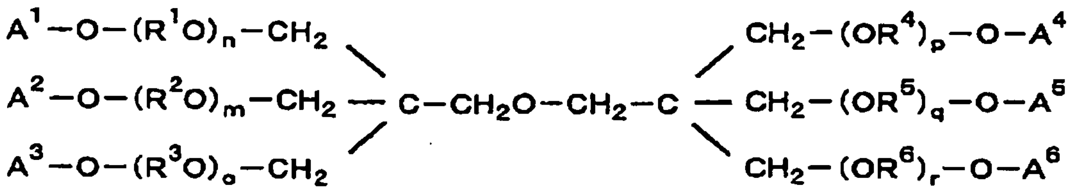

(I)

(dans la formule générale ci-dessus décrite (I), $A^1$ à $A^6$ représentent indépendamment un groupe acryloyle, un groupe méthacryloyle, un groupe $\alpha$-fluoroacryloyle ou un groupe trifluorométhacryloyle, n, m, o, p, q et r représentent indépendamment un nombre entier d'une valeur de 0 à 2, et $R^1$ à $R^6$ représentent indépendamment un groupe alcylène ayant le nombre d'atomes de carbone de 1 à 3 ou un groupe alcylène fluoré ayant le nombre d'atomes de carbone de 1 à 3 dans lequel au moins un atome de fluor est substitué par au moins un atome d'hydrogène), et

[Formule chimique 40]

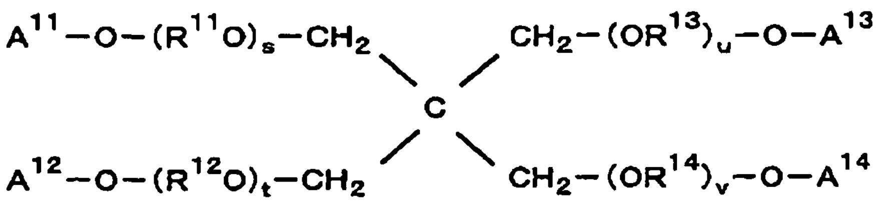

(II)

(dans la formule générale ci-dessus décrite (II), $A^{11}$ à $A^{14}$ représentent indépendamment un groupe acryloyle, un groupe méthacryloyle, un groupe $\alpha$-fluoroacryloyle ou un groupe trifluorométhacryloyle, s, t, u et v représentent indépendamment un nombre entier d'une valeur de 0 à 2, et $R^{11}$ à $R^{14}$ représentent indépendamment un groupe alcylène ayant le nombre d'atomes de carbone de 1 à 3 ou un groupe alcylène fluoré ayant le nombre d'atomes de carbone de 1 à 3 dans lequel au moins un atome de fluor est substitué par au moins un atome d'hydrogène).

**9.** Procédé selon la revendication 8, dans lequel le composé (méth)acrylique polyfonctionnel comprend en outre un composé (méth)acrylique difonctionnel contenant du fluor représenté par la formule générale suivante (III), et la proportion du composé (méth)acrylique difonctionnel contenant du fluor dans les composés (méth)acryliques polyfonctionnels entiers est de 5 pour cent en poids ou plus :

$$A^a\text{-O-}(CH_2)_{xa}\text{-Rf-}(CH_2)_{xb}\text{-O-}A^b \qquad \text{(III)}$$

(dans la formule générale ci-dessus décrite (III), $A^a$ et $A^b$ représentent indépendamment un groupe acryloyle, un groupe méthacryloyle, un groupe $\alpha$-fluoroacryloyle ou un groupe trifluorométhacryloyle, Rf représente un groupe perfluoroalcylène, et xa et xb représentent indépendamment un nombre entier d'une valeur de 0 à 3).

**10.** Procédé selon la revendication 8, dans lequel le composé (méth)acrylique polyfonctionnel comprend en outre au moins un type de composé (méth)acrylique polyfonctionnel contenant du fluor choisi parmi le groupe constitué des composés (méth)acryliques trifonctionnels à hexafonctionnels ayant au moins 6 atomes de fluor dans une molécule et un poids moléculaire de 1 000 ou moins et des composés (méth)acryliques hexafonctionnels à pentadécafonctionnels ayant au moins 10 atomes de fluor dans une molécule et un poids moléculaire de 1 000 à 5 000, et la proportion du composé (méth)acrylique polyfonctionnel contenant du fluor dans les composés (méth)acryliques polyfonctionnels entiers est de 5 pour cent en poids ou plus.

**11.** Procédé selon la revendication 8, dans lequel la surface des fines particules creuses de silice est soumise à une modification (méth)acrylique terminale, par une réaction hydrothermique à une température de 100˚C à 150˚C ou une réaction sous irradiation micro-onde, avec un agent de couplage au silane terminé par un groupe (méth)acrylique représenté par la formule générale suivante (IV) :

[Formule chimique 41]

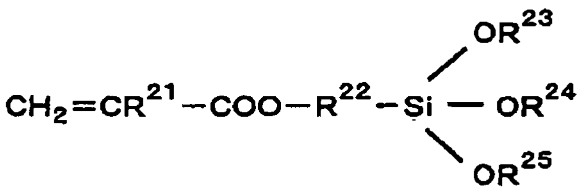

(IV)

(dans la formule générale ci-dessus décrite (IV), $R^{21}$ représente un atome d'hydrogène, un atome de fluor, ou un groupe méthyle,
$R^{22}$ représente un groupe alcylène ayant le nombre d'atomes de carbone de 1 à 8 ou un groupe alcylène fluoré ayant le nombre d'atomes de carbone de 1 à 8 dans lequel au moins un atome de fluor est substitué par au moins un atome d'hydrogène, et
$R^{23}$ à $R^{25}$ représentent indépendamment un atome d'hydrogène ou un groupe alkyle ayant le nombre d'atomes de carbone de 1 à 4).

**12.** Procédé selon la revendication 8, dans lequel la surface des fines particules creuses de silice est soumise à une modification fluoroalkyle terminale, par une réaction hydrothermique à une température de 100˚C à 150˚C ou une réaction sous irradiation micro-onde, avec un agent de couplage au silane terminé par un groupe alkyle fluoré représenté par la formule générale suivante (V) :

[Formule chimique 42]

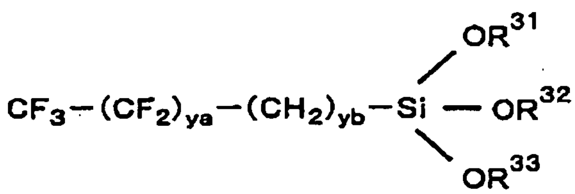

(V)

(dans la formule générale ci-dessus décrite (V), $R^{31}$ à $R^{33}$ représentent indépendamment un atome d'hydrogène ou un groupe alkyle ayant le nombre d'atomes de carbone de 1 à 4, ya représente un nombre entier d'une valeur de 1 à 8, et yb représente un nombre entier d'une valeur de 1 à 3.

**13.** Procédé selon la revendication 8, dans lequel la couche à indice de réfraction élevé (83) comprend de fines particules à indice de réfraction élevé et un composant liant contenant un groupe aromatique.

**14.** Procédé selon la revendication 8, dans lequel la couche antireflet (80) est disposée directement sur le substrat transparent.

**15.** Procédé selon la revendication 8, dans lequel la couche antireflet (80) est un film antireflet qui adhère à la surface la plus externe, et le film antireflet comprend une couche de revêtement dure (82), une couche à indice de réfraction élevé (83) et une couche à indice de réfraction bas (84), qui sont stratifiées dans cet ordre sur un film transparent de base (81).

**16.** Procédé de préparation d'un panneau électroluminescent à décharge gazeuse comprenant la stratification et l'intégration d'un corps principal de panneau électroluminescent, une couche de protection contre les ondes électromagnétiques disposée sur la face avant du corps principal du panneau électroluminescent, et une couche antireflet (80) servant de couche de surface la plus externe,
dans lequel la couche antireflet (80) est proposée avec une couche à indice de réfraction élevé (83) et une couche à indice de réfraction bas (84) disposée sur la couche à indice de réfraction élevé (83), et
la couche à indice de réfraction bas (84) est composée d'un film de revêtement photo-durci contenant :

de fines particules creuses de silice ;
un composé (méth)acrylique polyfonctionnel ; et
un initiateur de photopolymérisation, dans lequel le composé (méth)acrylique polyfonctionnel comprend, comme composants primaires, un composé (méth)acrylique hexafonctionnel représenté par la formule général suivante (I) et/ou un composé (méth)acrylique tétrafonctionnel représenté par la formule général suivante (II) :

[Formule chimique 43]

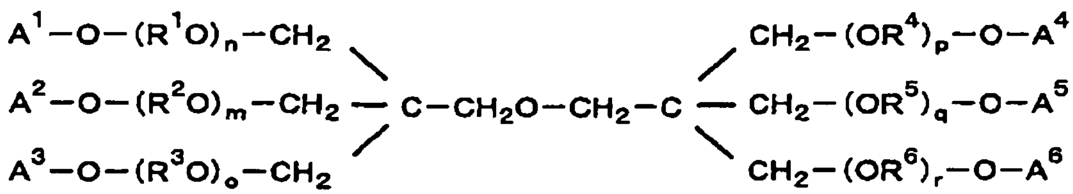

(dans la formule générale ci-dessus décrite (I), $A^1$ à $A^6$ représentent indépendamment un groupe acryloyle, un groupe méthacryloyle, un groupe $\alpha$-fluoroacryloyle ou un groupe trifluorométhacryloyle,
n, m, o, p, q et r représentent indépendamment un nombre entier d'une valeur de 0 à 2, et
$R^1$ à $R^6$ représentent indépendamment un groupe alcylène ayant le nombre d'atomes de carbone de 1 à 3 ou un groupe alcylène fluoré ayant le nombre d'atomes de carbone de 1 à 3 dans lequel au moins un atome de fluor est substitué par au moins un atome d'hydrogène), et

[Formule chimique 44]

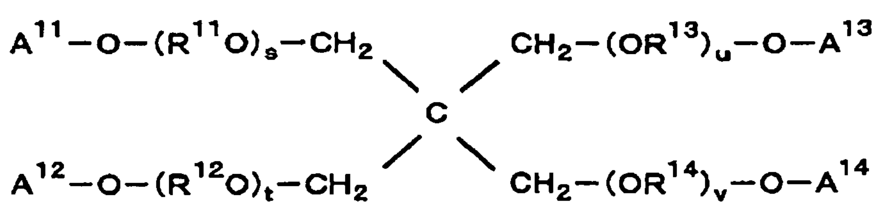

(II)

(dans la formule générale ci-dessus décrite (II), $A^{11}$ à $A^{14}$ représentent indépendamment un groupe acryloyle, un groupe méthacryloyle, un groupe $\alpha$-fluoroacryloyle ou un groupe trifluorométhacryloyle,
s, t, u et v représentent indépendamment un nombre entier d'une valeur de 0 à 2, et

$R^{11}$ à $R^{14}$ représentent indépendamment un groupe alcylène ayant le nombre d'atomes de carbone de 1 à 3 ou un groupe alcylène fluoré ayant le nombre d'atomes de carbone de 1 à 3 dans lequel au moins un atome de fluor est substitué par au moins un atome d'hydrogène).

**17.** Procédé selon la revendication 16, dans lequel le composé (méth)acrylique polyfonctionnel comprend en outre un composé (méth)acrylique difonctionnel contenant un atome de fluor représenté par la formule générale suivante (III), et la proportion du composé (méth)acrylique difonctionnel contenant un atome de fluor dans les composés (méth)acryliques polyfonctionnels entiers est de 5 pour cent en poids ou plus :

$$A^a\text{-O-}(CH_2)_{xa}\text{-Rf-}(CH_2)_{xb}\text{-O-}A^b \qquad (III)$$

(dans la formule générale ci-dessus décrite (III), $A^a$ et $A^b$ représentent indépendamment un groupe acryloyle, un groupe méthacryloyle, un groupe $\alpha$-fluoroacryloyle ou un groupe trifluorométhacryloyle, Rf représente un groupe perfluoroalcylène, et xa et xb représentent indépendamment un nombre entier d'une valeur de 0 à 3).

**18.** Procédé selon la revendication 16, dans lequel le composé (méth)acrylique polyfonctionnel comprend en outre au moins un type de composé (méth)acrylique polyfonctionnel contenant du fluor choisi parmi le groupe constitué des composés (méth)acryliques trifonctionnels à hexafonctionnels ayant au moins 6 atomes de fluor dans une molécule et un poids moléculaire de 1 000 ou moins et des composés (méth)acryliques hexafonctionnels à pentadécafonctionnels ayant au moins 10 atomes de fluor dans une molécule et un poids moléculaire de 1 000 à 5 000, et la proportion de composé (méth)acrylique polyfonctionnel contenant un atome de fluor dans les composés (méth) acryliques polyfonctionnels entiers est de 5 pour cent en poids ou plus.

**19.** Procédé selon la revendication 16, dans lequel la surface des fines particules creuses de silice est soumise à une modification (méth)acrylique terminale, par une réaction hydrothermique à une température de 100°C à 150°C ou une réaction sous irradiation micro-onde avec un agent de couplage au silane terminé par un groupe (méth)acrylique représenté par la formule générale suivante (IV) :

[Formule chimique 45]

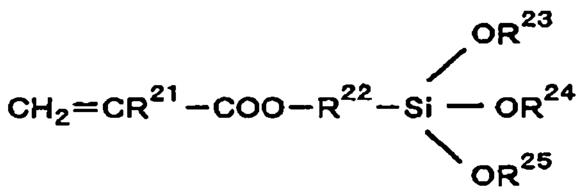

(IV)

(dans la formule générale ci-dessus décrite (IV), $R^{21}$ représente un atome d'hydrogène, un atome de fluor, ou un groupe méthyle,
$R^{22}$ représente un groupe alcylène ayant le nombre d'atomes de carbone de 1 à 8 ou un groupe alcylène fluoré ayant le nombre d'atomes de carbone de 1 à 8 dans lequel au moins un atome de fluor est substitué par au moins un atome d'hydrogène, et
$R^{23}$ à $R^{25}$ représentent indépendamment un atome d'hydrogène ou un groupe alkyle ayant le nombre d'atomes de carbone de 1 à 4).

**20.** Procédé selon la revendication 16, dans lequel la surface des fines particules creuses de silice est soumise à une modification fluoralkyle terminale, par une réaction hydrothermique à une température de 100°C à 150°C ou une réaction sous irradiation micro-onde, avec un agent de couplage au silane terminé par un groupe alkyle fluoré représenté par la formule générale suivante (V) :

[Formule chimique 46]

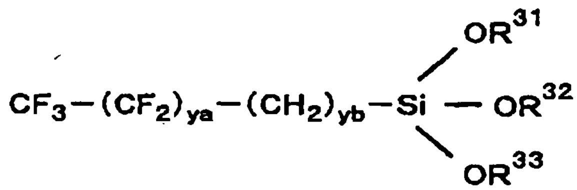

(V)

(dans la formule générale ci-dessus décrite (V), $R^{31}$ à $R^{33}$ représentent indépendamment un atome d'hydrogène ou un groupe alkyle ayant le nombre d'atomes de carbone de 1 à 4, ya représente un nombre entier d'une valeur de 1 à 8, et yb représente un nombre entier d'une valeur de 1 à 3).

**21.** Procédé selon la revendication 16, dans lequel la couche à indice de réfraction élevé (83) comprend de fines particules à indice de réfraction élevé et un composant liant contenant un groupe aromatique.

**22.** Procédé selon la revendication 16, dans lequel un substrat transparent est disposé sur la face avant du panneau électroluminescent, et la couche antireflet (80) est disposée directement sur le substrat transparent.

**23.** Procédé selon la revendication 16, dans lequel la couche antireflet (80) est un film antireflet qui adhère à la surface la plus externe, et le film antireflet comprend une couche de revêtement dure (82), une couche à indice de réfraction élevé (83), et une couche à indice de réfraction bas (84), qui sont stratifiées dans cet ordre sur un film transparent de base (81).

**24.** Procédé de préparation d'un écran plat, comprenant la formation à la surface du panneau d'une couche antireflet (90) proposée avec une couche à indice de réfraction élevé (93) et une couche à indice de réfraction bas (94) disposée sur la couche à indice de réfraction élevé (93),
dans lequel la couche à indice de réfraction bas (94) est composée d'un film de revêtement photo-durci contenant :

de fines particules creuses de silice ;
un composé (méth)acrylique polyfonctionnel ; et
un initiateur de photopolymérisation, dans lequel le composé (méth)acrylique polyfonctionnel comprend, comme composants primaires, un composé (méth)acrylique hexafonctionnel représenté par la formule générale suivante (I) et/ou un composé (méth)acrylique tétrafonctionnel représenté par la formule générale suivante (II) :

[Formule chimique 47]

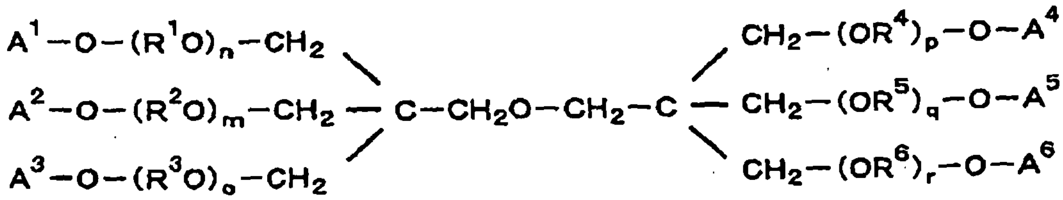

(I)

(dans la formule générale ci-dessus décrite (I), $A^1$ à $A^6$ représentent indépendamment un groupe acryloyle, un groupe méthacryloyle, un groupe $\alpha$-fluoroacryloyle ou un groupe trifluorométhacryloyle,
n, m, o, p, q et r représentent indépendamment un nombre entier d'une valeur de 0 à 2, et

$R^1$ à $R^6$ représentent indépendamment un groupe alcylène ayant le nombre d'atomes de carbone de 1 à 3 ou un groupe alcylène fluoré ayant le nombre d'atomes de carbone de 1 à 3 dans lequel au moins un atome de fluor est substitué par au moins un atome d'hydrogène), et

[Formule chimique 48]

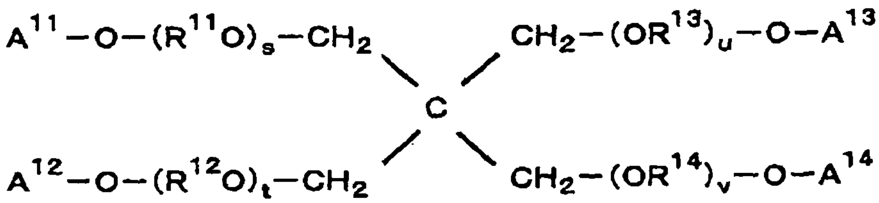

(II)

(dans la formule générale ci-dessus décrite (II), $A^{11}$ à $A^{14}$ représentent indépendamment un groupe acryloyle, un groupe méthacryloyle, un groupe $\alpha$-fluoroacryloyle ou un groupe trifluorométhacryloyle,
s, t, u et v représentent indépendamment un nombre entier d'une valeur de 0 à 2, et
$R^{11}$ à $R^{14}$ représentent indépendamment un groupe alcylène ayant le nombre d'atomes de carbone de 1 à 3 ou un groupe alcylène fluoré ayant le nombre d'atomes de carbone de 1 à 3 dans lequel au moins un atome de fluor est substitué par au moins un atome d'hydrogène).

**25.** Procédé selon la revendication 24, dans lequel le composé (méth)acrylique polyfonctionnel comprend en outre un composé (méth)acrylique difonctionnel contenant du fluor représenté par la formule générale suivante (III), et la proportion du composé (méth)acrylique difonctionnel contenant du fluor dans les composés (méth)acryliques polyfonctionnels entiers est de 5 pour cent en poids ou plus :

$$A^a\text{-O-}(CH_2)_{xa}\text{-Rf-}(CH_2)_{xb}\text{-O-}A^b \qquad \text{(III)}$$

(dans la formule générale ci-dessus décrite (III), $A^a$ à $A^b$ représentent indépendamment un groupe acryloyle, un groupe méthacryloyle, un groupe $\alpha$-fluoroacryloyle ou un groupe trifluorométhacryloyle, Rf représente un groupe perfluoroalcylène, et xa et xb représentent indépendamment un nombre entier d'une valeur de 0 à 3).

**26.** Procédé selon la revendication 24, dans lequel le composé (méth)acrylique polyfonctionnel comprend en outre au moins un type de composé (méth)acrylique polyfonctionnel contenant du fluor choisi parmi le groupe constitué des composés (méth)acryliques trifonctionnels à hexafonctionnels ayant au moins 6 atomes de fluor dans une molécule et un poids moléculaire de 1 000 ou moins et des composés (méth)acryliques hexafonctionnels à pentadécafonctionnels ayant au moins 10 atomes de fluor dans une molécule et un poids moléculaire de 1 000 à 5 000, et la proportion de composé (méth)acrylique polyfonctionnel contenant du fluor dans les composés (méth)acryliques polyfonctionnels entiers est de 5 pour cent en poids ou plus.

**27.** Procédé selon la revendication 24, dans lequel la surface des fines particules creuses de silice est soumise à une modification (méth)acrylique terminale, par une réaction hydrothermique à une température de 100°C à 150°C ou une réaction sous irradiation micro-onde, avec un agent de couplage au silane terminé par un groupe (méth)acrylique représenté par la formule générale suivante (IV) :

[Formule chimique 49]

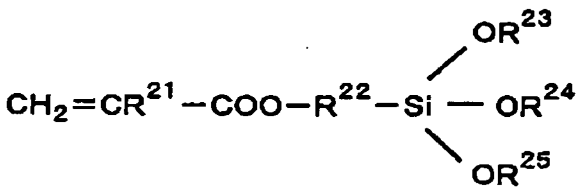

(IV)

(dans la formule générale ci-dessus décrite (IV), $R^{21}$ représente un atome d'hydrogène, un atome de fluor, ou un groupe méthyle,
$R^{22}$ représente un groupe alcylène ayant le nombre d'atomes de carbone de 1 à 8 ou un groupe alcylène fluoré ayant le nombre d'atomes de carbone de 1 à 8 dans lequel au moins un atome de fluor est substitué par au moins un atome d'hydrogène, et
$R^{23}$ à $R^{25}$ représentent indépendamment un atome d'hydrogène ou un groupe alkyle ayant le nombre d'atomes de carbone de 1 à 4).

**28.** Procédé selon la revendication 24, dans lequel la surface des fines particules creuses de silice est soumise à une modification terminale par un groupe alkyle fluoré, par une réaction hydrothermique à une température de 100˚C à 150˚C ou une réaction sous irradiation micro-onde, avec un agent de couplage au silane terminé par un groupe alkyle fluoré représenté par la formule générale suivante (V) :

[Formule chimique 50]

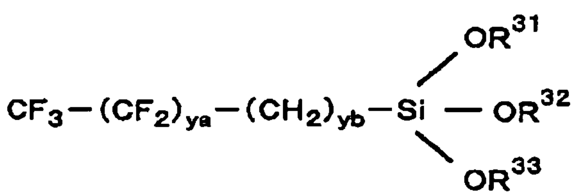

(V)

(dans la formule générale ci-dessus décrite (V), $R^{31}$ à $R^{33}$ représentent indépendamment un atome d'hydrogène ou un groupe alkyle ayant le nombre d'atomes de carbone de 1 à 4, ya représente un nombre entier d'une valeur de 1 à 8, et yb représente un nombre entier d'une valeur de 1 à 3.

**29.** Procédé selon la revendication 24, dans lequel la couche à indice de réfraction élevé (93) comprend de fines particules à indice de réfraction élevé et un composant liant contenant un groupe aromatique.

**30.** Procédé selon la revendication 24, dans lequel un substrat transparent est disposé sur le côté surface, et la couche antireflet (90) est disposée directement sur le substrat transparent.

**31.** Procédé selon la revendication 24, dans lequel la couche antireflet est un film antireflet qui adhère à la surface la plus externe, et le film antireflet comprend une couche de revêtement dure (92), une couche à indice de réfraction élevé (93), et une couche à indice de réfraction bas (94), qui sont stratifiées dans cet ordre sur un film transparent de base (91).

**32.** Procédé selon la revendication 28, dans lequel la couleur de réflexion de la surface d'affichage est rapprochée

d'une couleur neutre en augmentant l'épaisseur du film de la couche à indice de réflexion élevé et, de plus, la réduction de l'épaisseur du film de la couche à indice de réflexion bas d'une manière telle que la longueur d'onde de la couche antireflet faisant preuve d'une réflectance minimum ne varie pas, tandis que la réflectance à la longueur d'onde affichant la réflectance minimale est accrue mais la réflectance moyenne dans la région de lumière visible est réduite.

**33.** Procédé de préparation d'un matériau pour vitrine comprenant la formation sur la surface du matériau d'une couche antireflet proposée avec une couche à indice de réfraction élevé et une couche à indice de réfraction bas disposée sur la couche à indice de réfraction élevé,
dans lequel la couche à indice de réfraction bas est composée d'un film de revêtement photo-durci contenant
de fines particules creuses de silice ;
un composé (méth)acrylique polyfonctionnel ; et
un initiateur de photopolymérisation, dans lequel le composé (méth)acrylique polyfonctionnel comprend, comme composants primaires, un composé (méth)acrylique hexafonctionnel représenté par la formule générale suivante (I) et/ou un composé (méth)acrylique tétrafonctionnel représenté par la formule générale suivante (II) :

[Formule chimique 51]

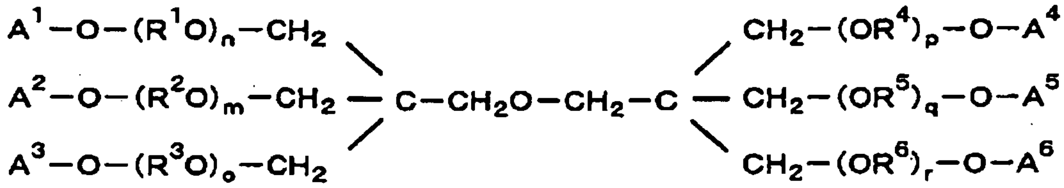

(I)

(dans la formule générale ci-dessus décrite (I), $A^1$ à $A^6$ représentent indépendamment un groupe acryloyle, un groupe méthacryloyle, un groupe $\alpha$-fluoroacryloyle, ou un groupe trifluorométhacryloyle,
n, m, o, p, q, et r représentent indépendamment un nombre entier d'une valeur de 0 à 2, et
$R^1$ à $R^6$ représentent indépendamment un groupe alcylène ayant le nombre d'atomes de carbone de 1 à 3 ou un groupe alcylène fluoré ayant le nombre d'atomes de carbone de 1 à 3 dans lequel au moins un atome de fluor est substitué par au moins un atome d'hydrogène), et

[Formule chimique 52]

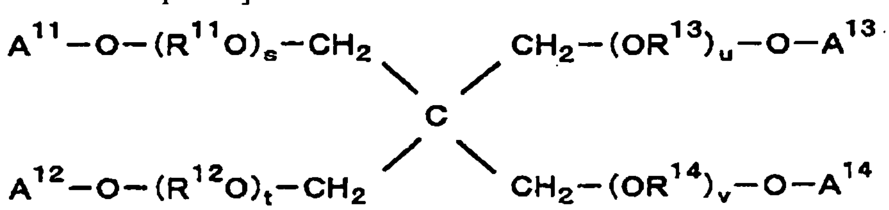

(II)

(dans la formule générale ci-dessus décrite (II), $A^{11}$ à $A^{14}$ représentent indépendamment un groupe acryloyle, un groupe méthacryloyle, un groupe $\alpha$-fluoroacryloyle, ou un groupe trifluorométhacryloyle,
s, t, u, et v représentent indépendamment un nombre entier d'une valeur de 0 à 2, et
$R^{11}$ à $R^{14}$ représentent indépendamment un groupe alcylène ayant le nombre d'atomes de carbone de 1 à 3 ou un groupe alcylène fluoré ayant le nombre d'atomes de carbone de 1 à 3 dans lequel au moins un atome de fluor

est substitué par au moins un atome d'hydrogène).

**34.** Procédé selon la revendication 33, dans lequel le composé (méth)acrylique polyfonctionnel comprend en outre un composé (méth)acrylique difonctionnel contenant du fluor représenté par la formule générale suivante (III), et la proportion du composé (méth)acrylique difonctionnel contenant du fluor dans les composés (méth)acryliques polyfonctionnels entiers est de 5 pour cent en poids ou plus :

$$A^a\text{-O-}(CH_2)_{xa}\text{-Rf-}(CH_2)_{xb}\text{-O-}A^b \qquad \text{(III)}$$

(dans la formule générale ci-dessus décrite (III), $A^a$ et $A^b$ représentent indépendamment un groupe acryloyle, un groupe méthacryloyle, un groupe $\alpha$-fluoroacryloyle, ou un groupe trifluorométhacryloyle, Rf représente un groupe perfluoroalcylène, et xa et xb représentent indépendamment un nombre entier d'une valeur de 0 à 3).

**35.** Procédé selon la revendication 33, dans lequel le composé (méth)acrylique polyfonctionnel comprend en outre au moins un type de composé (méth)acrylique polyfonctionnel contenant du fluor choisi parmi le groupe constitué des composés (méth)acryliques trifonctionnels à hexafonctionnels ayant au moins 6 atomes de fluor dans une molécule et un poids moléculaire de 1 000 au moins et des composés (méth)acryliques hexafonctionnels à pentadécafonctionnels ayant au moins 10 atomes de fluor dans une molécule et un poids moléculaire de 1 000 à 5 000, et la proportion du composé (méth)acrylique polyfonctionnel contenant du fluor dans les composés (méth)acryliques polyfonctionnels entiers est de 5 pour cent en poids ou plus.

**36.** Procédé selon la revendication 33, dans lequel la surface des fines particules creuses de silice est soumise à une modification (méth)acrylique terminale, par une réaction hydrothermique à une température de 100˚C à 150˚C ou une réaction sous irradiation micro-onde, avec un agent de couplage au silane terminé par un groupe (méth)acrylique représenté par la formule générale suivante (IV) :

[Formule chimique 53]

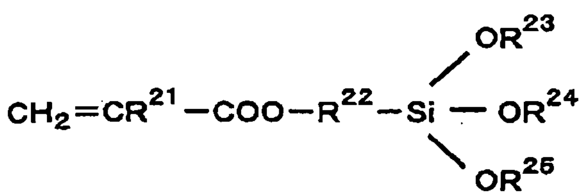

(IV)

(dans la formule générale ci-dessus décrite (IV), $R^{21}$ représente un atome d'hydrogène, un atome de fluor, ou un groupe méthyle,
$R^{22}$ représente un groupe alcylène ayant le nombre d'atomes de carbone de 1 à 8 ou un groupe alcylène fluoré ayant le nombre d'atomes de carbone de 1 à 8 dans lequel au moins un atome de fluor est substitué par au moins un atome d'hydrogène, et
$R^{23}$ à $R^{25}$ représentent indépendamment un atome d'hydrogène ou un groupe alkyle ayant le nombre d'atomes de carbone de 1 à 4).

**37.** Procédé selon la revendication 33, dans lequel la surface des fines particules creuses de silice est soumise à une modification terminale par un groupe alkyle fluoré, par une réaction hydrothermique à 100 C à 150˚C ou une réaction sous irradiation micro-onde avec un agent de couplage au silane terminé par un groupe alkyle fluoré représenté par la formule générale suivante (V) :

[Formule chimique 54]

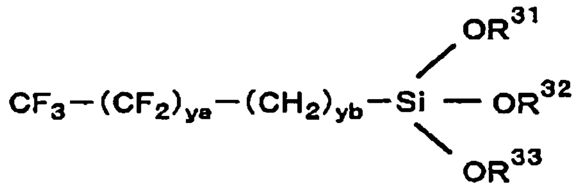

(V)

(dans la formule générale ci-dessus décrite (V), $R^{31}$ à $R^{33}$ représentent indépendamment un atome d'hydrogène ou un groupe alkyle ayant le nombre d'atomes de carbone de 1 à 4, ya représente un nombre entier d'une valeur de 1 à 8, et yb représente un nombre entier de 1 à 3).

**38.** Procédé selon la revendication 33, dans lequel la couche à indice de réfraction élevé comprend de fines particules à indice de réfraction élevé et un composant liant contenant un groupe aromatique.

**39.** Procédé selon la revendication 33, dans lequel le matériau comprend un substrat transparent et la couche antireflet disposée directement sur la surface du substrat transparent.

**40.** Procédé selon la revendication 33, dans lequel le matériau comprend un substrat transparent et un film antireflet qui a adhéré à la surface du substrat transparent et qui est composé d'une couche de revêtement dur, d'une couche à indice de réfraction élevé, et d'une couche à indice de réfraction bas, qui sont stratifiées dans cet ordre sur un film transparent de base.

**41.** Procédé selon la revendication 33, dans lequel la différence de couleur entre une couleur réelle d'une couleur exposée et visuellement identifiée est réduite en accroissant l'épaisseur du film de la couche à indice de réfraction élevé et, de plus, la réduction de l'épaisseur du film de la couche à indice de réfraction bas d'une manière telle que la longueur d'onde de la couche antireflet faisant preuve d'une réflectance minimale ne varie pas, tandis que la réflectance à la longueur d'onde faisant preuve de la réflectance minimum est accrue mais la réflectance moyenne dans la région de la lumière visible est réduite.

**42.** Procédé de préparation d'un module de pile solaire, comprenant le scellement d'une pile pour pile solaire entre un matériau protecteur transparent du côté de la surface et un matériau protecteur transparent du côté arrière et une couche antireflet (101 A, 101 B, 101 C) qui est disposée sur la surface du matériau protecteur transparent côté surface,
dans lequel la couche antireflet (101 A, 101 B, 101 C) est proposée avec une couche à indice de réfraction élevé (104) et une couche à indice de réfraction bas (105) disposée sur la couche à indice de réfraction élevé (104), et la couche à indice de réfraction bas (105) est composée d'un film de revêtement photo-durci contenant :

de fines particules creuses de silice ;
un composé (méth)acrylique polyfonctionnel ; et
un initiateur de photopolymérisation dans lequel le composé méth(acrylique) polyfonctionnel comprend, comme composants primaires, un composé (méth)acrylique hexafonctionnel représenté par la formule générale suivante (I) et/ou un composé (méth)acrylique tétrafonctionnel représenté par la formule générale suivante (II) :

[Formule chimique 55]

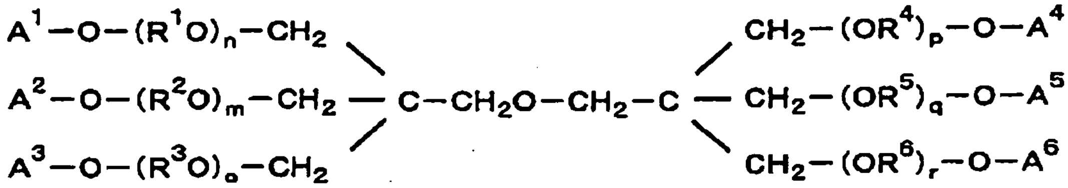

(dans la formule générale ci-dessus décrite (I), $A^1$ à $A^6$ représentent indépendamment un groupe acryloyle, un groupe méthacryloyle, un groupe α-fluoroacryloyle, ou un groupe trifluorométhacryloyle,
n, m, o, p, q, et r représentent indépendamment un nombre entier d'une valeur de 0 à 2, et
$R^1$ à $R^6$ représentent indépendamment un groupe alcylène ayant le nombre d'atomes de carbone de 1 à 3 ou un groupe alcylène fluoré ayant le nombre d'atomes de carbone de 1 à 3 dans lequel au moins un atome de fluor est substitué par au moins un atome d'hydrogène), et

[Formule chimique 56]

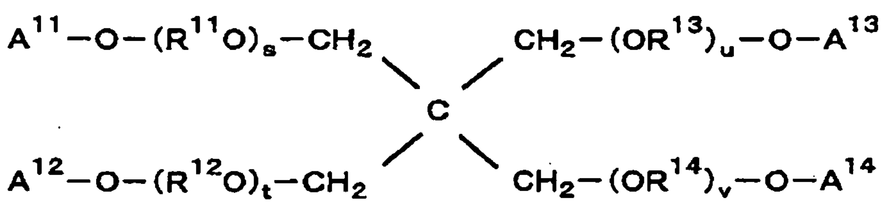

(II)

(dans la formule générale ci-dessus décrite (II), $A^{11}$ à $A^{14}$ représentent indépendamment un groupe acryloyle, un groupe méthacryloyle, un groupe α-fluoroacryloyle, ou un groupe trifluorométhacryloyle,
s, t, u, et v représentent indépendamment un nombre entier d'une valeur de 0 à 2, et
$R^{11}$ à $R^{14}$ représentent indépendamment un groupe alcylène ayant le nombre d'atomes de carbone de 1 à 3 ou un groupe alcylène fluoré ayant le nombre d'atomes de carbone de 1 à 3 dans lequel au moins un atome de fluor est substitué par au moins un atome d'hydrogène.

**43.** Procédé selon la revendication 42, dans lequel le composé (méth)acrylique polyfonctionnel comprend en outre un composé (méth)acrylique difonctionnel contenant du fluor représenté par la formule générale suivante (III), et la proportion du composé (méth)acrylique difonctionnel contenant du fluor dans les composés (méth)acryliques polyfonctionnels entiers est de 5 pour cent en poids ou plus :

$$A^a\text{-O-}(CH_2)_{xa}\text{-Rf-}(CH_2)_{xb}\text{-O-}A^b \quad (III)$$

(dans la formule générale ci-dessus décrite (III), $A^a$ et $A^b$ représentent indépendamment un groupe acryloyle, un groupe méthacryloyle, un groupe α-fluoroacryloyle, ou un groupe trifluorométhacryloyle, Rf représente un groupe perfluoroalcylène, et xa et xb représentent indépendamment un nombre entier d'une valeur de 0 à 3).

**44.** Procédé selon la revendication 42, dans lequel le composé (méth)acrylique polyfonctionnel comprenant en outre au moins une type de composé (méth)acrylique polyfonctionnel contenant du fluor choisi parmi le groupe constitué des composés méth(acryliques) trifonctionnels à hexafonctionnels ayant au moins 6 atomes de fluor dans une molécule et un poids moléculaire de 1 000 ou moins et des composés (méth)acryliques hexafonctionnels à pentadécafonctionnels ayant au moins 10 atomes de fluor dans une molécule et un poids moléculaire de 1 000 à 5 000, et la proportion du composé (méth)acrylique polyfonctionnel contenant du fluor dans les composés (méth)acryliques polyfonctionnels entiers est de 5 pour cent en poids ou plus.

**45.** Procédé selon la revendication 42, dans lequel les fines particules creuses de silice sont de fines particules creuses de silice modifiées par un groupe (méth)acrylique ayant une surface soumise à une modification terminale par un groupe (méth)acrylique, par une réaction hydrothermique à une température de 100°C à 150°C ou une réaction sous irradiation micro-onde avec un agent de couplage au silane terminé par un groupe (méth)acrylique représenté par la formule générale suivante (IV) :

[Formule chimique 57]

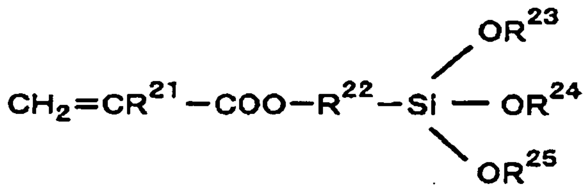

(IV)

(dans la formule générale ci-dessus décrite (IV), $R^{21}$ représente un atome d'hydrogène, un atome de fluor, ou un groupe méthyle),
$R^{22}$ représente un groupe alcylène ayant le nombre d'atomes de carbone de 1 à 8 ou un groupe alcylène fluoré ayant le nombre d'atomes de carbone de 1 à 8 dans lequel au moins un atome de fluor est substitué par au moins un atome d'hydrogène, et
$R^{23}$ à $R^{25}$ représentent indépendamment un atome d'hydrogène ou un groupe alkyle ayant le nombre d'atomes de carbone de 1 à 4).

**46.** Procédé selon la revendication 42, dans lequel les fines particules creuses de silice sont de fines particules creuses de silice modifiées par un groupe alkyle fluoré ayant une surface soumise à une modification terminale par un groupe alkyle fluoré, par une réaction hydrothermique à une température de 100°C à 150°C ou une réaction sous irradiation micro-onde avec un agent de couplage au silane terminé par un groupe alkyle fluoré représenté par la formule générale suivante (V) :

[Formule chimique 58]

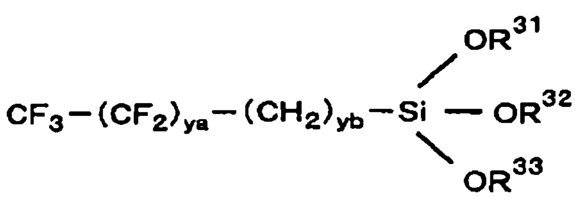

(V)

(dans la formule générale ci-dessus décrite (V), $R^{31}$ à $R^{33}$ représentent indépendamment un atome d'hydrogène ou un groupe alkyle ayant le nombre d'atomes de carbone de 1 à 4, ya représente un nombre entier d'une valeur de 1 à 8, et yb représente un nombre entier d'une valeur de 1 à 3).

**47.** Procédé selon la revendication 42, dans lequel la couche à indice de réfraction élevé comprend de fines particules à indice de réfraction élevé et un composant liant contenant un groupe aromatique.

**48.** Procédé selon la revendication 42, dans lequel la couche antireflet (101A, 101B, 101C) est disposée directement sur le matériau protecteur transparent côté surface.

**49.** Procédé selon la revendication 42, dans lequel la couche antireflet (101A, 101B, 101C) est un film antireflet qui a adhéré au matériau protecteur transparent côté surface et le film antireflet est composé de la couche à indice de réfraction élevé (104) et la couche à indice de réfraction bas (105) qui sont stratifiées dans cet ordre sur un film transparent de base (102).

**50.** Procédé selon la revendication 49, dans lequel une couche de revêtement dur est disposée entre le film transparent de base et la couche à indice de réfraction élevé.

**51.** Procédé selon la revendication 42, dans lequel la longueur d'onde de la couche antireflet faisant preuve d'une réflectance minimale est laissée à se déplacer vers le côté des longueurs d'onde plus courtes en réduisant l'épaisseur du film de la couche à indice de réfraction élevé ou de la couche à indice de réfraction bas.

Fig. 1

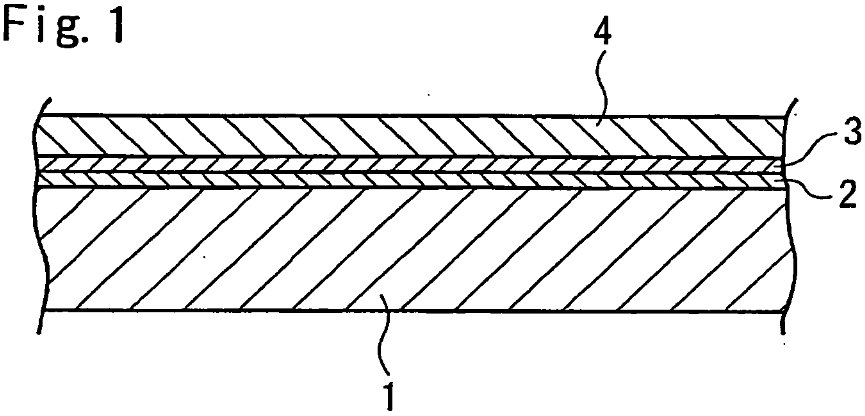

Fig. 2

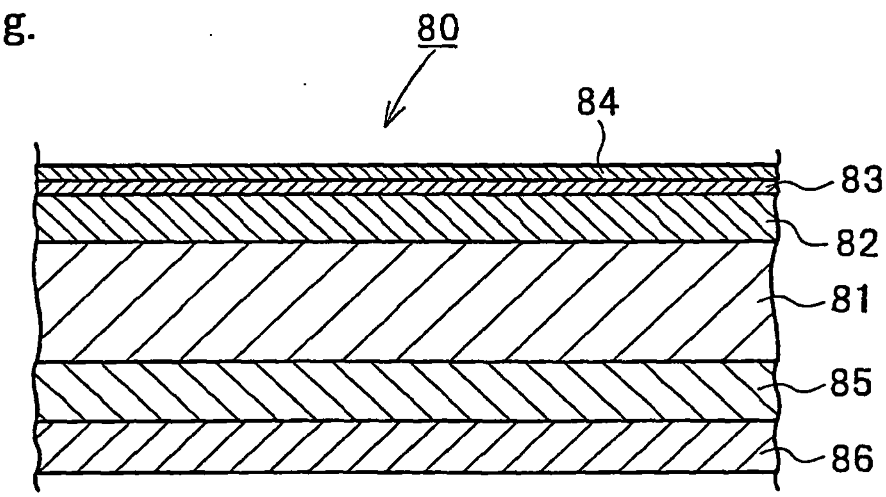

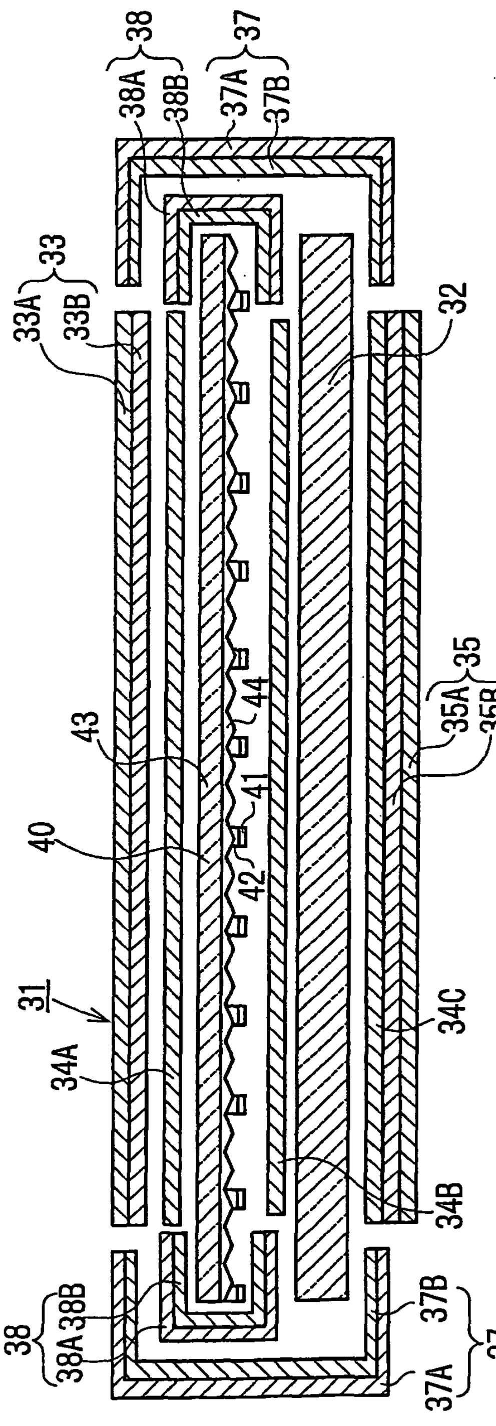
31
33
33A
33B
32
34A
34B
34C
35
35A
35B
37
37A
37B
38
38A
38B
40
41
42
43
44

Fig. 3a

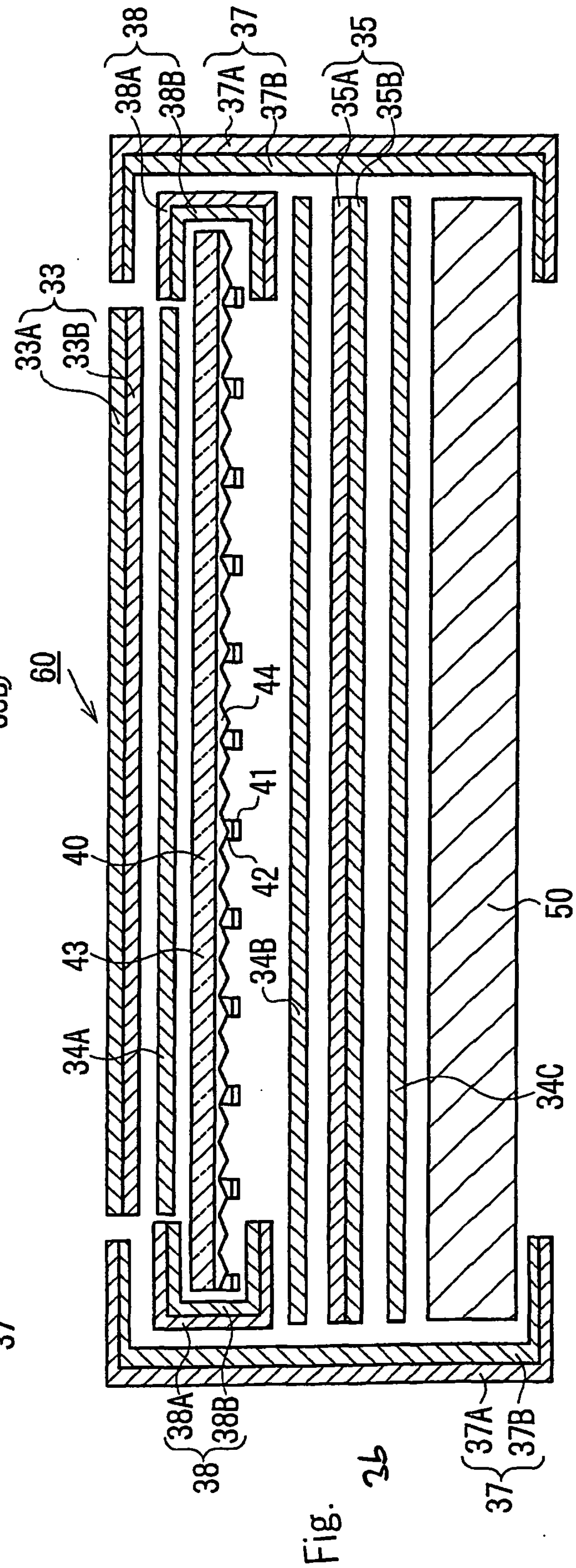
60
33
33A
33B
34A
34B
34C
35
35A
35B
37
37A
37B
38
38A
38B
40
41
42
43
44
50

Fig. 3b

Fig. 4

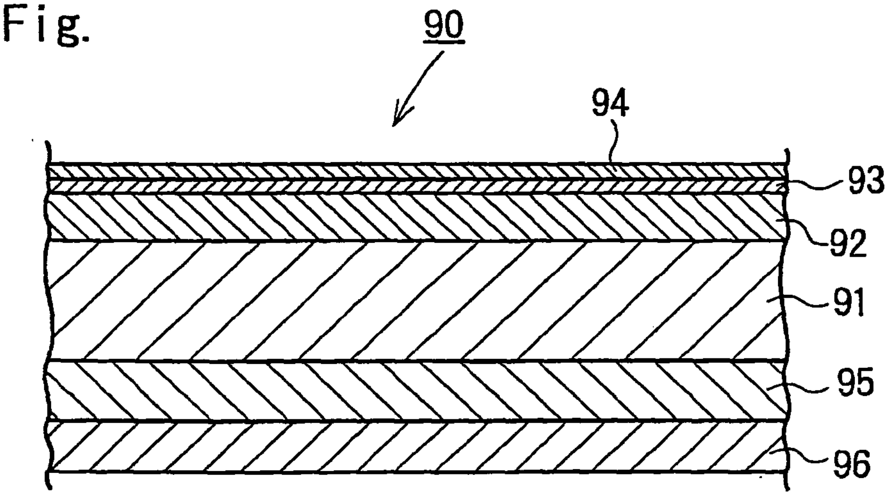

Fig. 5

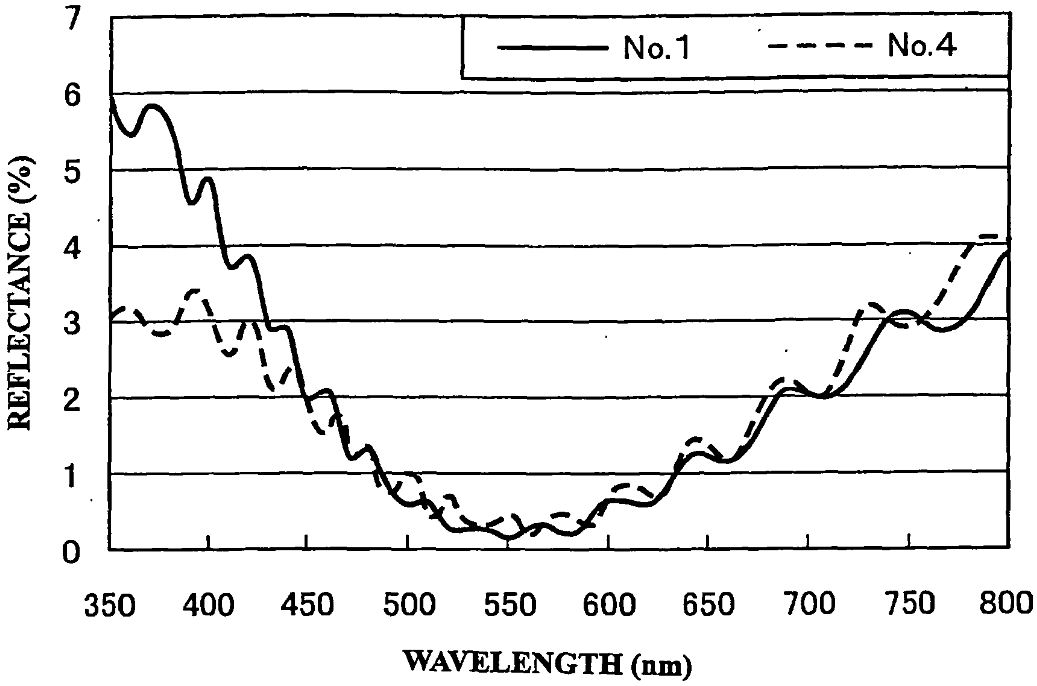
No.1
No.4
REFLECTANCE (%)
0
1
2
3
4
5
6
7
350
400
450
500
550
600
650
700
750
800
WAVELENGTH (nm)

Fig. 6

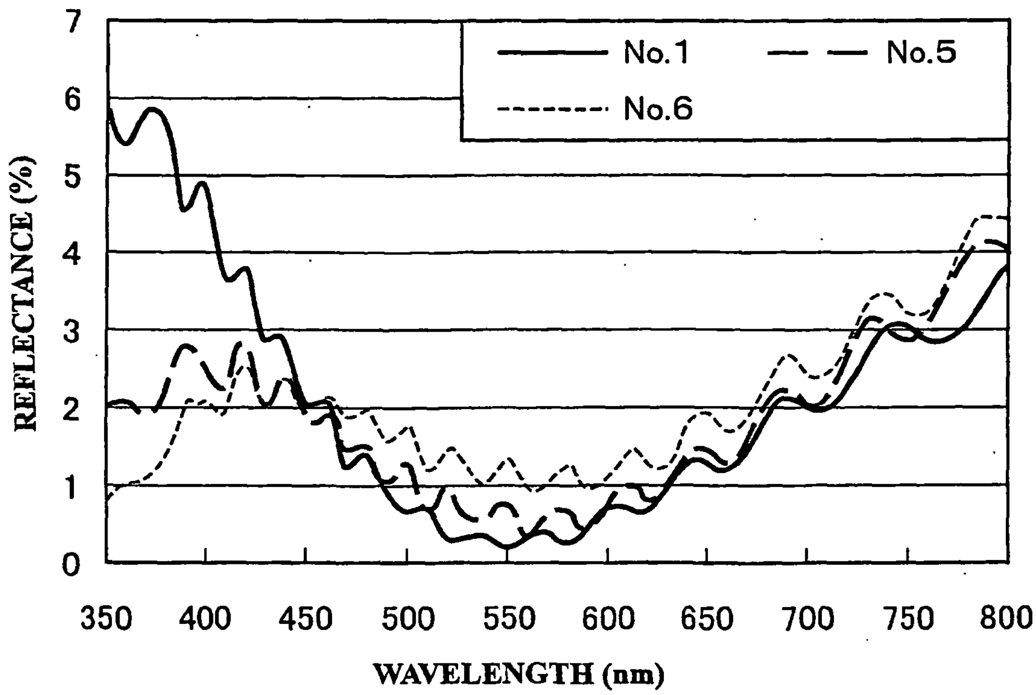
No.1
No.5
No.6
REFLECTANCE (%)
0
1
2
3
4
5
6
7
350
400
450
500
550
600
650
700
750
800
WAVELENGTH (nm)

Fig. 7a

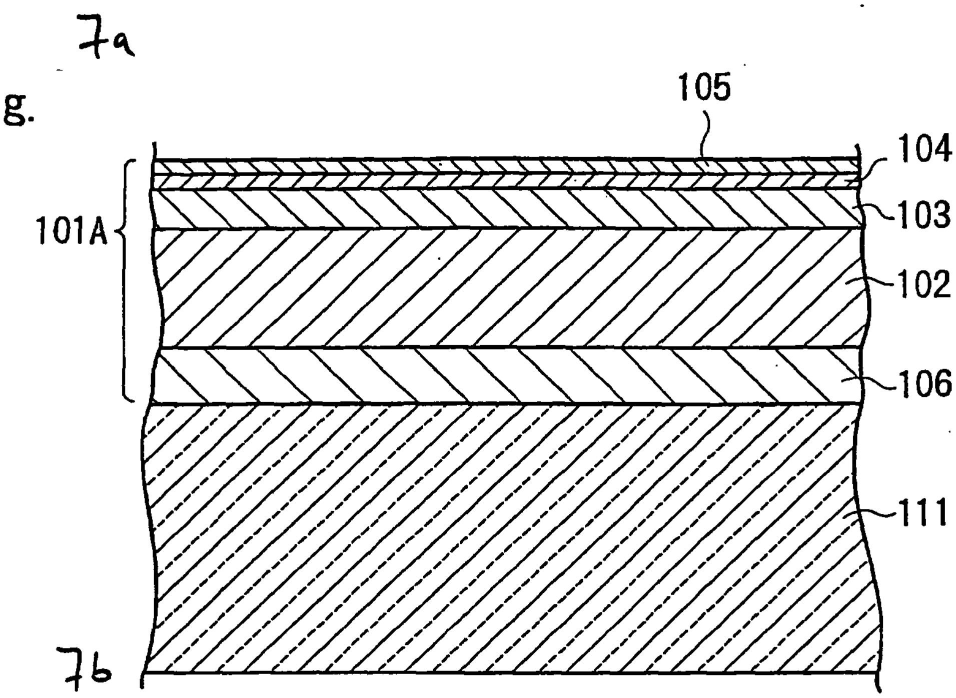


Fig. 7b

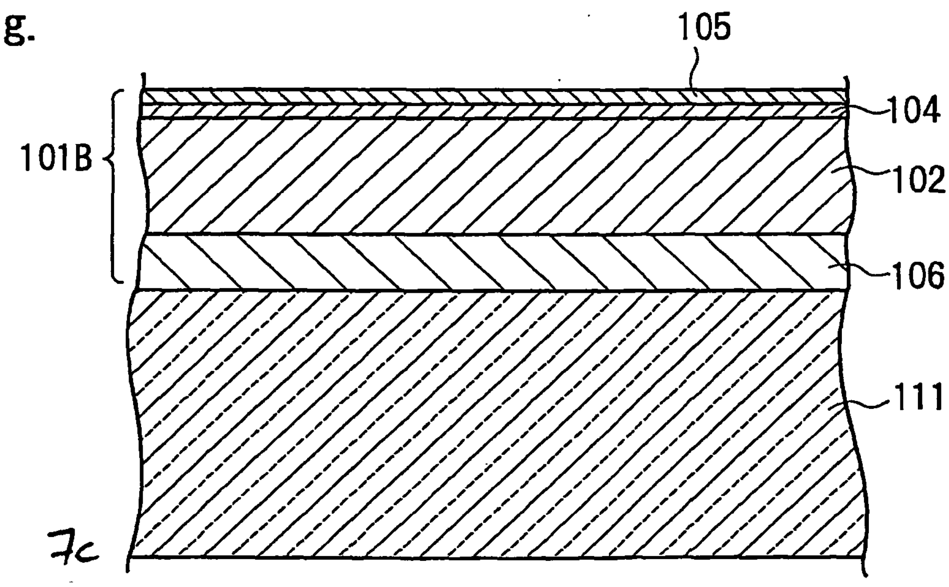


Fig. 7c

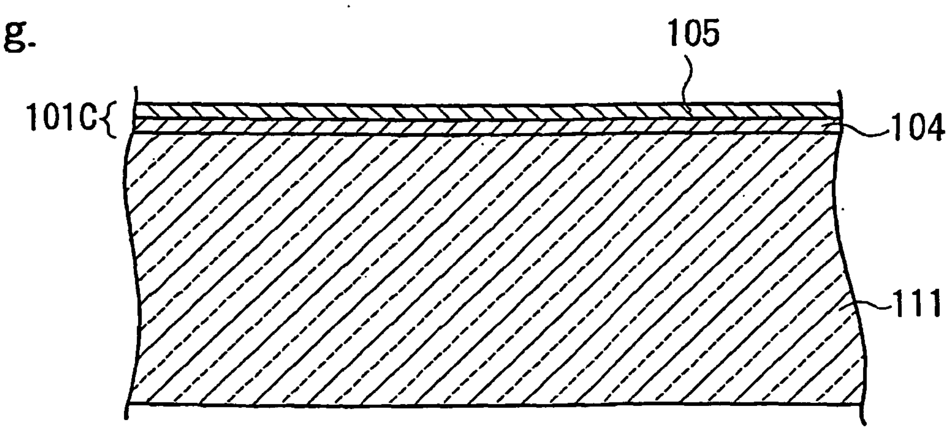

Fig. 8

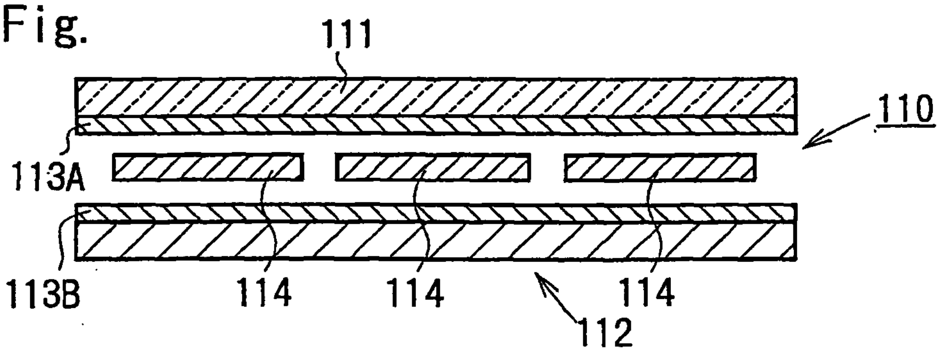

Fig. 9

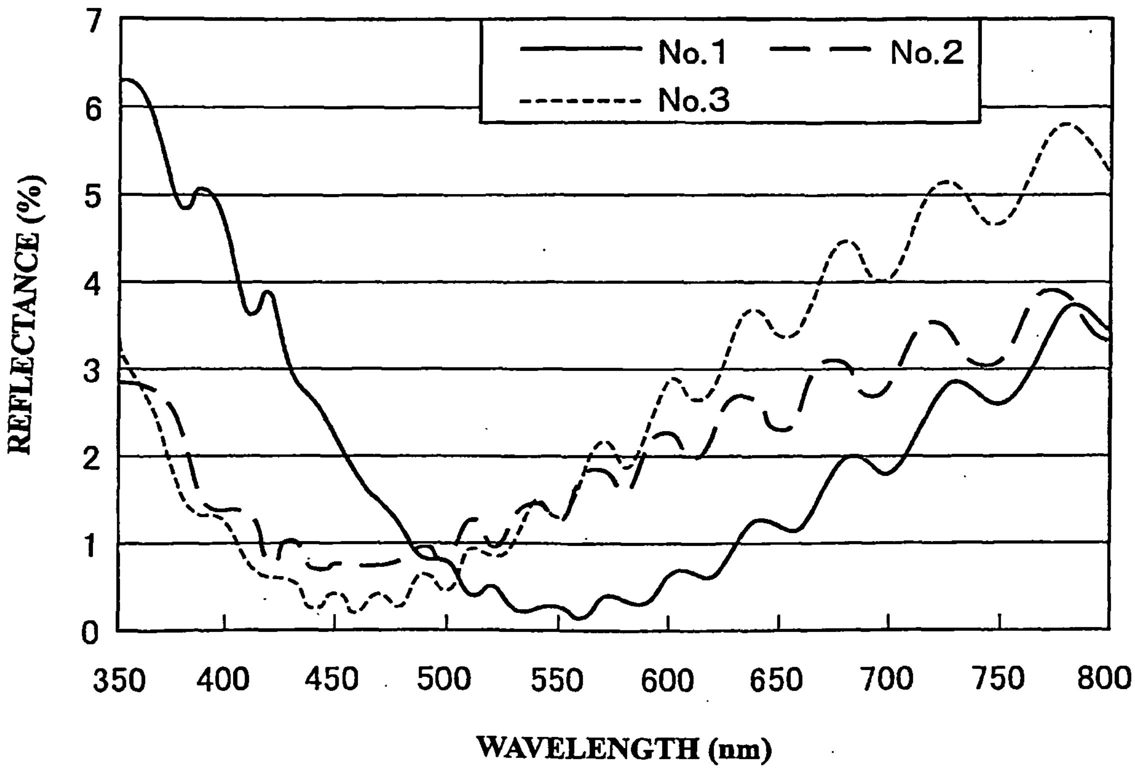
No.1
No.2
No.3
REFLECTANCE (%)
WAVELENGTH (nm)
0
1
2
3
4
5
6
7
350
400
450
500
550
600
650
700
750
800

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 9203801 A
- JP 2003202406 A
- JP 2003202960 A
- JP 2003261797 A
- JP 2003262703 A
- JP 2003266602 A
- JP 2002318349 A
- JP 2002341779 A
- JP 2002341781 A
- WO 03093878 A
- JP 2003222703 A